(19) **Europäisches Patentamt / European Patent Office / Office européen des brevets**

(11) **EP 4 257 550 A2**

(12) **EUROPEAN PATENT APPLICATION**
published in accordance with Art. 153(4) EPC

(43) Date of publication:
**11.10.2023 Bulletin 2023/41**

(21) Application number: **21900621.0**

(22) Date of filing: **01.12.2021**

(51) International Patent Classification (IPC):
**C01B 35/12** (2006.01)    **H01M 4/13** (2010.01)
**H01M 4/36** (2006.01)    **H01M 4/62** (2006.01)
**H01B 1/06** (2006.01)    **H01B 1/08** (2006.01)
**H01M 10/052** (2010.01)    **H01M 10/0562** (2010.01)

(52) Cooperative Patent Classification (CPC):
**C01B 35/12; H01B 1/06; H01B 1/08; H01M 4/13;**
**H01M 4/36; H01M 4/62; H01M 10/052;**
**H01M 10/0562;** Y02E 60/10

(86) International application number:
**PCT/JP2021/044047**

(87) International publication number:
**WO 2022/118870 (09.06.2022 Gazette 2022/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.12.2020  JP 2020200162**
                **22.09.2021  JP 2021154707**
                **30.11.2021  JP 2021194099**

(71) Applicants:
• **FUJIFILM Corporation**
  **Tokyo 106-8620 (JP)**
• **Tokyo Institute of Technology**
  **Tokyo 152-8550 (JP)**

(72) Inventors:
• **SHIRATORI Yosuke**
  **Ashigarakami-gun, Kanagawa 258-8577 (JP)**
• **OKUNO Yukihiro**
  **Ashigarakami-gun, Kanagawa 258-8577 (JP)**
• **YASUI Shintaro**
  **Tokyo 152-8550 (JP)**
• **SAITO Kengo**
  **Ashigarakami-gun, Kanagawa 258-8577 (JP)**
• **WATANABE Kenta**
  **Ashigarakami-gun, Kanagawa 258-8577 (JP)**

(74) Representative: **HGF**
  **HGF Limited**
  **1 City Walk**
  **Leeds LS11 9DX (GB)**

(54) **LITHIUM-BASED SOLID ELECTROLYTE, INORGANIC SOLID ELECTROLYTE, LITHIUM-BASED SOLID ELECTROLYTE PRODUCTION METHOD, MODIFIED POSITIVE ELECTRODE ACTIVE MATERIAL, MODIFIED NEGATIVE ELECTRODE ACTIVE MATERIAL, ALL-SOLID-STATE SECONDARY BATTERY, ELECTRODE SHEET FOR ALL-SOLID-STATE SECONDARY BATTERY, SOLID ELECTROLYTE SHEET, ELECTRODE FOR ALL-SOLID-STATE SECONDARY BATTERY**

(57)    The present invention provides a lithium-based solid electrolyte excellent in ion conductivity, an inorganic solid electrolyte, a production method for a lithium-based solid electrolyte, a modified positive electrode material, a modified negative electrode active material, an all-solid state secondary battery, an electrode sheet for an all-solid state secondary battery, a solid electrolyte sheet, and an electrode for an all-solid state secondary battery. The lithium-based solid electrolyte according to the present invention contains lithium tetraborate in a noncrystalline state, water, and a lithium salt.

Processed by Luminess, 75001 PARIS (FR)

**Description**

**BACKGROUND OF THE INVENTION**

1. Field of the Invention

The present invention relates to a lithium-based solid electrolyte, an inorganic solid electrolyte, a production method for a lithium-based solid electrolyte, a modified positive electrode active material, a modified negative electrode active material, an all-solid state secondary battery, an electrode sheet for an all-solid state secondary battery, a solid electrolyte sheet, and an electrode for an all-solid state secondary battery.

2. Description of the Related Art

In the related art, a liquid electrolyte having high ion conductivity has been used in a lithium ion secondary battery. However, since the liquid electrolyte is flammable, there is a problem in safety. In addition, since it is in a liquid state, it is difficult to make it compact, and in a case where a battery becomes large, there is also a problem of limitation on capacity.

On the other hand, the all-solid state lithium ion secondary battery is one of the next-generation batteries that can solve these problems. In the all-solid state battery, a solid electrolyte having good ion conductivity is required in order to obtain desired charging and discharging characteristics. For example, JP2018-052755A discloses a solid electrolyte that can be used in an all-solid state lithium ion secondary battery. JP2018-052755A discloses a solid electrolyte based on a lithium-containing oxide.

**SUMMARY OF THE INVENTION**

JP2018-052755A discloses that the conductivity is about $10^{-5}$ S·cm$^{-1}$; however, in recent years, there is a demand for further improvement in the conductivity.

An object of the present invention is to provide a lithium-based solid electrolyte having excellent ionic conductivity.

In addition, an object of the present invention is also to provide an inorganic solid electrolyte, a production method for a lithium-based solid electrolyte, a modified positive electrode active material, a modified negative electrode active material, an all-solid state secondary battery, an electrode sheet for an all-solid state secondary battery, a solid electrolyte sheet, and an electrode for an all-solid state secondary battery.

As a result of diligent studies to solve the above-described problems, the inventors of the present invention have completed the present invention having the following configurations.

(1) A lithium-based solid electrolyte comprising:

lithium tetraborate in a noncrystalline state;
water; and
a lithium salt.

(2) A lithium-based solid electrolyte comprising:

lithium tetraborate subjected to a mechanical milling treatment;
water; and
a lithium salt.

(3) The lithium-based solid electrolyte according to (1),

in which a molar ratio of the lithium salt to the lithium tetraborate is 0.001 to 1.5, and
a molar ratio of the water to the lithium tetraborate is 3 to 15.

(4) The lithium-based solid electrolyte according to (2),

in which a molar ratio of the lithium salt to the lithium tetraborate is 0.001 to 1.5, and
a molar ratio of the water to the lithium tetraborate is 3 to 15.

(5) A lithium-based solid electrolyte comprising:

$LiB_3O_5$, $Li_3B_{11}O_{18}$, or $Li_3B_7O_{12}$, in a noncrystalline state;
water; and
a lithium salt.

(6) The lithium-based solid electrolyte according to any one of (1) to (5), in which the lithium salt is a compound represented by Formula (1) described later.

(7) A lithium-based solid electrolyte,

in which the lithium-based solid electrolyte contains Li, B, and O,
the lithium-based solid electrolyte further contains two or more specific elements selected from the group consisting of F, Cl, Br, I, S, P, Si, Se, Te, C, Sb, As, Sc, Y, Zr, Ti, Hf, H, and N,
a molar ratio of B to Li is more than 1.50 and less than 2.43,
a molar ratio of O to Li is more than 2.34 and less than 6.86, and
a molar ratio of each of the specific elements to Li is more than 0.001 and less than 0.17.

(8) A lithium-based solid electrolyte,

in which the lithium-based solid electrolyte contains Li, B, and O,
the lithium-based solid electrolyte further contains two or more specific elements selected from the group consisting of a Group 4 element of the periodic table, a Group 15 element of the periodic table, a Group 16 element of the periodic table, a Group 17 element of the periodic table, Si, C, Sc, Y, and H, and
in a case where molar amounts of Li, O, and the specific elements are denoted by setting a molar amount of B in the lithium-based solid electrolyte to 4.00, the molar amount of Li is 1.58 to 3.49, the molar amount of O is 6.23 to 25.00, and the molar amount of each of the specific elements is 0.001 to 10.00.

(9) The lithium-based solid electrolyte according to any one of (1) to (8), in which in an infrared absorption spectrum, a ratio of a maximum absorption intensity in a wave number range of 3,000 to 3,500 $cm^{-1}$ to a maximum absorption intensity in a wave number range of 800 to 1,600 $cm^{-1}$ is 1/5 or more.

(10) A lithium-based solid electrolyte, in which the lithium-based solid electrolyte contains Li, B, and O, and satisfies requirements X to Z described later.

(11) The lithium-based solid electrolyte according to (10), in which the lithium-based solid electrolyte further contains two or more specific elements selected from the group consisting of F, Cl, Br, I, S, P, Si, Se, Te, C, Sb, As, Sc, Y, Zr, Ti, Hf, H, and N.

(12) The lithium-based solid electrolyte according to any one of (1) to (11), in which a proportion of a full width at half maximum of a peak in which a chemical shift appears in a range of -100 to +100 ppm in a spectrum obtained in a case where a solid $^7$Li-NMR measurement is carried out at 120°C is 50% or less with respect to a full width at half maximum of a peak in which a chemical shift appears in a range of -100 to +100 ppm in a spectrum obtained in a case where the solid $^7$Li-NMR measurement is carried out at 20°C.

(13) The lithium-based solid electrolyte according to any one of (1) to (12), in which in a spectrum obtained by carrying out a solid $^7$Li-NMR measurement at 20°C, in a case where a first peak appearing in a range of -100 to +100 ppm is subjected to waveform separation, the lithium-based solid electrolyte has a second peak having a full width at half maximum of 5 ppm or less in a range where a chemical shift is -3 to 3 ppm, and a ratio of an area intensity of the second peak to an area intensity of the first peak is 0.5% or more.

(14) The lithium-based solid electrolyte according to (7), in which a coefficient of determination is 0.9400 or more, where the coefficient of determination is obtained by carrying out a linear regression analysis according to a least squares method in a wave number range of 600 to 850 $cm^{-1}$ in a Raman spectrum.

(15) The lithium-based solid electrolyte according to (7), in which in a case where the lithium-based solid electrolyte is heated to 800°C, a mass reduction rate is 20% to 40% by mass.

(16) An inorganic solid electrolyte having a conductivity of an ion of an element selected from a metal element belonging to a Group 1 element of the periodic table or a Group 2 element of the periodic table,

in which the inorganic solid electrolyte contains an element selected from the group consisting of a metal element belonging to a Group 1 element of the periodic table and a Group 2 element of the periodic table, B, and O,
the inorganic solid electrolyte further contains two or more specific elements selected from the group consisting of a Group 3 element of the periodic table, a Group 4 element of the periodic table, a Group 13 element of the periodic table, a Group 14 element of the periodic table, a Group 15 element of the periodic table, a Group 16 element of the periodic table, a Group 17 element of the periodic table, and H, and
the inorganic solid electrolyte is noncrystalline and satisfies a requirement R described later.

(17) An inorganic solid electrolyte comprising:

a compound containing an element selected from the group consisting of a metal element belonging to a Group 1 element of the periodic table and a Group 2 element of the periodic table, B, and O;
water; and
a salt containing an element selected from the group consisting of a metal element belonging to a Group 1 element of the periodic table and a Group 2 element of the periodic table.

(18) The inorganic solid electrolyte according to (17), in which the compound is noncrystalline.
(19) A production method for the lithium-based solid electrolyte according to any one of (1) to (15), the production method comprising:

a step 1 of subjecting a lithium-based oxide containing Li and B to a mechanical milling treatment;
a step 2 of mixing a product obtained in the step 1 with water; and
a step 3 of removing water from a dispersion liquid obtained in the step 2 to obtain a lithium-based solid electrolyte, in which the production method satisfies any one of the following requirements 1 to 3 described later.

(20) The production method for a lithium-based solid electrolyte according to (19),

in which the production method satisfies the requirement 1, and
the production method further includes, before the step 1, a step 0 of subjecting the lithium-based oxide containing Li and B to a mechanical milling treatment in an environment in which the specific element source is not present.

(21) A modified positive electrode active material comprising:

a positive electrode active material; and
a coating layer disposed on the positive electrode active material,
in which the coating layer contains the lithium-based solid electrolyte according to any one of (1) to (15) or the inorganic solid electrolyte according to any one of (16) to (18).

(22) A modified negative electrode active material comprising:

a negative electrode active material; and
a coating layer disposed on the negative electrode active material,
in which the coating layer contains the lithium-based solid electrolyte according to any one of (1) to (15) or the inorganic solid electrolyte according to any one of (16) to (18).

(23) An all-solid state secondary battery comprising, in the following order:

a positive electrode active material layer;
a solid electrolyte layer; and
a negative electrode active material layer,
in which at least one of the positive electrode active material layer, the solid electrolyte layer, or the negative electrode active material layer contains the lithium-based solid electrolyte according to any one of (1) to (15) or the inorganic solid electrolyte according to any one of (16) to (18).

(24) An electrode sheet for an all-solid state secondary battery, comprising the lithium-based solid electrolyte according to any one of (1) to (15) or the inorganic solid electrolyte according to any one of (16) to (18).
(25) A solid electrolyte sheet comprising the lithium-based solid electrolyte according to any one of (1) to (15) or the inorganic solid electrolyte according to any one of (16) to (18).
(26) An electrode for an all-solid state secondary battery, comprising:

an active material layer containing an active material, and the lithium-based solid electrolyte according to any one of (1) to (15) or the inorganic solid electrolyte according to any one of (16) to (18); and
a collector.

According to the present invention, it is possible to provide a lithium-based solid electrolyte having excellent ionic conductivity.

In addition, according to the present invention, it is possible to provide an inorganic solid electrolyte, a production method for a lithium-based solid electrolyte, a modified positive electrode active material, a modified negative electrode active material, an all-solid state secondary battery, an electrode sheet for an all-solid state secondary battery, a solid electrolyte sheet, and an electrode for an all-solid state secondary battery.

**BRIEF DESCRIPTION OF THE DRAWINGS**

Fig. 1 is a view showing an example of a spectrum obtained in a case where a solid $^7$Li-NMR (nuclear magnetic resonance) measurement of a lithium-based solid electrolyte according to a first embodiment of the present invention is carried out at 20°C or 120°C.

Fig. 2 is a view showing an example of a spectrum obtained in a case where a solid $^7$Li-NMR measurement of a lithium tetraborate crystal is carried out at 20°C or 120°C.

Fig. 3 is a view showing an example of a spectrum obtained in a case where the solid $^7$Li-NMR measurement of the lithium-based solid electrolyte according to the first embodiment of the present invention is carried out at 20°C.

Fig. 4 is a view obtained in a case where the peak shown in Fig. 3 is subjected to waveform separation.

Fig. 5 is a view showing an example of a Raman spectrum of the lithium-based solid electrolyte according to the first embodiment of the present invention.

Fig. 6 is a graph showing a Raman spectrum of a general lithium tetraborate crystal.

Fig. 7 is a cross-sectional view schematically illustrating an all-solid state lithium ion secondary battery according to a preferred embodiment of the present invention.

Fig. 8 is a graph showing an example of a reduced two-body distribution function G(r) obtained by an X-ray total scattering measurement of a specific lithium tetraborate described later.

Fig. 9 is a graph showing an example of an X-ray total scattering profile of the specific lithium tetraborate.

Fig. 10 is a graph showing an example of a structural factor S(Q) based on the X-ray total scattering profile obtained in Fig. 9.

Fig. 11 is a graph showing an example of an X-ray diffraction pattern for explaining a requirement Y

Fig. 12 is a graph showing a reduced two-body distribution function G(r) of a crystal powder of Comparative Example 1, obtained from an X-ray total scattering measurement.

Fig. 13 is a graph showing an X-ray diffraction pattern of the crystal powder of Comparative Example 1.

Fig. 14 is a graph showing an X-ray diffraction pattern of a lithium-based solid electrolyte of Example 3.

Fig. 15 is a graph showing an example of a Raman spectrum for explaining a requirement T.

Fig. 16 is a graph showing an example of a reduced two-body distribution function G(r) of a lithium-based solid electrolyte according to a fourth embodiment of the present invention, obtained from an X-ray total scattering measurement.

**DESCRIPTION OF THE PREFERRED EMBODIMENTS**

Hereinafter, the present invention will be described in detail.

A numerical value range represented using "to" in the present specification means a range including the numerical values described before and after "to" as the lower limit and the upper limit respectively.

A feature point of lithium-based solid electrolytes according to a first embodiment and a second embodiment of the present invention is that predetermined amounts of various elements are contained. In particular, the feature point is that the content of the oxygen element (O) is relatively large, and a predetermined amounts of a specific element A and a specific element B are contained. It is conceived that O is present as water or an OH group in addition to as BOs or $BO_4$ in a lithium-based solid electrolyte, and it is presumed that a hydrated layer having good ionic conductivity due to a large content of O is formed on the surface side of the lithium-based solid electrolyte. In addition, such a lithium-based solid electrolyte is also excellent in the binding property, and it is presumed that this point also contributes to the improvement of the ionic conductivity.

In addition, a feature point of an example of a lithium-based solid electrolyte according to a third embodiment of the present invention is that lithium tetraborate subjected to a mechanical milling treatment and predetermined components (water and a lithium salt) are mixedly used. As will be described later, the lithium tetraborate subjected to a mechanical milling treatment has a short-distance ordered structure but hardly has a long-distance ordered structure related to the interatomic distances of B-O and B-B. It is noted that the interatomic distance of B-O indicates a distance between B and O, which are chemically bonded, and the interatomic distance of B-B indicates a distance between B and B, which are close to each other. In a case where such lithium tetraborate is used in combination with predetermined components, it is presumed that a soft hydrated layer is easily formed on the surface of lithium tetraborate, a large amount of lithium derived from a lithium salt is contained in this hydrated layer, and as a result of the ionic conductivity is good. It is noted that a feature point of another example of the third embodiment is that lithium tetraborate in a noncrystalline state and predetermined components (water and a lithium salt) are mixedly used. In a case where lithium tetraborate in a noncrystalline state is used in combination with predetermined components, it is presumed that a soft hydrated layer is easily formed on the surface of lithium tetraborate, a large amount of lithium derived from a lithium salt is contained in this hydrated layer, and as a result of the ionic conductivity is good.

In addition, as a feature point of a lithium-based solid electrolyte according to a fourth embodiment of the present invention is that the requirements X to Z described later are satisfied. The requirement X mainly indicates that the lithium-based solid electrolyte has a short-distance ordered structure, and the requirement Y mainly means that the lithium-based solid electrolyte has almost no crystal structure and is noncrystalline. In addition, the requirement Z indicates that the lithium-based solid electrolyte contains a large number of OH groups and a large amount of water. From these results, it is presumed that a soft hydrated layer is generated on the surface side of the lithium-based solid electrolyte, and the presence of this hydrated layer improves the ionic conductivity.

Further, a feature point of a lithium-based solid electrolyte according to a fifth embodiment of the present invention is that $LiBsOs$, $Li_3B_{11}O_{18}$, or $Li_3B_7O_{12}$ in a noncrystalline state and predetermined components (water and a lithium salt) are mixedly used. In a case where $LiBsOs$, $Li_3B_{11}O_{18}$, or $Li_3B_7O_{12}$ in a noncrystalline state are used in combination with predetermined components, it is presumed that a soft hydrated layer is easily formed on the surface of $LiBsOs$, $Li_3B_{11}O_{18}$, or $Li_3B_7O_{12}$, a large amount of lithium derived from a lithium salt is contained in this hydrated layer, and as a result of the ionic conductivity is good.

In addition, the inorganic solid electrolyte according to the embodiment of the present invention exhibits a desired effect by satisfying configurations described later.

Hereinafter, the lithium-based solid electrolyte and the inorganic solid electrolyte according to each of the embodiments of the present invention will be described in detail.

<<First embodiment>>

Hereinafter, the lithium-based solid electrolyte according to the first embodiment of the present invention will be described.

<Lithium-based solid electrolyte>

The lithium-based solid electrolyte according to the first embodiment of the present invention contains a lithium element (Li), a boron element (B), and an oxygen element (O).

In addition, the lithium-based solid electrolyte according to the first embodiment of the present invention further contains two or more specific elements selected from the group consisting of a fluorine element (F), a chlorine element (Cl), a bromine element (Br), an iodine element (I), a sulfur element (S), a phosphorus element (P), a silicon element (Si), a selenium element (Se), a tellurium element (Te), a carbon element (C), an antimony element (Sb), an arsenic element (As), a scandium element (Sc), a yttrium element (Y), a zirconium element (Zr), a titanium element (Ti), a hafnium element (Hf), a hydrogen element (H), and a nitrogen element (N). The kind of the specific element contained in the lithium-based solid electrolyte according to the first embodiment of the present invention may be 3 or more kinds. Among them, from the viewpoint that ionic conductivity is more excellent (hereinafter, also simply referred to as "the viewpoint that the effect of the present invention is more excellent"), the kind of the specific element contained in the lithium-based solid electrolyte is preferably 2 to 5 kinds and more preferably 2 to 4 kinds.

The lithium-based solid electrolyte according to the first embodiment of the present invention preferably contains two or more specific elements selected from the group consisting of F, S, N, P, and C, more preferably contains two or more specific elements selected from the group consisting of F, S, C, and N, and still more preferably contains three specific elements of F, S, and N.

In the lithium-based solid electrolyte according to the first embodiment of the present invention, the molar ratio (B/Li) of B to Li is more than 1.50 and less than 2.43. That is, in the lithium-based solid electrolyte according to the first embodiment of the present invention, the relative value of the molar content amount of B is more than 1.50 and less than 2.43 in a case where the molar content amount of Li is set to 1.0.

Among the above, the suitable aspect of the molar ratio of B to Li is preferably 1.70 to 2.30 and more preferably 1.90 to 2.10 from the viewpoint that the effect of the present invention is more excellent.

In the lithium-based solid electrolyte according to the first embodiment of the present invention, the molar ratio (O/Li) of O to Li is more than 2.34 and less than 6.86. That is, in the lithium-based solid electrolyte according to the first embodiment of the present invention, the relative value of the molar content amount of O is more than 2.34 and less than 6.86 in a case where the molar content amount of Li is set to 1.0.

Among the above, the suitable aspect of the molar ratio of O to Li is preferably 3.00 to 6.50, more preferably 3.50 to 6.00, still more preferably 4.50 to 6.00, and particularly preferably 5.00 to 6.00, from the viewpoint that the effect of the present invention is more excellent.

In the lithium-based solid electrolyte according to the first embodiment of the present invention, the molar ratio (specific element/Li) of each specific element to Li is more than 0.001 and less than 0.17. That is, in the lithium-based solid electrolyte according to the first embodiment of the present invention, the relative value of the molar content amount of each specific element is more than 0.001 and less than 0.17 in a case where the molar content amount of Li is set to 1.0.

As described above, in the lithium-based solid electrolyte according to the first embodiment of the present invention, two or more kinds of specific elements are contained. Therefore, for example, in a case where the lithium-based solid electrolyte according to the first embodiment of the present invention contains two specific elements, that is, the specific element A and the specific element B which is an element different from the specific element A in terms of kind, each of the molar ratio of the specific element A to Li and the molar ratio of the specific element B to Li is more than 0.001 and less than 0.17. In addition, for example, in a case where the lithium-based solid electrolyte according to the first embodiment of the present invention contains three specific elements, that is, the specific element A, the specific element B which is an element different from the specific element A in terms of kind, and a specific element C which is an element different from the specific elements A and B in terms of kind, each of the molar ratio of the specific element A to Li, the molar ratio of the specific element B to Li, and the molar ratio of the specific element C to Li is more than 0.001 and less than 0.17.

Among the above, from the viewpoint that the effect of the present invention is more excellent, the molar ratio of each specific element to Li is preferably 0.003 to 0.15 and more preferably 0.01 to 0.14.

The contents of Li, B, and the specific elements in the lithium-based solid electrolyte according to the first embodiment of the present invention are specified according to known element analysis. Regarding methods for element analysis, for example, Li and B are analyzed according to inductively coupled plasma optical emission spectrometry (ICP-OES), N or the like, which is one of the specific elements, is analyzed according to an inert gas melting method to specify, and F or S, which is one of the specific elements, is analyzed according to combustion ion chromatography. The content of O can be calculated as a difference between an amount obtained by adding together analytical masses of elements other than O, and the total amount of the powder. It is noted that the method of calculating the content of each element is not limited to those described above. For example, from an analysis result of a content of one kind of element, a content of another element may be estimated in consideration of structures of compounds to be used.

The above-described molar ratio of B to Li, the above-described molar ratio of O to Li, and the above-described molar ratio of each specific element to Li are calculated from the content of each element calculated according to the element analysis.

One of the suitable aspects of the composition of the lithium-based solid electrolyte according to the first embodiment of the present invention includes a lithium-based solid electrolyte which contains Li, B, O, F, S, and N, where the molar ratio of B to Li is more than 1.50 and less than 2.43, the molar ratio of O to Li is more than 2.34 and less than 6.86, the molar ratio of F to Li is more than 0.001 and less than 0.17, the molar ratio of S to Li is more than 0.001 and less than 0.17, and the molar ratio of N to Li is more than 0.001 and less than 0.17.

The suitable range of the molar ratio is as described above.

It is noted that the lithium-based solid electrolyte according to the first embodiment of the present invention may contain another element in addition to Li, B, O, and the specific elements.

A production method for the lithium-based solid electrolyte according to the first embodiment of the present invention will be described in detail later. However, it is preferable that the lithium-based solid electrolyte according to the embodiment of the present invention is produced by a production method including a mechanical milling treatment. For example, in a case where a raw material (for example, a lithium-based oxide containing Li and B) of the lithium-based solid electrolyte according to the first embodiment of the present invention is subjected to a mechanical milling treatment, it is presumed that a crystalline component in the raw material can be non-crystalized, and as a result, a hydrated layer having excellent ionic conductivity is easily formed.

Further, from the viewpoint that the effect of the present invention is more excellent, the proportion of a full width at half maximum of a peak in which a chemical shift appears in a range of -100 to +100 ppm in a spectrum obtained in a case where a solid $^7$Li-NMR measurement of the lithium-based solid electrolyte according to the first embodiment of the present invention is carried out at 120°C is preferably 50% or less, more preferably 40% or less, and still more preferably 35% or less, with respect to a full width at half maximum of a peak in which a chemical shift appears in a range of -100 to +100 ppm in a spectrum obtained in a case where the solid $^7$Li-NMR measurement of the lithium-based solid electrolyte according to the first embodiment of the present invention is carried out at 20°C. The lower limit thereof is not particularly limited; however, it is 10% or more in a large number of cases.

The full width at half maximum (FWHM) of the peak means the width (ppm) at a point (H/2) of 1/2 of the height (H) of the peak.

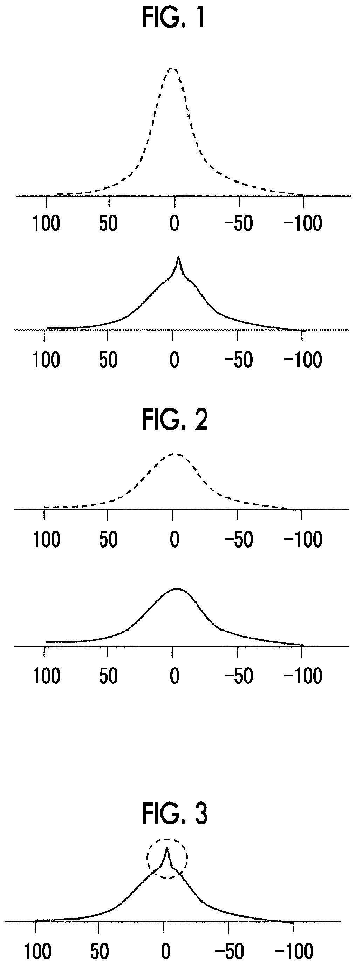

Hereinafter, the above characteristics will be described with reference to Fig. 1.

Fig. 1 shows an example of a spectrum obtained in a case where the solid $^7$Li-NMR measurement of the lithium-based solid electrolyte according to the first embodiment of the present invention is carried out at 20°C or 120°C.

The spectrum shown on the lower side by the solid line in Fig. 1 is a spectrum obtained in a case where the solid $^7$Li-NMR measurement has been carried out at 20°C, and the spectrum shown on the upper side by the broken line in Fig. 1 is a spectrum obtained in a case where the solid $^7$Li-NMR measurement has been carried out at 120°C.

Generally, in the solid $^7$Li-NMR measurement, in a case where the mobility of $Li^+$ is high, the peak that is obtained is a sharper peak. In the aspect shown in Fig. 1, in a case where the spectrum at 20°C and the spectrum at 120°C are compared, the spectrum at 120°C is sharper. That is, it is shown that the mobility of $Li^+$ is high in the lithium-based solid electrolyte shown in Fig. 1. It is conceived that such a lithium-based solid electrolyte is more excellent in the effect of the present invention since it is easily plastically deformed due to being derived from a noncrystalline structure as described above and the hopping property of $Li^+$ is excellent.

It is noted that, for example, in a case where a lithium tetraborate crystal is subjected to the solid $^7$Li-NMR measurement at 20°C or 120°C, the spectrum measured at 20°C shown by the solid line, shown on the lower side of Fig. 2, and the spectrum measured at 120°C shown by the broken line, shown on the upper side of Fig. 2 tends to have substantially the same shape.

The conditions for the above-described solid $^7$Li-NMR measurement are as follows.

Specifically, measurement is carried out by a single pulse method using a 4 mm HX CP-MAS probe, 90° pulse width: 3.2 μs, observation frequency: 155.546 MHz, observation width: 1,397.6 ppm, repetition time: 15 sec, integration: 1 time, and MAS rotation speed: 0 Hz.

In addition, from the viewpoint that the effect of the present invention is more excellent, it is preferable that in a spectrum obtained by carrying out a solid $^7$Li-NMR measurement of the lithium-based solid electrolyte according to the first embodiment of the present invention at 20°C, in a case where a first peak appearing in a range of -100 to +100 ppm is subjected to waveform separation, the lithium-based solid electrolyte has a second peak having a full width at half maximum of 5 ppm or less in a range where a chemical shift is -3 to 3 ppm, and a ratio of an area intensity of the second peak to an area intensity of the first peak is 0.5% or more. The ratio of the area intensity is more preferably 2% or more and still more preferably 15% or more. The upper limit of the ratio of the area intensity is not particularly limited; however, it is 50% or less in a large number of cases.

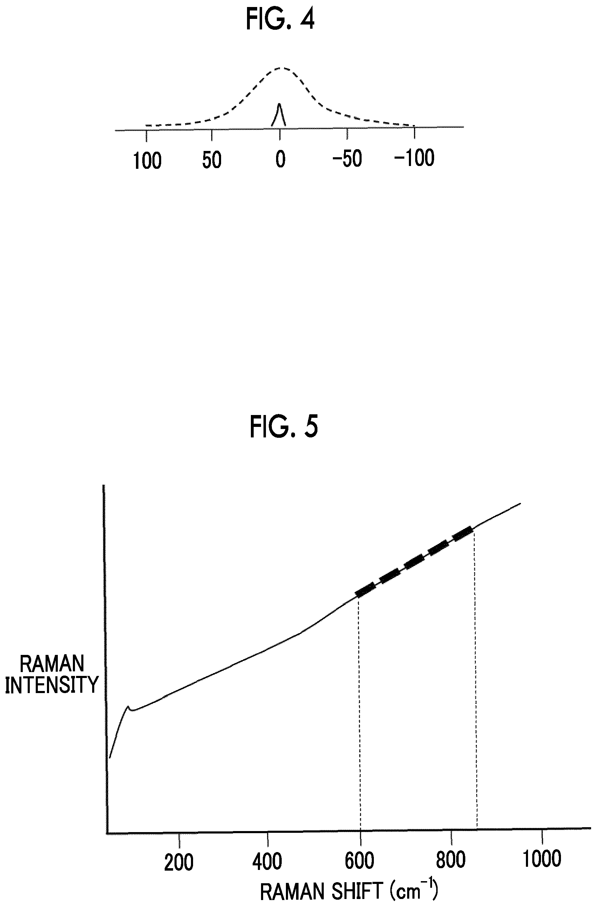

Hereinafter, the above characteristics will be described with reference to Figs. 3 and 4.

Fig. 3 shows an example of a spectrum obtained in a case where the solid $^7$Li-NMR measurement of the lithium-based solid electrolyte according to the first embodiment of the present invention is carried out at 20°C. As shown in Fig. 3, in the lithium-based solid electrolyte according to the first embodiment of the present invention, a peak (corresponding to the first peak) is observed in a range of -100 ppm to +100 ppm, and in the first peak, a small peak is observed in the vicinity of a chemical shift of 0 ppm, as surrounded by the broken line. This observation is conceived to be due to the fact that in a case where the mobility of $Li^+$ is high, the observed peak is a sharper peak, as described above.

Next, Fig. 4 shows a view in a case where the first peak is subjected to waveform separation. As shown in Fig. 4, the waveform separation of the firs peak gives a small peak indicated by a solid line (corresponding to a second peak) and a large peak indicated by a broken line. The second peak is a peak in which the chemical shift appears in a range of -3 to 3 ppm and the full width at half maximum is 5 ppm or less.

In the lithium-based solid electrolyte according to the first embodiment of the present invention, the ratio of the area intensity of the second peak indicated by the solid line in Fig. 4 to the area intensity of the first peak (the peak before the waveform separation) indicated by Fig. 3 {(area intensity of second peak/area intensity of first peak) × 100} is within the above range.

Examples of the method for waveform separation include a method using known software, and examples of the software include Igor Pro, which is graph processing software manufactured by WaveMetrics, Inc.

In addition, in the infrared absorption spectrum of the lithium-based solid electrolyte according to the first embodiment of the present invention, the ratio of a maximum absorption intensity in a wave number range of 3,000 to 3,500 $cm^{-1}$ to a maximum absorption intensity in a wave number range of 800 to 1,600 $cm^{-1}$ is preferably 1/5 or more from the viewpoint that the effect of the present invention is more excellent. Among the above, the ratio is preferably 3/10 or more and more preferably 2/5 or more from the viewpoint that the effect of the present invention is more excellent. The upper limit thereof is not particularly limited; however, it is preferably 1 or less.

An OH stretching vibration mode is observed in a wave number range of 3,000 to 3,500 $cm^{-1}$ in the infrared absorption spectrum, and a B-O stretching vibration mode is observed in a wave number range of 800 to 1,600 $cm^{-1}$. It can be seen that an absorption intensity derived from the OH stretching vibration mode is strongly observed in the lithium-based solid electrolyte according to the first embodiment of the present invention, and a large number of OH groups and a large amount of water are contained in the lithium-based solid electrolyte according to the first embodiment of the present invention. It is conceived that in such a lithium-based solid electrolyte, lithium ions easily migrate, and as a result, the ionic conductivity is improved.

It is noted that in a wave number range of 800 to 1,600 cm$^{-1}$, a vibration mode derived from the lithium salt can also be observed.

The measurement conditions for infrared absorption spectrum are as follows.

Specifically, measurement is carried out by using, objective lens: Cassegrain type (NA: 0.65) of 32 magnifications, detector: MCT-A, measurement range: 650 to 4,000 cm$^{-1}$, resolution: 4 cm$^{-1}$, and sample cell: diamond cell.

It is noted that the obtained infrared absorption spectrum is subjected to correction for removing signals derived from water and $CO_2$ in atmospheric air, and further, the background is subjected to offset-correction to set the absorption intensity to 0.

In addition, in a case of measuring the infrared absorption spectrum of the lithium-based solid electrolyte according to the first embodiment of the present invention, the measurement is carried out in atmospheric air after vacuum drying is carried out at 40°C for 2 hours.

In addition, from the viewpoint that the effect of the present invention is more excellent, it is preferable that a coefficient of determination is 0.9400 or more, where the coefficient of determination is obtained by carrying out a linear regression analysis according to a least squares method in a wave number range of 600 to 850 cm$^{-1}$ in a Raman spectrum of the lithium-based solid electrolyte according to the first embodiment of the present invention.

The coefficient of determination is more preferably 0.9600 or more from the viewpoint that the effect of the present invention is more excellent. The upper limit thereof is not particularly limited; however, it is, for example, 1.0000.

Hereinafter, the above description for a Raman spectrum will be described with reference to Fig. 5.

Fig. 5 shows an example of a Raman spectrum of the lithium-based solid electrolyte according to the first embodiment of the present invention. The coefficient of determination (the coefficient of determination $R^2$) obtained by carrying out a linear regression analysis according to the least squares method is calculated in a wave number range of 600 to 850 cm$^{-1}$ in the Raman spectrum in which the vertical axis is the Raman intensity and the lateral axis is the Raman shift. That is, in a wave number range of 600 to 850 cm$^{-1}$ in the Raman spectrum of Fig. 5, a regression line (the thick broken line in Fig. 5) is determined according to the least squares method, and the coefficient of determination $R^2$ of the regression line is calculated. It is noted that as the coefficient of determination, a value between 0 (no linear correlation) and 1 (complete linear correlation of the measured values) is taken according to the linear correlation of the measured values.

In the lithium-based solid electrolyte according to the first embodiment of the present invention, a peak is not substantially observed in a wave number range of 600 to 850 cm$^{-1}$ as shown in Fig. 5, and as a result, a high coefficient of determination is exhibited.

It is noted that the coefficient of determination $R^2$ corresponds to the square of the correlation coefficient (Pearson's product-moment correlation coefficient). More specifically, in the present specification, the coefficient of determination $R^2$ is calculated according to the following expression. In the expression, $x_1$ and $y_1$ respectively represent a wave number in a Raman spectrum and a Raman intensity corresponding to the wave number, $x_2$ represents the (arithmetic) average of the wave numbers, and $y_2$ represents the (arithmetic) average of the Raman intensities.

$$R^2 = \frac{(\sum (x_1 - x_2) \cdot (y_1 - y_2))^2}{\sum (x_1 - x_2)^2 \cdot \sum (y_1 - y_2)^2}$$

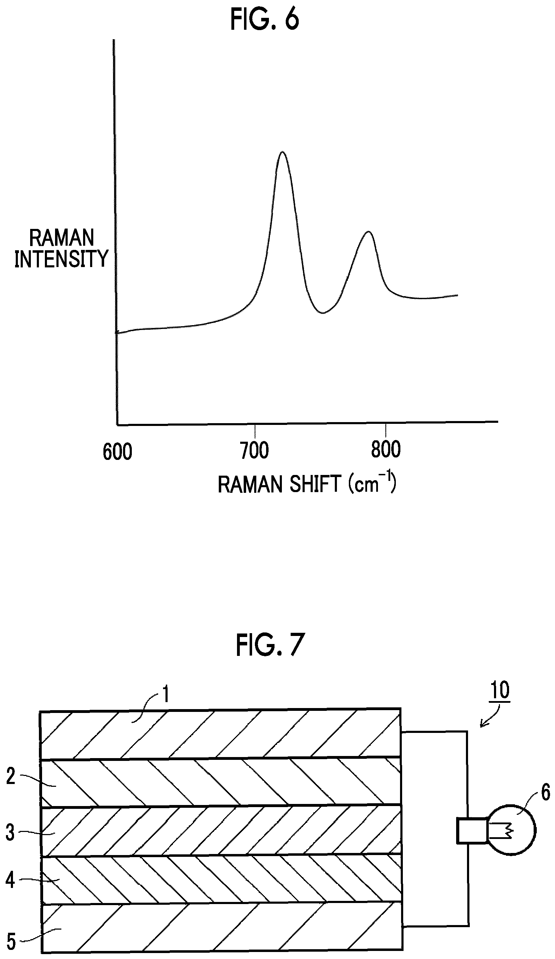

On the other hand, Fig. 6 is a graph showing a Raman spectrum of a general lithium tetraborate crystal. As shown in Fig. 6, in a case of a general lithium tetraborate crystal, peaks are observed in wave number ranges of 716 to 726 cm$^{-1}$ and 771 to 785 cm$^{-1}$ derived from the structure thereof.

In a case where there is such a peak, the coefficient of determination thereof is less than 0.9400 in a case where the coefficient of determination is calculated by carrying out a linear regression analysis according to the least squares method in a wave number range of 600 to 850 cm$^{-1}$.

That is, the fact that the coefficient of determination is 0.9400 or more indicates that the lithium-based solid electrolyte according to the first embodiment of the present invention contains almost no crystal structures which may be contained in a general lithium tetraborate crystal. Therefore, as a result, it is conceived that the lithium-based solid electrolyte according to the first embodiment of the present invention has a characteristic that the hopping property of Li$^+$ is excellent.

In addition, from the viewpoint that the effect of the present invention is more excellent, it is preferable that the lithium-based solid electrolyte according to the first embodiment of the present invention satisfies the following requirement T.

The requirement T: In a Raman spectrum of a lithium-based solid electrolyte,

in a case where none of a first peak having a peak top at 710 to 730 cm$^{-1}$ and having a full width at half maximum of 5 cm$^{-1}$ or more, a second peak having a peak top at 770 to 790 cm$^{-1}$ and having a full width at half maximum of 5 cm$^{-1}$ or more, and a third peak having a peak top at 1,020 to 1,040 cm$^{-1}$ and having a full width at half maximum of 5 cm$^{-1}$ or more are present, or

in a case where at least one specific peak selected from the group consisting of the first peak, the second peak, and the third peak is present in the Raman spectrum,

an intensity ratio of at least the one of the specific peak, which is calculated according to the following intensity measuring method, is 5.0 or less.

The intensity measuring method: A point at which the minimum value M1 of the Raman intensity in a wave number range of 400 to 600 cm$^{-1}$ of the Raman spectrum is exhibited and a point at which the minimum value M2 of the Raman intensity in a wave number range of 1,300 to 1,500 cm$^{-1}$ of the Raman spectrum is exhibited are connected to obtain a straight line. Then, in the range from a wave number at which the minimum value M1 is exhibited to a wave number at which the minimum value M2 is exhibited, the average difference value between the Raman intensity of the straight line and the Raman intensity of the Raman spectrum is calculated at each wave number in a range other than the ranges of 710 to 730 cm$^{-1}$, 770 to 790 cm$^{-1}$, and 1,020 to 1,040 cm$^{-1}$, the absolute value of the difference between the Raman intensity of the peak at a wave number at which the peak top of the specific peak is exhibited and the Raman intensity of the straight line is calculated, and the ratio of the absolute value of the difference to the average difference value is defined as the intensity ratio.

Hereinafter, the requirement T will be described.

First, the requirement T is satisfied in a case where in a Raman spectrum of a lithium-based solid electrolyte, none of a first peak having a peak top at 710 to 730 cm$^{-1}$ and having a full width at half maximum of 5 cm$^{-1}$ or more, a second peak having a peak top at 770 to 790 cm$^{-1}$ and having a full width at half maximum of 5 cm$^{-1}$ or more, and a third peak having a peak top at 1,020 to 1,040 cm$^{-1}$ and having a full width at half maximum of 5 cm$^{-1}$ or more are present.

It is noted that the full width at half maximum of the peak means the width (cm$^{-1}$) at a point of 1/2 of the height of the peak.

In addition, the requirement T is also satisfied in a case where at least one specific peak selected from the group consisting of the first peak, the second peak, and the third peak is present in the Raman spectrum of the lithium-based solid electrolyte, an intensity ratio of at least the one of the specific peak, which is calculated according to the following intensity measuring method, is 5.0 or less. Among the above, it is preferable that the above-described intensity ratio is satisfied regarding all of the specific peaks.

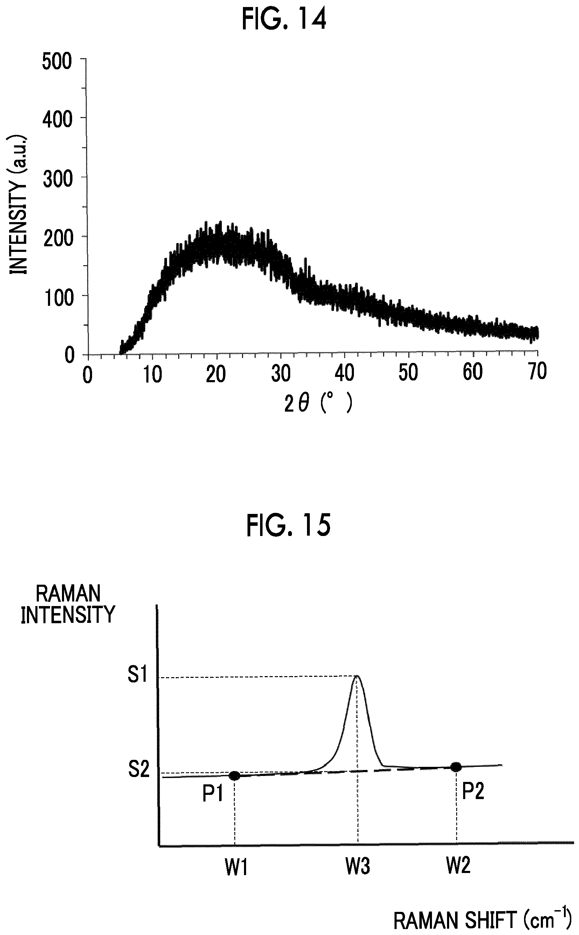

Hereinafter, the intensity measuring method will be described with reference to Fig. 15.

Fig. 15 is a graph showing an example of a Raman spectrum of a lithium-based solid electrolyte, where the vertical axis indicates the Raman intensity and the lateral axis represents the Raman shift. It is noted that in Fig. 15, an example in which one specific peak is present is shown in order to simplify the explanation.

In the intensity measuring method, first, a point at which the minimum value M1 of the Raman intensity of the lithium-based solid electrolyte in a wave number range of 400 to 600 cm$^{-1}$ of the Raman spectrum is exhibited and a point at which the minimum value M2 of the Raman intensity in a wave number range of 1,300 to 1,500 cm$^{-1}$ of the Raman spectrum is exhibited are connected to obtain a straight line. Specifically, as shown in Fig. 15, a point P1 at which the minimum value M1 is exhibited and a point P2 at which the minimum value M2 is exhibited are connected to obtain a straight line indicated by a broken line.

Next, in the range from a wave number (W1 in Fig. 15) at which the minimum value M1 is exhibited to a wave number (W2 in Fig. 15) at which the minimum value M2 is exhibited, the average difference value between the Raman intensity of the straight line and the Raman intensity of the Raman spectrum is calculated at each wave number in a range (hereinafter, also referred to as a "specific range") other than the ranges of 710 to 730 cm$^{-1}$, 770 to 790 cm$^{-1}$, and 1,020 to 1,040 cm$^{-1}$. It is noted that the average difference value is obtained by calculating the absolute value of the difference between the Raman intensity of the straight line and the Raman intensity of the Raman spectrum for every wave number of 2 cm$^{-1}$ from W1 to W2 in the specific range and taking the arithmetic mean of this absolute value of the difference.

Next, the absolute value of the difference between the Raman intensity of the peak at a wave number at which the peak top of the specific peak is exhibited and the Raman intensity of the straight line is calculated, and the ratio of the absolute value of the difference to the average difference value is calculated as the intensity ratio. More specifically, as shown in Fig. 15, the absolute value (|S1 - S2|) of the difference between a Raman intensity S1 of a peak at a wave number W3 at which the peak top of the peak is exhibited and a Raman intensity S2 of the straight line at a wave number W3 is calculated, and examination is carried out on whether or not the obtained absolute value of the difference corresponds to 5.0 times or less with respect to the average difference value.

A case where the requirement T is satisfied means that the crystal structure is not present or almost not present in the lithium-based solid electrolyte, and the lithium-based solid electrolyte is in a noncrystalline state.

That is, the first peak to the third peak described in the requirement Y are peaks mainly derived from the crystal structure (particularly, the crystal structure of lithium tetraborate) in the lithium-based solid electrolyte, and it is presumed that in a case where this peak is not present, the lithium-based solid electrolyte does not have a predetermined crystal structure and is in a noncrystalline state, and thus a hydrated layer having excellent ionic conductivity is easily formed as described above. In addition, it is presumed that even in a case where at least one of the first peak, the second peak, or the third peak is present, the fact that the intensity ratio of any one of the existing specific peaks is equal to or smaller than a predetermined value indicates that the lithium-based solid electrolyte has almost no crystal structure, and a hydrated layer having excellent ionic conductivity is easily formed as described above. It is noted that in the lithium-based solid electrolyte, a peak due to another factor may be generated in addition to the peak derived from a predetermined crystal structure such as the crystal structure of lithium tetraborate mentioned as an example. Examples of the peak due to another factor include a peak derived from an impurity, and such a peak may overlap with the above-described first peak to third peak. In a case where a noncrystalline state, which is presumed to make it possible to form a hydrated layer having excellent ionic conductivity, is achieved, all of the first peak to the third peak are reduced in a large number of cases, and even in a case where the peak due to another factor happens to overlap with any one of the first peak to the third peak, and thus one large peak appears, it can be said that the presence of the specific peak in which the intensity ratio is equal to or smaller than the predetermined value indicates that the lithium-based solid electrolyte is in a noncrystalline state which is presumed to make it possible to form a hydrated layer having excellent ionic conductivity.

In the Raman spectrum of the lithium-based solid electrolyte, in a case where none of the first peak, the second peak, and the third peak are present, or in a case where a specific peak selected from the group consisting of the first peak, the second peak, and the third peak is present, the intensity ratio of at least one specific peak is more preferably 3.0 or less. Among the above, in a case where none of the first peak, the second peak, and the third peak are present, or in a case where a specific peak selected from the group consisting of the first peak, the second peak, and the third peak is present, it is still more preferable that the intensity ratio of at least one specific peak is 2.0 or less, and it is particularly preferable that none of the first peak, the second peak, and the third peak are present.

It is noted that Raman imaging is carried out as the measuring method for a Raman spectrum. The Raman imaging is a microscopic spectroscopy method that combines Raman spectroscopy with a microscopic technique. Specifically, it is a method of scanning a sample with excitation light to detect measurement light including Raman scattered light, and then visualizing the distribution or the like of components based on the intensity of the measurement light.

The measurement conditions for Raman imaging are as follows: an environment of atmospheric air of 27°C, an excitation light of 532 nm, an objective lens of 100 magnifications, a point scanning according to the mapping method, a step of 1 $\mu$m, an exposure time per point of 1 second, the number of times of integration of 1, and a measurement range of a range of 70 $\mu$m $\times$ 50 $\mu$m. However, the measurement range may be narrower depending on the film thickness of the sample.

In addition, the Raman spectrum data is subjected to a principal component analysis (PCA) processing to remove noise. Specifically, in the principal component analysis processing, the spectrum is recombined using components having an autocorrelation coefficient of 0.6 or more.

In addition, from the viewpoint that the effect of the present invention is more excellent, it is preferable that the mass reduction rate in a case where the lithium-based solid electrolyte according to the first embodiment of the present invention is heated to 800°C is 20% to 40% by mass. Among the above, from the viewpoint that the effect of the present invention is more excellent, the mass reduction rate is more preferably 25% to 35% by mass.

It is conceived that the mass reduction of the lithium-based solid electrolyte according to the first embodiment of the present invention, which occurs during the heating, is caused by the removal of the watery moisture contained in the lithium-based solid electrolyte. The fact that a predetermined amount of the mass reduction rate is exhibited as described above indicates that the lithium-based solid electrolyte contains a predetermined amount of watery moisture, and it is conceived that the presence of such watery moisture improves the conductivity of lithium ions.

In a case of carrying out heating treatment, heating is carried out at a temperature rising rate of 20 °C/sec in a range of 25°C to 800°C. It is noted that a known thermal gravity-differential thermal analysis (TG-DTA) apparatus can be used for the measurement.

The mass reduction rate is calculated according to {(mass at 25°C - mass at -800°C)/mass at 25°C} $\times$ 100.

In addition, in order to carry out the heating treatment, the lithium-based solid electrolyte according to the first embodiment of the present invention is subjected to vacuum drying at 40°C for 2 hours, and then the measurement is carried out in atmospheric air.

The bulk elastic modulus of the lithium-based solid electrolyte according to the first embodiment of the present invention is not particularly limited; however, it is preferably 45 GPa or less and more preferably 40 GPa or less from the viewpoint that the effect of the present invention is more excellent. The lower limit thereof is not particularly limited; however, it is preferably 5 GPa or more.

The bulk elastic modulus is measured according to the ultrasonic attenuation method.

Specifically, first, a suspension, in which the lithium-based solid electrolyte according to the first embodiment of the present invention is suspended in pure water, is prepared. The content in the lithium-based solid electrolyte according to the first embodiment of the present invention in the suspension is 1.2% by mass with respect to the total mass of the suspension. Next, the ultrasonic attenuation spectrum of the suspension is measured, and the bulk elastic modulus of the lithium-based solid electrolyte according to the first embodiment of the present invention is determined from the fitting according to the scattering attenuation theoretical expression. It is noted that in a case of carrying out the above fitting, the particle size distribution, the density (2.3 g/ml), and the Poisson's ratio (0.12) of the lithium-based solid electrolyte according to the embodiment of the present invention are used.

Regarding the fitting according to the above-described scattering attenuation theoretical expression, the bulk elastic modulus is calculated by using the expressions (7), (12), and (13) described in Kohjiro Kubo et al., Ultrasonics 62 (2015) 186-194.

In addition, in the particle size distribution of the lithium-based solid electrolyte according to the first embodiment of the present invention, a particle image is acquired according to a flow-type particle image analysis method, thereby obtaining a histogram (particle size distribution) of particle diameters of the lithium-based solid electrolyte according to the first embodiment of the present invention. The particle diameter corresponds to a circle-equivalent diameter.

The median diameter (D50) of the lithium-based solid electrolyte according to the first embodiment of the present invention is not particularly limited; however, it is preferably 0.01 to 20 $\mu$m and more preferably 0.1 to 2.0 $\mu$m from the viewpoint that the effect of the present invention is more excellent.

In the above-described measuring method for the median diameter (D50), a particle image is acquired according to a flow-type particle image analysis method, the particle diameter distribution of the lithium-based solid electrolyte according to the first embodiment of the present invention is calculated, and the average particle diameter is analyzed from the obtained distribution. It is noted that the particle diameter corresponds to a circle-equivalent diameter.


<<Second embodiment>>

The lithium-based solid electrolyte according to the second embodiment of the present invention contains Li, B, and O.

In addition, the lithium-based solid electrolyte according to the second embodiment of the present invention further contains two or more specific elements selected from the group consisting of a Group 4 element of the periodic table, a Group 15 element of the periodic table, a Group 16 element of the periodic table, a Group 17 element of the periodic table, Si, C, Sc, Y, H. It is noted that from the viewpoint that the effect of the present invention is more excellent, it is preferable that the lithium-based solid electrolyte according to the second embodiment of the present invention contains two or more specific elements selected from the group consisting of F, Cl, Br, I, S, P, Si, Se, Te, C, Sb, As, Sc, Y, Zr, Ti, Hf, H, and N.

Examples of the Group 4 element of the periodic table include Ti, Zr, Hr, and Rf.

Examples of the Group 15 element of the periodic table include N, P, As, Sb, Bi, and Mc.

Examples of the Group 16 element of the periodic table include O, S, Se, Te, Po, and Lv.

Examples of the Group 17 element of the periodic table include F, Cl, Br, I, At, and Ts.

The kind of the specific element contained in the lithium-based solid electrolyte according to the second embodiment of the present invention may be 3 or more kinds. Among them, from the viewpoint that the effect of the present invention is more excellent", the kind of the specific element contained in the lithium-based solid electrolyte is preferably 2 to 5 kinds and more preferably 2 to 4 kinds.

The lithium-based solid electrolyte according to the second embodiment of the present invention preferably contains two or more specific elements selected from the group consisting of F, S, N, P, and C, more preferably contains two or more specific elements selected from the group consisting of F, S, C, and N, and still more preferably contains three specific elements of F, S, and N.

As will be described later, it is preferable to use lithium tetraborate as a raw material in a case of producing the lithium-based solid electrolyte according to the second embodiment of the present invention. In such a case, the lithium tetraborate to be used is generally a compound represented by $Li_2B_4O_7$, and it is a compound mainly composed of Li, B, and O; however, in the present invention, it may deviate from the above standard value. More specifically, the lithium tetraborate is preferably a compound represented by $Li_{2+x}B_{4+y}O_{7+z}$ (-0.3 < x < 0.3, -0.3 < y < 0.3, and -0.3 < z < 0.3). That is, in a case where the molar amount of Li is indicated by setting the molar amount of B in the lithium-based solid electrolyte to 4.00, it is preferable that the molar amount of Li is 1.58 to 2.49, and the molar amount of O is 6.23 to 7.89. In other words, assuming that the molar content amount of B is set to 4.00, it is preferable that the relative value of the molar content amount of Li is 1.58 to 2.49, and the molar amount of O is 6.23 to 7.89.

In the lithium-based solid electrolyte according to the second embodiment of the present invention, the molar amount of Li is 1.58 to 3.49 in a case where the molar amount of Li is indicated by setting the molar amount of B in the lithium-based solid electrolyte to 4.00. That is, in a case where the molar content amount of B is set to 4.00, the relative value of the molar content amount of Li is 1.58 to 3.49.

Among the above, from the viewpoint that the effect of the present invention is more excellent, the molar amount of Li is preferably 1.58 to 3.00, more preferably 1.90 to 3.00, and still more preferably 2.00 to 3.00 in a case where the molar amount of Li is indicated by setting the molar amount of B in the lithium-based solid electrolyte to 4.00.

In the lithium-based solid electrolyte according to the second embodiment of the present invention, the molar amount of O is 6.23 to 25.00 in a case where the molar amount of O is indicated by setting the molar amount of B in the lithium-based solid electrolyte to 4.00. That is, in a case where the molar content amount of B is set to 4.00, the relative value of the molar content amount of O is 6.23 to 25.00.

Among the above, from the viewpoint that the effect of the present invention is more excellent, the molar amount of O is preferably 10.00 to 23.00 in a case where the molar amount of O is indicated by setting the molar amount of B in the lithium-based solid electrolyte to 4.00.

In the lithium-based solid electrolyte according to the second embodiment of the present invention, in a case where the molar amount of the specific element is indicated by setting the molar amount of B in the lithium-based solid electrolyte to 4.00, the molar amount of each of the specific elements is 0.001 to 10.00. That is, in a case where the molar content amount of B is set to 4.00, the relative value of the molar content amount of each of the specific elements is 0.001 to 10.00.

Among the above, from the viewpoint that the effect of the present invention is more excellent, the molar amount of each of the specific elements is preferably 0.001 to 6.0 and more preferably 0.01 to 5.0 in a case where the molar amount of the specific element is indicated by setting the molar amount of B in the lithium-based solid electrolyte to 4.00.

As described above, in the lithium-based solid electrolyte according to the second embodiment of the present invention, two or more kinds of specific elements are contained. Therefore, for example, in a case where the lithium-based solid electrolyte according to the second embodiment of the present invention contains two specific elements, that is, the specific element A and the specific element B which is an element different from the specific element A in terms of kind, the molar amount of the specific element A and the molar amount of the specific element B are each 0.001 to 10.00 in a case where the molar amount of B in the lithium-based solid electrolyte is set to 4.00. In addition, for example, in a case where the lithium-based solid electrolyte according to the second embodiment of the present invention contains three specific elements, that is, the specific element A, the specific element B which is an element different from the specific element A in terms of kind, and a specific element C which is an element different from the specific elements A and B in terms of kind, the molar amount of the specific element A, the molar amount of the specific element B, and the molar amount of the specific element C are each 0.001 to 10.00 in a case where the molar amount of B in the lithium-based solid electrolyte is set to 4.00.

The contents of Li, B, and the specific elements in the lithium-based solid electrolyte according to the second embodiment of the present invention are specified according to known element analysis. Regarding methods for element analysis, for example, Li and B are analyzed according to inductively coupled plasma optical emission spectrometry (ICP-OES), N or the like, which is one of the specific elements, is analyzed according to an inert gas melting method to specify, and F or S, which is one of the specific elements, is analyzed according to combustion ion chromatography. The content of O can be calculated as a difference between an amount obtained by adding together analytical masses of elements other than O, and the total amount of the powder. It is noted that the method of calculating the content of each element is not limited to those described above, and from an analysis result of a content of one kind of element, a content of another element may be estimated in consideration of structures of compounds to be used.

The molar amounts of Li, O, and the specific elements in a case where the molar amount ofB is set to 4.00 are calculated from the content of each element, which is calculated according to the element analysis.

One of the suitable aspects of the composition of the lithium-based solid electrolyte according to the second embodiment of the present invention includes a lithium-based solid electrolyte containing Li, B, O, F, S, and N, in which in a case where the molar amount of B is set to 4.00, the molar amount of Li is 1.58 to 3.49 (preferably 1.58 to 3.00), the molar amount of O is 6.23 to 25.00, the molar amount of F is 0.001 to 10.00, the molar amount of S is 0.001 to 2.00, and the molar amount of N is 0.001 to 1.00.

The suitable range of the molar ratio is as described above.

It is noted that the lithium-based solid electrolyte according to the second embodiment of the present invention may contain another element in addition to Li, B, O, and the specific elements.

A production method according to the lithium-based solid electrolyte according to the second embodiment of the present invention will be described in detail later. However, it is preferable that the lithium-based solid electrolyte according to the embodiment of the present invention is produced by a production method including a mechanical milling treatment. For example, in a case where a raw material (for example, a lithium-based oxide containing Li and B) of the lithium-based solid electrolyte according to the second embodiment of the present invention is subjected to a mechanical milling treatment, it is presumed that a crystalline component in the raw material can be non-crystalized, and as a result, a hydrated layer having excellent ionic conductivity is easily formed.

Further, from the viewpoint that the effect of the present invention is more excellent, the proportion of a full width at half maximum of a peak in which a chemical shift appears in a range of -100 to +100 ppm in a spectrum obtained in a case where a solid $^7$Li-NMR measurement of the lithium-based solid electrolyte according to the second embodiment of the present invention is carried out at 120°C is preferably 50% or less, more preferably 40% or less, and still more preferably 35% or less, with respect to a full width at half maximum of a peak in which a chemical shift appears in a range of -100 to +100 ppm in a spectrum obtained in a case where the solid $^7$Li-NMR measurement of the lithium-based solid electrolyte according to the second embodiment of the present invention is carried out at 20°C. The lower limit thereof is not particularly limited; however, it is 10% or more in a large number of cases.

The full width at half maximum (FWHM) of the peak means the width (ppm) at a point (H/2) of 1/2 of the height (H) of the peak.

The above-described characteristics are as described in the first embodiment, and the measuring method therefor is also as described in the first embodiment.

In addition, from the viewpoint that the effect of the present invention is more excellent, it is preferable that in a spectrum obtained by carrying out a solid $^7$Li-NMR measurement of the lithium-based solid electrolyte according to the second embodiment of the present invention at 20°C, in a case where a first peak appearing in a range of -100 to +100 ppm is subjected to waveform separation, the lithium-based solid electrolyte has a second peak having a full width at half maximum of 5 ppm or less in a range where a chemical shift is -3 to 3 ppm, and a ratio of an area intensity of the second peak to an area intensity of the first peak is 0.5% or more. The ratio of the area intensity is more preferably 2% or more and still more preferably 15% or more. The upper limit of the ratio of the area intensity is not particularly limited; however, it is 50% or less in a large number of cases.

The above-described characteristics are as described in the first embodiment, and the measuring method therefor is also as described in the first embodiment.

In addition, in the infrared absorption spectrum of the lithium-based solid electrolyte according to the second embodiment of the present invention, the ratio of a maximum absorption intensity in a wave number range of 3,000 to 3,500 cm[-1] to a maximum absorption intensity in a wave number range of 800 to 1,600 cm[-1] is preferably 1/5 or more from the viewpoint that the effect of the present invention is more excellent. Among the above, the ratio is preferably 3/10 or more and more preferably 2/5 or more from the viewpoint that the effect of the present invention is more excellent. The upper limit thereof is not particularly limited; however, it is preferably 1 or less.

The above-described characteristics are as described in the first embodiment, and the measuring method therefor is also as described in the first embodiment.

In addition, from the viewpoint that the effect of the present invention is more excellent, it is preferable that a coefficient of determination is 0.9400 or more, where the coefficient of determination is obtained by carrying out a linear regression analysis according to a least squares method in a wave number range of 600 to 850 cm[-1] in a Raman spectrum of the lithium-based solid electrolyte according to the second embodiment of the present invention.

The coefficient of determination is more preferably 0.9600 or more from the viewpoint that the effect of the present invention is more excellent. The upper limit thereof is not particularly limited; however, it is, for example, 1.0000.

The above-described characteristics are as described in the first embodiment, and the measuring method therefor is also as described in the first embodiment.

In addition, from the viewpoint that the effect of the present invention is more excellent, it is preferable that the lithium-based solid electrolyte according to the second embodiment of the present invention satisfies a requirement T.

The following requirement T is the same as the requirement T defined in the first embodiment described above, and the measuring method therefor is also as described in the first embodiment.

The requirement T: In a Raman spectrum of a lithium-based solid electrolyte,

in a case where none of a first peak having a peak top at 710 to 730 cm[-1] and having a full width at half maximum of 5 cm[-1] or more, a second peak having a peak top at 770 to 790 cm[-1] and having a full width at half maximum of 5 cm[-1] or more, and a third peak having a peak top at 1,020 to 1,040 cm[-1] and having a full width at half maximum of 5 cm[-1] or more are present, or

in a case where at least one specific peak selected from the group consisting of the first peak, the second peak, and the third peak is present in the Raman spectrum,

an intensity ratio of at least the one of the specific peak, which is calculated according to the following intensity measuring method, is 5.0 or less.

The intensity measuring method: A point at which the minimum value M1 of the Raman intensity in a wave number range of 400 to 600 cm[-1] of the Raman spectrum is exhibited and a point at which the minimum value M2 of the Raman intensity in a wave number range of 1,300 to 1,500 cm[-1] of the Raman spectrum is exhibited are connected to obtain a straight line. Then, in the range from a wave number at which the minimum value M1 is exhibited to a wave number at which the minimum value M2 is exhibited, the average difference value between the Raman intensity of the straight line and the Raman intensity of the Raman spectrum is calculated at each wave number in a range other than the ranges of 710 to 730 cm[-1], 770 to 790 cm[-1], and 1,020 to 1,040 cm[-1], the absolute value of the difference between the Raman intensity of the peak at a wave number at which the peak top of the specific peak is exhibited and the Raman intensity of the straight line is calculated, and the ratio of the absolute value of the difference to the average difference value is defined as the intensity ratio.

In the Raman spectrum of the lithium-based solid electrolyte, in a case where none of the first peak, the second peak, and the third peak are present, or in a case where a specific peak selected from the group consisting of the first peak, the second peak, and the third peak is present, the intensity ratio of at least one specific peak is more preferably 3.0 or less. Among the above, in a case where none of the first peak, the second peak, and the third peak are present, or in a case where a specific peak selected from the group consisting of the first peak, the second peak, and the third peak is present, it is still more preferable that the intensity ratio of at least one specific peak is 2.0 or less, and it is particularly preferable that none of the first peak, the second peak, and the third peak are present.

In addition, from the viewpoint that the effect of the present invention is more excellent, it is preferable that the mass reduction rate in a case where the lithium-based solid electrolyte according to the second embodiment of the present invention is heated to 800°C is 20% to 40% by mass. Among the above, from the viewpoint that the effect of the present invention is more excellent, the mass reduction rate is more preferably 25% to 35% by mass.

The above-described characteristics are as described in the first embodiment, and the measuring method therefor is also as described in the first embodiment.

The bulk elastic modulus of the lithium-based solid electrolyte according to the second embodiment of the present invention is not particularly limited; however, it is preferably 45 GPa or less and more preferably 40 GPa or less from the viewpoint that the effect of the present invention is more excellent. The lower limit thereof is not particularly limited; however, it is preferably 5 GPa or more.

The above-described characteristics are as described in the first embodiment, and the measuring method therefor is also as described in the first embodiment.

The median diameter (D50) of the lithium-based solid electrolyte according to the second embodiment of the present invention is not particularly limited; however, it is preferably 0.01 to 20 $\mu$m and more preferably 0.1 to 2.0 $\mu$m from the viewpoint that the effect of the present invention is more excellent.

In the above-described measuring method for the median diameter (D50), a particle image is acquired according to a flow-type particle image analysis method, the particle diameter distribution of the lithium-based solid electrolyte according to the second embodiment of the present invention is calculated, and the average particle diameter is analyzed from the obtained distribution. It is noted that the particle diameter corresponds to a circle-equivalent diameter.

In addition, it is preferable that the lithium-based solid electrolyte according to the second embodiment of the present invention satisfies the following requirement X from the viewpoint that the effect of the present invention is more excellent. The following requirement X is the same as the requirement X defined in a fourth embodiment described later, which will be described in detail later.

The requirement X: In a reduced two-body distribution function G(r) of the lithium-based solid electrolyte obtained from an X-ray total scattering measurement, a first peak of which a peak top is located in a range where r is 1.43 $\pm$ 0.2 Å and a second peak of which a peak top is located in a range where r is 2.40 $\pm$ 0.2 Å are present, and G(r) of the peak top of the first peak indicates more than 1.0 (preferably, 1.2 or more), and G(r) of the peak top of the second peak indicate 0.8 or more (preferably, more than 1.0).

In addition, it is preferable that the lithium-based solid electrolyte according to the second embodiment of the present invention satisfies the following requirement Y from the viewpoint that the effect of the present invention is more excellent. The following requirement Y is the same as the requirement Y defined in a fourth embodiment described later, which will be described in detail later.

The requirement Y: In an X-ray diffraction pattern of the lithium-based solid electrolyte obtained from an X-ray diffraction measurement using a CuK$\alpha$ ray,

in a case where none of a first peak of which a peak top is located in a range of 21.6° to 22.0° and a full width at half maximum is 0.65° or less, a second peak of which a peak top is located in a range of 25.4° to 25.8° and a full width at half maximum is 0.65° or less, a third peak of which a peak top is located in a range of 33.4° to 33.8° and a full width at half maximum is 0.65° or less, and a fourth peak of which a peak top is located in a range of 34.4° to 34.8° and a full width at half maximum is 0.65° or less are present, or

in a case where at least one specific peak selected from the group consisting of the first peak, the second peak, the third peak, and the fourth peak is present in the X-ray diffraction pattern,

an intensity ratio of at least the one of the specific peak, which is calculated according to the following intensity measuring method, is 5.0 or less.

The intensity measuring method: An average intensity 1 in a range of +0.45° to +0.55° from a diffraction angle 2θ of the peak top of the specific peak is calculated, an average intensity 2 in a range of -0.55° to -0.45° from the diffraction angle 2θ of the peak top of the specific peak is calculated, an arithmetic mean value of the average intensity 1 and the average intensity 2 is calculated, and a ratio of a peak intensity at the peak top of the specific peak to the arithmetic mean value is defined as the intensity ratio.

In the X-ray diffraction pattern of the lithium-based solid electrolyte according to the second embodiment obtained from the X-ray diffraction measurement using the CuK$\alpha$ ray, in a case where none of the first peak, the second peak, the third peak, and the fourth peak are present, or a specific peak selected from the group consisting of the first peak, the second peak, the third peak, and the fourth peak is present, the intensity ratio of at least one specific peak is more preferably 3.0 or less. Among the above, in a case where none of the first peak, the second peak, the third peak, and the fourth peak are present, or a specific peak selected from the group consisting of the first peak, the second peak, the third peak, and the fourth peak is present, the intensity ratio of at least one specific peak is still more preferably 2.0 or less.

<<Third embodiment>>

the lithium-based solid electrolyte according to the third embodiment of the present invention contains lithium tetraborate subjected to a mechanical milling treatment, water, and a lithium salt.

Hereinafter, each component will be described in detail.

(Lithium tetraborate subjected to mechanical milling treatment (hereinafter, also referred to as "specific lithium tetraborate"))

The lithium tetraborate contained in the lithium-based solid electrolyte according to the third embodiment of the present invention is lithium tetraborate that has been subjected to a mechanical milling treatment.

The lithium tetraborate contained in the third embodiment is generally a compound represented by $Li_2B_4O_7$, and it is a compound mainly composed of Li, B, and O; however, in the present invention, it may deviate from the above standard value. More specifically, the lithium tetraborate is preferably a compound represented by $Li_{2+x}B_{4+y}O_{7+z}$ (-0.3 < x < 0.3, -0.3 < y < 0.3, and -0.3 < z < 0.3).

Examples of the mechanical milling treatment that is carried out on the lithium tetraborate include a mechanical milling treatment that is carried out in a step 1A described later, the details of which will be described later.

It is presumed that in a case where lithium tetraborate is subjected to a mechanical milling treatment, the lithium tetraborate can be non-crystalized, and as a result, a hydrated layer having excellent ionic conductivity is easily formed.

It is preferable that the specific lithium tetraborate satisfies the following requirement W from the viewpoint that the effect of the present invention is more excellent. That is, the specific lithium tetraborate is preferably lithium tetraborate that exhibits the characteristics indicated by the requirement W.

The requirement W: In a reduced two-body distribution function G(r) of the specific lithium tetraborate obtained from an X-ray total scattering measurement, a first peak in which a peak top is located in a range where r is 1.43 $\pm$ 0.2 Å and a second peak in which a peak top is located in a range where r is 2.40 $\pm$ 0.2 Å are present, G(r) of the peak top of the first peak and G(r) of the peak top of the second peak indicate more than 1.0, and an absolute value of G(r) is less than 1.0 in a range where r is more than 5 Å and 10 Å or less.

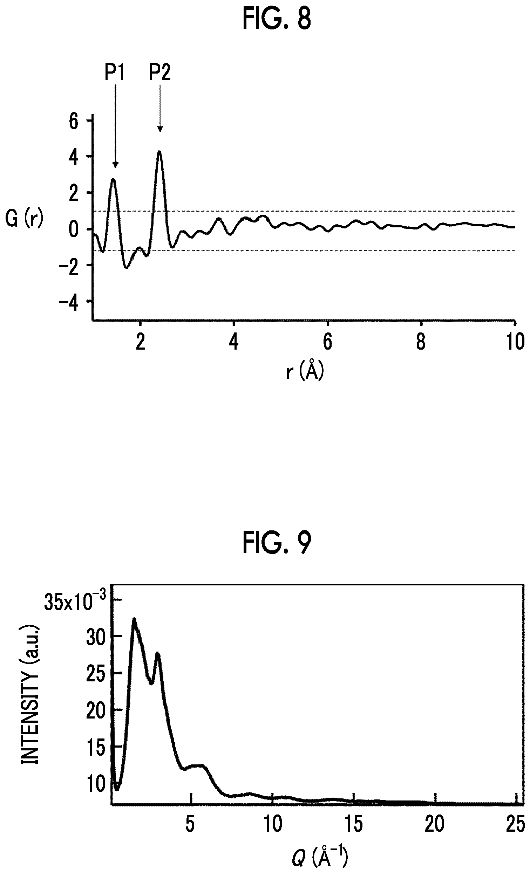

Hereinafter, the requirement W will be described with reference to Fig. 8 to 10.

Fig. 8 is a graph showing an example of a reduced two-body distribution function G(r) obtained by an X-ray total scattering measurement of the specific lithium tetraborate. The vertical axis of Fig. 8 is a reduced two-body distribution function obtained by subjecting X-ray scattering to Fourier transform, and it indicates the probability that an atom is present at a position of a distance r.

The X-ray total scattering measurement is carried out with SPring-8 BL04B2 (acceleration voltage: 61.4 keV, wavelength: 0.2019 Å).

It is noted that the reduced two-body distribution function G(r) is obtained by converting the scattering intensity I, which is obtained experimentally, according to the following procedure.

First, the scattering intensity $I_{obs}$ is represented by Expression (1). Further, the structural factor S(Q) is obtained by dividing $I_{coh}$ by the product of the number of atoms N and the atomic scattering factor f.

$$I_{obs} = I_{coh} + I_{incoh} + I_{fluorescence} \qquad (1)$$

$$S(Q) = \frac{I_{coh}}{Nf^2} \qquad (2)$$

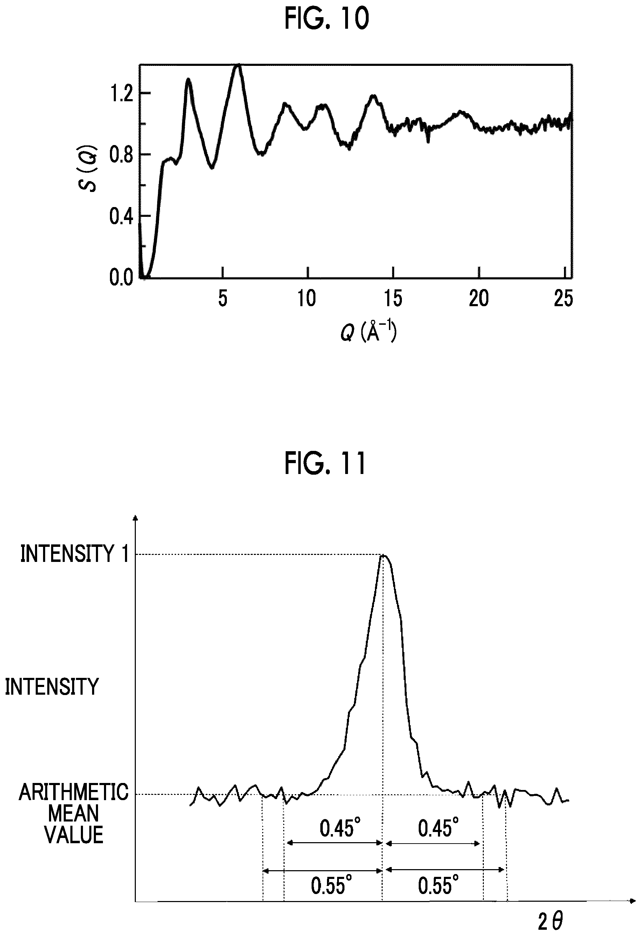

It is necessary to use the structural factor S(Q) for the pair distribution function (PDF) analysis. In Expression (2), the required intensity is solely the coherent scattering $I_{coh}$. Incoherent scattering $I_{incoh}$ and the X-ray fluorescence $I_{fluorescence}$ can be subtracted from the scattering intensity $I_{obs}$ by a blank measurement, subtraction using a theoretical expression, and a discriminator of a detector. Fig. 9 and Fig. 10 show examples of the results of the total scattering measurement of the specific lithium tetraborate and the extracted structural factor S(Q), respectively.

The coherent scattering is represented by Debye's scattering Expression (3) (N: total number of atoms, f: atomic scattering factor, $r_{ij}$: interatomic distance between i and j).

$$I_{coh} = \sum_{j=1}^{N} \sum_{k=1}^{N} f_i f_j \frac{\sin Q r_{ij}}{Q r_{ij}} \quad (3)$$

In a case of focusing on any atom, and the atomic density at a distance r is denoted as $\rho(r)$, the number of atoms present inside a sphere having a radius of r to r + d(r) is $4\pi r^2 \rho(r)dr$, and thus Expression (3) is represented by Expression (4).

$$I_{coh} = Nf^2 \left[ 1 + 4\pi \int_0^\infty r^2 \rho(r) \frac{\sin Q r}{Q r} dr \right] \quad (4)$$

In a case where the average density of atoms is denoted as $\rho_0$, and Expression (4) is modified, Expression (5) is obtained.

$$\frac{I_{coh}}{N} = f^2 \left[ 1 + 4\pi \int_0^\infty r^2 (\rho(r) - \rho_0) \frac{\sin Q r}{Q r} \right] \quad (5)$$

Expression (6) is obtained from Expression (5) and Expression (2).

$$4\pi r^2 \rho(r) = 4\pi r^2 \rho_0 + \frac{2r}{\pi} \int_0^\infty Q[S(Q) - 1]\sin Q r dQ) \quad (6)$$

The two-body distribution function g(r) is represented by Expression (7).

$$g(r) = \frac{\rho_r}{\rho_0} \quad (7)$$

Expression (8) is obtained from Expression (6) and Expression (7).

$$g(r) = 1 + \frac{1}{2\pi^2 \rho_0 r} \int_0^\infty Q[S(Q) - 1]\sin Q r dQ \quad (8)$$

As described above, the two-body distribution function can be determined by the Fourier transform of the structural factor S(Q). The reduced two-body distribution function (Fig. 8) is obtained by converting the two-body distribution function to G(r) = $4\pi r$ (g(r) -1) in order to make it easier to observe the intermediate/long-distance order. The g(r) that oscillates around 0 represents the density difference from the average density at each interatomic distance, and it is larger than the average density of 1 in a case where there is a correlation at a specific interatomic distance. As a result, it reflects the distance and coordination number of the element corresponding to the local to intermediate distance. In a case where the order is lost, $\rho(r)$ approaches the average density, and thus g(r) approaches 1. As a result, as r is larger, the order is further lost, and thus in the noncrystalline structure, g(r) is 1, that is, G(r) is 0.

In the requirement W, in the reduced two-body distribution function G(r) obtained from an X-ray total scattering measurement, a first peak P1 of which a peak top is located in a range where r is 1.43 ± 0.2 Å and a second peak P2 of which a peak top is located in a range where r is 2.40 ± 0.2 Å are present, and G(r) of the peak top of the first peak P1 and G(r) of the peak top of the second peak P2 indicates more than 1.0, as illustrated in Fig. 8.

That is, in the reduced two-body distribution function G(r) of the specific lithium tetraborate obtained from the X-ray total scattering measurement, the first peak in which G(r) of a peak top (hereinafter, also referred to as a "first peak top") indicates more than 1.0 and the first peak top is located in a range of 1.43 ± 0.2 Å and the second peak in which G(r) of a peak top (hereinafter, also referred to as a "second peak top") indicates more than 1.0 and the second peak top is located in a range of 2.40 ± 0.2 Å are observed.

It is noted that in Fig. 8, the peak top of the first peak P1 is located at 1.43 Å, and the peak top of the second peak P2 is located at 2.40 Å.

At the position of 1.43 Å, a peak attributed to the interatomic distance of boron (B) - oxygen (O) is present. In addition, at the position of 2.40 Å, a peak attributed to the interatomic distance of boron (B) - boron (B) is present. That is, the fact that the above two peaks (the first peak and the second peak) are observed means that periodic structures corresponding to the above two interatomic distances are present in the specific lithium tetraborate.

Further, in the requirement W, the absolute value of G(r) is less than 1.0 (corresponding to the broken line) in a range where r is more than 5 Å and 10 Å or less as illustrated in Fig. 8.

The fact that the absolute value of G(r) is less than 1.0 in a range where r is more than 5 Å and 10 Å or less as described above means that almost no long-distance ordered structure is not present in the specific lithium tetraborate.

Such a specific lithium tetraborate that satisfies the above requirement W has a short-distance ordered structure related to the interatomic distances of B-O and B-B as described above; however, it has almost no long-distance ordered structure related thereto. Therefore, the specific lithium tetraborate itself exhibits an elastic characteristic of being easily plastically deformed.

It is noted that in the reduced two-body distribution function G(r), there may be a peak other than the first peak and the second peak in a range where r is 5 Å or less.

In addition, it is preferable that the specific lithium tetraborate satisfies the following requirement V from the viewpoint that the effect of the present invention is more excellent. That is, the specific lithium tetraborate is preferably lithium tetraborate that exhibits the characteristics indicated by the requirement V

It is noted that the requirement V is a requirement that is evaluated according to the same procedure, except that the specific lithium tetraborate is used as a measurement target for the requirement Y for a fourth embodiment described later, and the evaluation method therefor is described in the requirement Y described later.

The requirement V: In an X-ray diffraction pattern of the specific lithium tetraborate obtained from an X-ray diffraction measurement using a CuKα ray, in a case where none of a first peak of which a peak top is located in a range of 21.6° to 22.0° and a full width at half maximum is 0.65° or less, a second peak of which a peak top is located in a range of 25.4° to 25.8° and a full width at half maximum is 0.65° or less, a third peak of which a peak top is located in a range of 33.4° to 33.8° and a full width at half maximum is 0.65° or less, and a fourth peak of which a peak top is located in a range of 34.4° to 34.8° and a full width at half maximum is 0.65° or less are present, or

in a case where at least one specific peak selected from the group consisting of the first peak, the second peak, the third peak, and the fourth peak is present in the X-ray diffraction pattern,

an intensity ratio of at least the one of the specific peak, which is calculated according to the following intensity measuring method, is 5.0 or less.

The intensity measuring method: An average intensity 1 in a range of +0.45° to +0.55° from a diffraction angle $2\theta$ of the peak top of the specific peak is calculated, an average intensity 2 in a range of -0.55° to -0.45° from the diffraction angle $2\theta$ of the peak top of the specific peak is calculated, an arithmetic mean value of the average intensity 1 and the average intensity 2 is calculated, and a ratio of a peak intensity at the peak top of the specific peak to the arithmetic mean value is defined as the intensity ratio.

In the X-ray diffraction pattern of the specific lithium tetraborate obtained from the X-ray diffraction measurement using the CuKα ray, in a case where none of the first peak, the second peak, the third peak, and the third peak are present, or a specific peak selected from the group consisting of the first peak, the second peak, the third peak, and the third peak is present, the intensity ratio of at least one specific peak is more preferably 3.0 or less. Among the above, in a case where none of the first peak, the second peak, the third peak, and the fourth peak are present, or a specific peak selected from the group consisting of the first peak, the second peak, the third peak, and the fourth peak is present, the intensity ratio of at least one specific peak is still more preferably 2.0 or less.

It is noted that in the X-ray diffraction pattern of the requirement V, in a case where two or more peaks of which a peak top is located in a range of 21.6° to 22.0° and a full width at half maximum is 0.65° or less are present, a peak having the highest diffracted X-ray intensity is selected as the first peak, and the determination of the requirement V is carried out.

In addition, in the X-ray diffraction pattern of the requirement V, in a case where two or more peaks of which a peak top is located in a range of 25.4° to 25.8° and a full width at half maximum is 0.65° or less are present, a peak having the highest diffracted X-ray intensity is selected as the second peak, and the determination of the requirement V is carried out.

In addition, in the X-ray diffraction pattern of the requirement V, in a case where two or more peaks of which a peak top is located in a range of 33.4° to 33.8° and a full width at half maximum is 0.65° or less are present, a peak having the highest diffracted X-ray intensity is selected as the third peak, and the determination of the requirement V is carried out.

In addition, in the X-ray diffraction pattern of the requirement V, in a case where two or more peaks of which a peak top is located in a range of 34.4° to 34.8° and a full width at half maximum is 0.65° or less are present, a peak having the highest diffracted X-ray intensity is selected as the fourth peak, and the determination of the requirement V is carried out.

In addition, it is preferable that the specific lithium tetraborate satisfies the following requirement T2 from the viewpoint that the effect of the present invention is more excellent.

The following requirement T2 is a requirement that is evaluated according to the same procedure, except that the specific lithium tetraborate is used as a measurement target for the requirement T for the first embodiment described above, and the evaluation method therefor is as described above.

The requirement T2: In a Raman spectrum of the specific lithium tetraborate,

in a case where none of a first peak having a peak top at 710 to 730 $cm^{-1}$ and having a full width at half maximum of 5 $cm^{-1}$ or more, a second peak having a peak top at 770 to 790 $cm^{-1}$ and having a full width at half maximum of 5 $cm^{-1}$ or more, and a third peak having a peak top at 1,020 to 1,040 $cm^{-1}$ and having a full width at half maximum of 5 $cm^{-1}$ or more are present, or

in a case where at least one specific peak selected from the group consisting of the first peak, the second peak, and the third peak is present in the Raman spectrum,

an intensity ratio of at least the one of the specific peak, which is calculated according to the following intensity measuring method, is 5.0 or less.

The intensity measuring method: A point at which the minimum value M1 of the Raman intensity in a wave number range of 400 to 600 $cm^{-1}$ of the Raman spectrum is exhibited and a point at which the minimum value M2 of the Raman intensity in a wave number range of 1,300 to 1,500 $cm^{-1}$ of the Raman spectrum is exhibited are connected to obtain a straight line. Then, in the range from a wave number at which the minimum value M1 is exhibited to a wave number at which the minimum value M2 is exhibited, the average difference value between the Raman intensity of the straight line and the Raman intensity of the Raman spectrum is calculated at each wave number in a range other than the ranges of 710 to 730 $cm^{-1}$, 770 to 790 $cm^{-1}$, and 1,020 to 1,040 $cm^{-1}$, the absolute value of the difference between the Raman intensity of the peak at a wave number at which the peak top of the specific peak is exhibited and the Raman intensity of the straight line is calculated, and the ratio of the absolute value of the difference to the average difference value is defined as the intensity ratio.

In the Raman spectrum of the specific lithium tetraborate, in a case where none of the first peak, the second peak, and the third peak are present, or in a case where a specific peak selected from the group consisting of the first peak, the second peak, and the third peak is present, the intensity ratio of at least one specific peak is more preferably 3.0 or less. Among the above, in a case where none of the first peak, the second peak, and the third peak are present, or in a case where a specific peak selected from the group consisting of the first peak, the second peak, and the third peak is present, it is still more preferable that the intensity ratio of at least one specific peak is 2.0 or less, and it is particularly preferable that none of the first peak, the second peak, and the third peak are present.

In the lithium-based solid electrolyte according to the third embodiment of the present invention, the content of the specific lithium tetraborate is not particularly limited.

(Water)

The lithium-based solid electrolyte according to the third embodiment of the present invention contains water.

In the lithium-based solid electrolyte according to the third embodiment of the present invention, the content of the water is not particularly limited. Among the above, from the viewpoint that the effect of the present invention is more excellent, the molar ratio of the water to the specific lithium tetraborate in the lithium-based solid electrolyte according to the third embodiment of the present invention (molar amount of water/molar amount of specific lithium tetraborate) is preferably 3 to 15, more preferably 4 to 13, still more preferably 5 to 13, and particularly preferably 10 to 13.

(Lithium salt)

The lithium-based solid electrolyte according to the third embodiment of the present invention contains a lithium salt.

The kind of the lithium salt is not particularly limited, and examples thereof include a lithium salt exemplified in a step 1A described later, the details of which will be described later.

In the lithium-based solid electrolyte according to the third embodiment of the present invention, the content of the lithium salt is not particularly limited.

In the lithium-based solid electrolyte according to the third embodiment of the present invention, the mass ratio of the content of the lithium salt to the content of the specific lithium tetraborate described above (content mass of lithium salt/content mass of specific lithium tetraborate) is not particularly limited. Among the above, from the viewpoint that the effect of the present invention is more excellent, the molar ratio of the lithium salt to the specific lithium tetraborate (molar amount of lithium salt/molar amount of specific lithium tetraborate) in the lithium-based solid electrolyte according to the third embodiment of the present invention, is preferably 0.001 to 1.5, more preferably 0.001 to 1.2, still more preferably 0.01 to 1.2, particularly preferably 0.1 to 1.2, and most preferably 0.5 to 1.2.

It is noted that the molar ratio of each component in the lithium-based solid electrolyte according to the third embodiment of the present invention can be determined by using a known method. For example, the above-described element analysis described in the first embodiment may be used.

Further, from the viewpoint that the effect of the present invention is more excellent, the proportion of a full width at half maximum of a peak in which a chemical shift appears in a range of -100 to +100 ppm in a spectrum obtained in a case where a solid $^7$Li-NMR measurement of the lithium-based solid electrolyte according to the third embodiment of the present invention is carried out at 120°C is preferably 50% or less, more preferably 40% or less, and still more preferably 35% or less, with respect to a full width at half maximum of a peak in which a chemical shift appears in a range of -100 to +100 ppm in a spectrum obtained in a case where the solid $^7$Li-NMR measurement of the lithium-based solid electrolyte according to the third embodiment of the present invention is carried out at 20°C. The lower limit thereof is not particularly limited; however, it is 10% or more in a large number of cases.

The full width at half maximum (FWHM) of the peak means the width (ppm) at a point (H/2) of 1/2 of the height (H) of the peak.

The above-described characteristics are as described in the first embodiment, and the measuring method therefor is also as described in the first embodiment.

In addition, from the viewpoint that the effect of the present invention is more excellent, it is preferable that in a spectrum obtained by carrying out a solid $^7$Li-NMR measurement of the lithium-based solid electrolyte according to the third embodiment of the present invention at 20°C, in a case where a first peak appearing in a range of -100 to +100 ppm is subjected to waveform separation, the lithium-based solid electrolyte has a second peak having a full width at half maximum of 5 ppm or less in a range where a chemical shift is -3 to 3 ppm, and a ratio of an area intensity of the second peak to an area intensity of the first peak is 0.5% or more. The ratio of the area intensity is more preferably 2% or more and still more preferably 15% or more. The upper limit of the ratio of the area intensity is not particularly limited; however, it is 50% or less in a large number of cases.

The above-described characteristics are as described in the first embodiment, and the measuring method therefor is also as described in the first embodiment.

In addition, in the infrared absorption spectrum of the lithium-based solid electrolyte according to the third embodiment of the present invention, the ratio of a maximum absorption intensity in a wave number range of 3,000 to 3,500 cm$^{-1}$ to a maximum absorption intensity in a wave number range of 800 to 1,600 cm$^{-1}$ is preferably 1/5 or more from the viewpoint that the effect of the present invention is more excellent. Among the above, the ratio is preferably 3/10 or more and more preferably 2/5 or more from the viewpoint that the effect of the present invention is more excellent. The upper limit thereof is not particularly limited; however, it is preferably 1 or less.

The above-described characteristics are as described in the first embodiment, and the measuring method therefor is also as described in the first embodiment.

In addition, from the viewpoint that the effect of the present invention is more excellent, it is preferable that a coefficient of determination is 0.9400 or more, where the coefficient of determination is obtained by carrying out a linear regression analysis according to a least squares method in a wave number range of 600 to 850 cm$^{-1}$ in a Raman spectrum of the lithium-based solid electrolyte according to the third embodiment of the present invention.

The coefficient of determination is more preferably 0.9600 or more from the viewpoint that the effect of the present invention is more excellent. The upper limit thereof is not particularly limited; however, it is, for example, 1.0000.

The above-described characteristics are as described in the first embodiment, and the measuring method therefor is also as described in the first embodiment.

In addition, from the viewpoint that the effect of the present invention is more excellent, it is preferable that the lithium-based solid electrolyte according to the third embodiment of the present invention satisfies a requirement T.

The following requirement T is the same as the requirement T defined in the first embodiment described above, and the measuring method therefor is also as described in the first embodiment.

The requirement T: In a Raman spectrum of a lithium-based solid electrolyte,

in a case where none of a first peak having a peak top at 710 to 730 cm$^{-1}$ and having a full width at half maximum of 5 cm$^{-1}$ or more, a second peak having a peak top at 770 to 790 cm$^{-1}$ and having a full width at half maximum of 5 cm$^{-1}$ or more, and a third peak having a peak top at 1,020 to 1,040 cm$^{-1}$ and having a full width at half maximum of 5 cm$^{-1}$ or more are present, or

in a case where at least one specific peak selected from the group consisting of the first peak, the second peak, and the third peak is present in the Raman spectrum,

an intensity ratio of at least the one of the specific peak, which is calculated according to the following intensity measuring method, is 5.0 or less.

The intensity measuring method: A point at which the minimum value M1 of the Raman intensity in a wave number range of 400 to 600 cm$^{-1}$ of the Raman spectrum is exhibited and a point at which the minimum value M2 of the Raman intensity in a wave number range of 1,300 to 1,500 cm$^{-1}$ of the Raman spectrum is exhibited are connected to obtain a straight line. Then, in the range from a wave number at which the minimum value M1 is exhibited to a wave number at which the minimum value M2 is exhibited, the average difference value between the Raman intensity of the straight line and the Raman intensity of the Raman spectrum is calculated at each wave number in a range other than the ranges of 710 to 730 cm$^{-1}$, 770 to 790 cm$^{-1}$, and 1,020 to 1,040 cm$^{-1}$, the absolute value of the difference between the Raman intensity of the peak at a wave number at which the peak top of the specific peak is exhibited and the Raman intensity of the straight line is calculated, and the ratio of the absolute value of the difference to the average difference value is defined as the intensity ratio.

In the Raman spectrum of the lithium-based solid electrolyte, in a case where none of the first peak, the second peak, and the third peak are present, or in a case where a specific peak selected from the group consisting of the first peak, the second peak, and the third peak is present,

the intensity ratio of at least one specific peak is more preferably 3.0 or less. Among the above, in a case where none of the first peak, the second peak, and the third peak are present, or in a case where a specific peak selected from the group consisting of the first peak, the second peak, and the third peak is present, it is still more preferable that the intensity ratio of at least one specific peak is 2.0 or less, and it is particularly preferable that none of the first peak, the second peak, and the third peak are present.

In addition, from the viewpoint that the effect of the present invention is more excellent, it is preferable that the mass reduction rate in a case where the lithium-based solid electrolyte according to the third embodiment of the present invention is heated to 800°C is 20% to 40% by mass. Among the above, from the viewpoint that the effect of the present invention is more excellent, the mass reduction rate is more preferably 25% to 35% by mass.

The above-described characteristics are as described in the first embodiment, and the measuring method therefor is also as described in the first embodiment.

The bulk elastic modulus of the lithium-based solid electrolyte according to the third embodiment of the present invention is not particularly limited; however, it is preferably 45 GPa or less and more preferably 40 GPa or less from the viewpoint that the effect of the present invention is more excellent. The lower limit thereof is not particularly limited; however, it is preferably 5 GPa or more.

The above-described characteristics are as described in the first embodiment, and the measuring method therefor is also as described in the first embodiment.

It is noted that the suitable range of the bulk elastic modulus of the specific lithium tetraborate is also the same as the suitable range of the bulk elastic modulus of the lithium-based solid electrolyte according to the third embodiment of the present invention.

The median diameter (D50) of the lithium-based solid electrolyte according to the third embodiment of the present invention is not particularly limited; however, it is preferably 0.01 to 20 μm and more preferably 0.1 to 2.0 μm from the viewpoint that the effect of the present invention is more excellent.

In the above-described measuring method for the median diameter (D50), a particle image is acquired according to a flow-type particle image analysis method, the particle diameter distribution of the lithium-based solid electrolyte according to the third embodiment of the present invention is calculated, and the average particle diameter is analyzed from the obtained distribution. It is noted that the particle diameter corresponds to a circle-equivalent diameter.

In addition, it is preferable that the lithium-based solid electrolyte according to the third embodiment of the present invention satisfies the following requirement X from the viewpoint that the effect of the present invention is more excellent. The following requirement X is the same as the requirement X defined in a fourth embodiment described later, which will be described in detail later.

The requirement X: In a reduced two-body distribution function G(r) of the lithium-based solid electrolyte obtained from an X-ray total scattering measurement, a first peak of which a peak top is located in a range where r is 1.43 $\pm$ 0.2 Å and a second peak of which a peak top is located in a range where r is 2.40 $\pm$ 0.2 Å are present, and G(r) of the peak top of the first peak indicates more than 1.0 (preferably, 1.2 or more), and G(r) of the peak top of the second peak indicate 0.8 or more (preferably, more than 1.0).

In addition, it is preferable that the lithium-based solid electrolyte according to the third embodiment of the present invention satisfies the following requirement Y from the viewpoint that the effect of the present invention is more excellent. The following requirement Y is the same as the requirement Y defined in a fourth embodiment described later, which will be described in detail later.

The requirement Y: In an X-ray diffraction pattern of the lithium-based solid electrolyte obtained from an X-ray diffraction measurement using a CuK$\alpha$ ray,

in a case where none of a first peak of which a peak top is located in a range of 21.6° to 22.0° and a full width at half maximum is 0.65° or less, a second peak of which a peak top is located in a range of 25.4° to 25.8° and a full width at half maximum is 0.65° or less, a third peak of which a peak top is located in a range of 33.4° to 33.8° and a full width at half maximum is 0.65° or less, and a fourth peak of which a peak top is located in a range of 34.4° to 34.8° and a full width at half maximum is 0.65° or less are present, or

in a case where at least one specific peak selected from the group consisting of the first peak, the second peak, the third peak, and the fourth peak is present in the X-ray diffraction pattern,

an intensity ratio of at least the one of the specific peak, which is calculated according to the following intensity measuring method, is 5.0 or less.

The intensity measuring method: An average intensity 1 in a range of +0.45° to +0.55° from a diffraction angle 2$\theta$ of the peak top of the specific peak is calculated, an average intensity 2 in a range of -0.55° to -0.45° from the diffraction angle 2$\theta$ of the peak top of the specific peak is calculated, an arithmetic mean value of the average intensity 1 and the average intensity 2 is calculated, and a ratio of a peak intensity at the peak top of the specific peak to the arithmetic mean value is defined as the intensity ratio.

In the X-ray diffraction pattern of the lithium-based solid electrolyte according to the third embodiment obtained from the X-ray diffraction measurement using the CuK$\alpha$ ray, in a case where none of the first peak, the second peak, the third peak, and the third peak are present, or a specific peak selected from the group consisting of the first peak, the second peak, the third peak, and the fourth peak is present, the intensity ratio of at least one specific peak is more preferably 3.0 or less. Among the above, in a case where none of the first peak, the second peak, the third peak, and the fourth peak are present, or a specific peak selected from the group consisting of the first peak, the second peak, the third peak, and the fourth peak is present, the intensity ratio of at least one specific peak is still more preferably 2.0 or less.

(Another aspect)

It is noted that in the above description, although an aspect in which the specific lithium tetraborate is used in the third embodiment has been described, lithium tetraborate in a noncrystalline state may be used in the third embodiment, instead of the specific lithium tetraborate. That is, in the lithium-based solid electrolyte according to the third embodiment of the present invention, an aspect in which lithium tetraborate in a noncrystalline state, water, and a lithium salt is included may be adopted.

The lithium tetraborate in a noncrystalline state means lithium tetraborate that satisfies at least one of the requirement S1, the requirement S2, or the requirement S3.

The requirement S1 is a requirement that is evaluated according to the same procedure as in the requirement W described above, except that the lithium tetraborate in a noncrystalline state is used as a measurement target, and the evaluation method therefor is as described above.

In addition, the requirement S2 is a requirement that is evaluated according to the same procedure as in the requirement T described above, except that the lithium tetraborate in a noncrystalline state is used as a measurement target, and the evaluation method therefor is as described above.

Further, the requirement S3 is a requirement that is evaluated according to the same procedure as in the requirement Y for a fourth embodiment described later, except that the lithium tetraborate in a noncrystalline state is used as a measurement target for the requirement Y for a fourth embodiment described later, and the evaluation method therefor is described in the requirement Y described later.

The requirement S1: In a reduced two-body distribution function G(r) of the lithium tetraborate in a noncrystalline state obtained from an X-ray total scattering measurement, a first peak in which a peak top is located in a range where r is 1.43 $\pm$ 0.2 Å and a second peak in which a peak top is located in a range where r is 2.40 $\pm$ 0.2 Å are present, G(r) of the peak top of the first peak and G(r) of the peak top of the second peak indicate more than 1.0, and an absolute value of G(r) is less than 1.0 in a range where r is more than 5 Å and 10 Å or less.

The requirement S2: In a Raman spectrum of the lithium tetraborate in a noncrystalline state,

in a case where none of a first peak having a peak top at 710 to 730 $cm^{-1}$ and having a full width at half maximum of 5 $cm^{-1}$ or more, a second peak having a peak top at 770 to 790 $cm^{-1}$ and having a full width at half maximum of 5 $cm^{-1}$ or more, and a third peak having a peak top at 1,020 to 1,040 $cm^{-1}$ and having a full width at half maximum of 5 $cm^{-1}$ or more are present, or

in a case where at least one specific peak selected from the group consisting of the first peak, the second peak, and the third peak is present in the Raman spectrum,

an intensity ratio of at least the one of the specific peak, which is calculated according to the following intensity measuring method, is 5.0 or less.

The intensity measuring method: A point at which the minimum value M1 of the Raman intensity in a wave number range of 400 to 600 $cm^{-1}$ of the Raman spectrum is exhibited and a point at which the minimum value M2 of the Raman intensity in a wave number range of 1,300 to 1,500 $cm^{-1}$ of the Raman spectrum is exhibited are connected to obtain a straight line. Then, in the range from a wave number at which the minimum value M1 is exhibited to a wave number at which the minimum value M2 is exhibited, the average difference value between the Raman intensity of the straight line and the Raman intensity of the Raman spectrum is calculated at each wave number in a range other than the ranges of 710 to 730 $cm^{-1}$, 770 to 790 $cm^{-1}$, and 1,020 to 1,040 $cm^{-1}$, the absolute value of the difference between the Raman intensity of the peak at a wave number at which the peak top of the specific peak is exhibited and the Raman intensity of the straight line is calculated, and the ratio of the absolute value of the difference to the average difference value is defined as the intensity ratio.

The requirement S3: In an X-ray diffraction pattern of the lithium tetraborate in a noncrystalline state obtained from an X-ray diffraction measurement using a CuKα ray,

in a case where none of a first peak of which a peak top is located in a range of 21.6° to 22.0° and a full width at half maximum is 0.65° or less, a second peak of which a peak top is located in a range of 25.4° to 25.8° and a full width at half maximum is 0.65° or less, a third peak of which a peak top is located in a range of 33.4° to 33.8° and a full width at half maximum is 0.65° or less, and a fourth peak of which a peak top is located in a range of 34.4° to 34.8° and a full width at half maximum is 0.65° or less are present, or

in a case where at least one specific peak selected from the group consisting of the first peak, the second peak, the third peak, and the fourth peak is present in the X-ray diffraction pattern,

an intensity ratio of at least the one of the specific peak, which is calculated according to the following intensity measuring method, is 5.0 or less.

The intensity measuring method: An average intensity 1 in a range of +0.45° to +0.55° from a diffraction angle 2θ of the peak top of the specific peak is calculated, an average intensity 2 in a range of -0.55° to -0.45° from the diffraction angle 2θ of the peak top of the specific peak is calculated, an arithmetic mean value of the average intensity 1 and the average intensity 2 is calculated, and a ratio of a peak intensity at the peak top of the specific peak to the arithmetic mean value is defined as the intensity ratio.

In the Raman spectrum of the lithium tetraborate in a noncrystalline state in the Requirement S2, in a case where none of the first peak, the second peak, and the third peak are present, or in a case where a specific peak selected from the group consisting of the first peak, the second peak, and the third peak is present, the intensity ratio of at least one specific peak is more preferably 3.0 or less. Among the above, in a case where none of the first peak, the second peak, and the third peak are present, or in a case where a specific peak selected from the group consisting of the first peak, the second peak, and the third peak is present, it is still more preferable that the intensity ratio of at least one specific peak is 2.0 or less, and it is particularly preferable that none of the first peak, the second peak, and the third peak are present.

In the X-ray diffraction pattern of the specific lithium tetraborate obtained from the X-ray diffraction measurement using the CuKα ray in the requirement S3, in a case where none of the first peak, the second peak, the third peak, and the third peak are present, or a specific peak selected from the group consisting of the first peak, the second peak, the third peak, and the fourth peak is present, the intensity ratio of at least one specific peak is more preferably 3.0 or less. Among the above, in a case where none of the first peak, the second peak, the third peak, and the fourth peak are present, or a specific peak selected from the group consisting of the first peak, the second peak, the third peak, and the fourth peak is present, the intensity ratio of at least one specific peak is still more preferably 2.0 or less.

It is noted that in the X-ray diffraction pattern of the requirement S3, in a case where two or more peaks of which a peak top is located in a range of 21.6° to 22.0° and a full width at half maximum is 0.65° or less are present, a peak having the highest diffracted X-ray intensity is selected as the first peak, and the determination of the requirement S3 is carried out.

In addition, in the X-ray diffraction pattern of the requirement S3, in a case where two or more peaks of which a peak top is located in a range of 25.4° to 25.8° and a full width at half maximum is 0.65° or less are present, a peak having the highest diffracted X-ray intensity is selected as the second peak, and the determination of the requirement S3 is carried out.

In addition, in the X-ray diffraction pattern of the requirement S3, in a case where two or more peaks of which a peak top is located in a range of 33.4° to 33.8° and a full width at half maximum is 0.65° or less are present, a peak having the highest diffracted X-ray intensity is selected as the third peak, and the determination of the requirement S3 is carried out.

In addition, in the X-ray diffraction pattern of the requirement S3, in a case where two or more peaks of which a peak top is located in a range of 34.4° to 34.8° and a full width at half maximum is 0.65° or less are present, a peak having the highest diffracted X-ray intensity is selected as the fourth peak, and the determination of the requirement S3 is carried out.

It is noted that in the lithium-based solid electrolyte containing lithium tetraborate in a noncrystalline state, water, and a lithium salt, the relationship between the content of the lithium tetraborate in a noncrystalline state and the contents of other components (for example, water and a lithium salt) satisfies the same content relationship as in the case where the specific lithium tetraborate described above is used. That is, the molar ratio of the lithium salt to the lithium tetraborate in a noncrystalline state is preferably 0.001 to 1.5, and the molar ratio of the water to the lithium tetraborate in a noncrystalline state is preferably 3 to 15, where the suitable ranges of the molar ratios are the same as the respective suitable ranges of the molar ratio of the lithium salt to the specific lithium tetraborate described above and the molar ratio of the water to the lithium tetraborate in a noncrystalline state.

In addition, it is preferable that the lithium-based solid electrolyte containing lithium tetraborate in a noncrystalline state, water, and a lithium salt exhibits various characteristics described in the third embodiment using the specific lithium tetraborate described above. Specific examples of the various characteristics include the following items described above, and the suitable ranges thereof are as described above.

· The proportion of a full width at half maximum of a peak in which a chemical shift appears in a range of -100 to +100 ppm in a spectrum obtained in a case where a solid $^7$Li-NMR measurement of the lithium-based solid electrolyte is carried out at 120°C, with respect to a full width at half maximum of a peak in which a chemical shift appears in a range of -100 to +100 ppm in a spectrum obtained in a case where the solid $^7$Li-NMR measurement of the obtained lithium-based solid electrolyte is carried out at 20°C.

· The ratio of an area intensity of a second peak to an area intensity of a first peak in a spectrum obtained by carrying out a solid $^7$Li-NMR measurement of the lithium-based solid electrolyte at 20°C, where the lithium-based solid electrolyte has the second peak having a full width at half maximum of 5 ppm or less in a range where a chemical shift is -3 to 3 ppm in a case where the first peak appearing in a range of -100 to +100 ppm is subjected to waveform separation

· The ratio of the maximum absorption intensity in a wave number range of 3,000 to 3,500 $cm^{-1}$ to the maximum absorption intensity in a wave number range of 800 to 1,600 $cm^{-1}$ in an infrared absorption spectrum of the lithium-based solid electrolyte.

· The coefficient of determination that is obtained by carrying out a linear regression analysis according to a least squares method in a wave number range of 600 to 850 $cm^{-1}$ in a Raman spectrum of the lithium-based solid electrolyte

· The mass reduction rate in a case where the lithium-based solid electrolyte has been heated to 800°C

· The bulk elastic modulus of the lithium-based solid electrolyte

· The median diameter (D50) of the lithium-based solid electrolyte

In addition, it is preferable that the lithium-based solid electrolyte containing lithium tetraborate in a noncrystalline state, water, and a lithium salt satisfies at least one of the requirement X, the requirement Y, or the requirement T similarly to the above-described lithium-based solid electrolyte containing the specific lithium tetraborate.

It is noted that in the X-ray diffraction pattern obtained from the X-ray diffraction measurement using the CuKα ray in the requirement Y that is satisfied by the lithium-based solid electrolyte containing the lithium tetraborate in a noncrystalline state, in a case where none of the first peak, the second peak, the fourth peak, and the third peak are present, or a specific peak selected from the group consisting of the first peak, the second peak, the third peak, and the fourth peak is present, the intensity ratio of at least one specific peak is more preferably 3.0 or less. Among the above, in a case where none of the first peak, the second peak, the third peak, and the fourth peak are present, or a specific peak selected from the group consisting of the first peak, the second peak, the third peak, and the fourth peak is present, the intensity ratio of at least one specific peak is still more preferably 2.0 or less.

It is noted that in the Raman spectrum in the requirement T that is satisfied by the lithium-based solid electrolyte containing the lithium tetraborate in a noncrystalline state, in a case where none of the first peak, the second peak, and the third peak are present, or in a case where a specific peak selected from the group consisting of the first peak, the second peak, and the third peak is present, the intensity ratio of at least one specific peak is more preferably 3.0 or less. Among the above, in a case where none of the first peak, the second peak, and the third peak are present, or in a case where a specific peak selected from the group consisting of the first peak, the second peak, and the third peak is present, it is still more preferable that the intensity ratio of at least one specific peak is 2.0 or less, and it is particularly preferable that none of the first peak, the second peak, and the third peak are present.

<<Fourth embodiment>>

The lithium-based solid electrolyte according to the fourth embodiment of the present invention contains Li, B, and O, and satisfies all of the requirements X to Z.

Hereinafter, the requirements X to Z will be described in detail.

The lithium-based solid electrolyte according to the fourth embodiment of the present invention satisfies the following requirement X.

The requirement X: In a reduced two-body distribution function G(r) of the lithium-based solid electrolyte obtained from an X-ray total scattering measurement, a first peak of which a peak top is located in a range where r is 1.43 ± 0.2 Å and a second peak of which a peak top is located in a range where r is 2.40 ± 0.2 Å are present, and G(r) of the peak top of the first peak indicates more than 1.0 (preferably, 1.2 or more), and G(r) of the peak top of the second peak indicate 0.8 or more (preferably, more than 1.0).

The requirement X corresponds to a part of the requirement of the requirement W described above, and the technical meaning thereof means that as described above, periodic structures corresponding to the interatomic distance of boron (B) -O (oxygen) and the interatomic distance of boron (B) -boron (B) are present in the lithium-based solid electrolyte.

It is noted that the requirement X is different from the requirement W in that G(r) of the peak top of the second peak is 0.8 or more. In the requirement X, as described above, G(r) of the peak top of the first peak is preferably 1.2 or more, and G(r) of the peak top of the second peak is preferably more than 1.0.

The measuring method for the requirement X is as described in the requirement W described above.

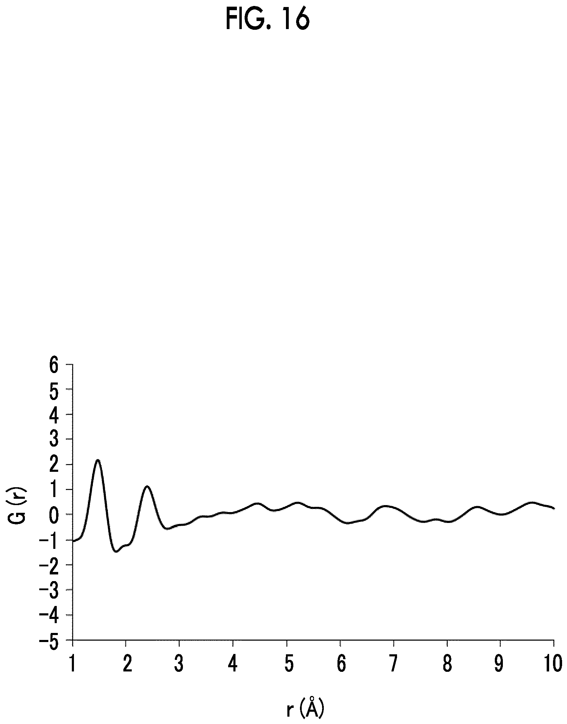

It is noted that Fig. 16 shows an example of a reduced two-body distribution function G(r) obtained from the X-ray total scattering measurement of a lithium-based solid electrolyte according to a fourth embodiment of the present invention.

The lithium-based solid electrolyte according to the fourth embodiment of the present invention satisfies the following requirement Y

The requirement Y: In an X-ray diffraction pattern of the lithium-based solid electrolyte obtained from an X-ray diffraction measurement using a CuKα ray,

in a case where none of a first peak of which a peak top is located in a range of 21.6° to 22.0° and a full width at half maximum is 0.65° or less, a second peak of which a peak top is located in a range of 25.4° to 25.8° and a full width at half maximum is 0.65° or less, a third peak of which a peak top is located in a range of 33.4° to 33.8° and a full width at half maximum is 0.65° or less, and a fourth peak of which a peak top is located in a range of 34.4° to 34.8° and a full width at half maximum is 0.65° or less are present, or

in a case where at least one specific peak selected from the group consisting of the first peak, the second peak, the third peak, and the fourth peak is present in the X-ray diffraction pattern,

an intensity ratio of at least the one of the specific peak, which is calculated according to the following intensity measuring method, is 5.0 or less.

The intensity measuring method: An average intensity 1 in a range of +0.45° to +0.55° from a diffraction angle 2θ of the peak top of the specific peak is calculated, an average intensity 2 in a range of -0.55° to -0.45° from the diffraction angle 2θ of the peak top of the specific peak is calculated, an arithmetic mean value of the average intensity 1 and the average intensity 2 is calculated, and a ratio of a peak intensity at the peak top of the specific peak to the arithmetic mean value is defined as the intensity ratio.

Hereinafter, the requirement Y will be described.

First, in an X-ray diffraction pattern of the lithium-based solid electrolyte obtained from an X-ray diffraction measurement using a CuKα ray, the requirement Y is satisfied in a case where none of a first peak of which a peak top is located in a range of 21.6° to 22.0° and a full width at half maximum is 0.65° or less, a second peak of which a peak top is located in a range of 25.4° to 25.8° and a full width at half maximum is 0.65° or less, a third peak of which a peak top is located in a range of 33.4° to 33.8° and a full width at half maximum is 0.65° or less, and a fourth peak of which a peak top is located in a range of 34.4° to 34.8° and a full width at half maximum is 0.65° or less are present.

The full width at half maximum (FWHM) of the peak means the width (°) at a point of 1/2 of the intensity of the peak.

In addition, in an X-ray diffraction pattern of the lithium-based solid electrolyte obtained from an X-ray diffraction measurement using a CuKα ray, in a case where at least one specific peak selected from the group consisting of the first peak, the second peak, the third peak, and the fourth peak is present in the X-ray diffraction pattern, the requirement Y is satisfied even in a case where an intensity ratio of at least the one of the specific peak, which is calculated according to an intensity measuring method described later, is 5.0 or less.

Hereinafter, the intensity measuring method will be described with reference to Fig. 11.

Fig. 11 is a graph showing an example of a specific peak that appears in a diffraction pattern of the lithium-based solid electrolyte according to the fourth embodiment, where the diffraction pattern is obtained from an X-ray diffraction measurement using a CuKα ray. In the diffraction pattern shown in Fig. 11, a specific peak in which the intensity of the peak top exhibits an intensity 1 is shown. In the intensity measuring method, as shown in Fig. 11, an average intensity 1 in a range of +0.45° to +0.55° from the diffraction angle 2θ of the peak top of the specific peak is calculated, and furthermore, an average intensity 2 in a range of -0.55° to -0.45° from the diffraction angle 2θ of the peak top of the specific peak is calculated. Next, the arithmetic mean value of the average intensity 1 and the average intensity 2 is calculated, and the ratio of the intensity 1 to the arithmetic mean value is determined as the intensity ratio.

A case where the requirement Y is satisfied means that the crystal structure is not present or almost not present in the lithium-based solid electrolyte, and the lithium-based solid electrolyte is in a noncrystalline state.

That is, the first peak to the fourth peak described in the requirement Y are peaks mainly derived from the crystal structure (particularly, the crystal structure of lithium tetraborate) in the lithium-based solid electrolyte, and it is presumed that in a case where this peak is not present, the lithium-based solid electrolyte does not have a predetermined crystal structure and is in a noncrystalline state, and thus a hydrated layer having excellent ionic conductivity is easily formed as described above. In addition, it is presumed that the fact that the intensity ratio of any one of the existing specific peaks is equal to or smaller than a predetermined value even in a case where at least one of the first peak, the second peak, the fourth peak, or the third peak is present indicates that the lithium-based solid electrolyte has almost no crystal structure, and a hydrated layer having excellent ionic conductivity is easily formed as described above. It is noted that in the lithium-based solid electrolyte, a peak due to another factor may be generated in addition to the peak derived from a predetermined crystal structure such as the crystal structure of lithium tetraborate mentioned as an example. Examples of the peak due to another factor include a peak derived from a specific component (for example, a lithium salt), and such a peak may overlap with the above-described first peak to fourth peak. In a case where a noncrystalline state, which is presumed to make it possible to form a hydrated layer having excellent ionic conductivity, is achieved, all of the first peak to the fourth peak are reduced in a large number of cases, and even in a case where a peak due to another factor happens to overlap with any one of the first peak to the fourth peak, and thus one large peak appears, it can be said that the presence of the specific peak in which the intensity ratio is equal to or smaller than the predetermined value indicates that the lithium-based solid electrolyte is in a noncrystalline state which is presumed to make it possible to form a hydrated layer having excellent ionic conductivity.

The above-described X-ray diffraction measurement is carried out using a CuKα ray under measurement conditions of 0.01 °/step and 3 °/min.

In the X-ray diffraction pattern of the lithium-based solid electrolyte according to the fourth embodiment obtained from the X-ray diffraction measurement using the CuKα ray, in a case where none of the first peak, the second peak, the third peak, and the fourth peak are present, or a specific peak selected from the group consisting of the first peak, the second peak, the third peak, and the third peak is present, the intensity ratio of at least one specific peak is more preferably 3.0 or less. Among the above, in a case where none of the first peak, the second peak, the third peak, and the fourth peak are present, or a specific peak selected from the group consisting of the first peak, the second peak, the third peak, and the fourth peak is present, the intensity ratio of at least one specific peak is still more preferably 2.0 or less.

It is noted that in the X-ray diffraction pattern of the requirement Y, in a case where two or more peaks of which a peak top is located in a range of 21.6° to 22.0° and a full width at half maximum is 0.65° or less are present, a peak having the highest diffracted X-ray intensity is selected as the first peak, and the determination of the requirement Y is carried out.

In addition, in the X-ray diffraction pattern of the requirement Y, in a case where two or more peaks of which a peak top is located in a range of 25.4° to 25.8° and a full width at half maximum is 0.65° or less are present, a peak having the highest diffracted X-ray intensity is selected as the second peak, and the determination of the requirement Y is carried out.

In addition, in the X-ray diffraction pattern of the requirement Y, in a case where two or more peaks of which a peak top is located in a range of 33.4° to 33.8° and a full width at half maximum is 0.65° or less are present, a peak having the highest diffracted X-ray intensity is selected as the third peak, and the determination of the requirement Y is carried out.

In addition, in the X-ray diffraction pattern of the requirement Y, in a case where two or more peaks of which a peak top is located in a range of 34.4° to 34.8° and a full width at half maximum is 0.65° or less are present, a peak having the highest diffracted X-ray intensity is selected as the fourth peak, and the determination of the requirement Y is carried out.

The lithium-based solid electrolyte according to the fourth embodiment of the present invention satisfies the following requirement Z.

The requirement Z: In an infrared absorption spectrum of the lithium-based solid electrolyte according to the fourth embodiment, a ratio of a maximum absorption intensity in a wave number range of 3,000 to 3,500 $cm^{-1}$ to a maximum absorption intensity in a wave number range of 800 to 1,600 $cm^{-1}$ is 1/5 or more.

The characteristics of the requirement Z are the same as those described in the first embodiment, and the suitable range thereof and the measuring method therefor are also as described above.

In the lithium-based solid electrolyte according to the fourth embodiment of the present invention, the molar amount of Li is preferably 1.58 to 3.49 in a case where the molar amount of Li is indicated by setting the molar amount of B in the lithium-based solid electrolyte to 4.00. That is, in a case where the molar content amount of B is set to 4.00, the relative value of the molar content amount of Li is preferably 1.58 to 3.49.

Among the above, from the viewpoint that the effect of the present invention is more excellent, the molar amount of Li is more preferably 1.58 to 3.00, still more preferably 1.90 to 3.00, and particularly preferably 2.00 to 3.00 in a case where the molar amount of Li is indicated by setting the molar amount of B in the lithium-based solid electrolyte to 4.00.

In the lithium-based solid electrolyte according to the fourth embodiment of the present invention, the molar amount of O is preferably 6.23 to 25.00 in a case where the molar amount of O is indicated by setting the molar amount of B in the lithium-based solid electrolyte to 4.00. That is, in a case where the molar content amount of B is set to 4.00, the relative value of the molar content amount of O is preferably 6.23 to 25.00.

Among the above, from the viewpoint that the effect of the present invention is more excellent, the molar amount of O is more preferably 10.00 to 23.00 in a case where the molar amount of O is indicated by setting the molar amount of B in the lithium-based solid electrolyte to 4.00.

The lithium-based solid electrolyte according to the fourth embodiment of the present invention preferably contains one or more specific elements selected from the group consisting of F, Cl, Br, I, S, P, Si, Se, Te, C, Sb, As, Sc, Y, Zr, Ti, Hf, H, and N, and more preferably contains two or more thereof.

In the lithium-based solid electrolyte according to the fourth embodiment of the present invention, the molar amount of each of the specific elements is preferably 0.001 to 10.00 in a case where the molar amount of the specific element is indicated by setting the molar amount of B in the lithium-based solid electrolyte to 4.00. That is, in a case where the molar content amount of B is set to 4.00, the relative value of the molar content amount of each of the specific elements is preferably 0.001 to 10.00.

Among the above, from the viewpoint that the effect of the present invention is more excellent, the molar amount of each of the specific elements is more preferably 0.001 to 6.0 and still more preferably 0.01 to 5.0 in a case where the molar amount of the specific element is indicated by setting the molar amount of B in the lithium-based solid electrolyte to 4.00.

As described above, in the lithium-based solid electrolyte according to the fourth embodiment of the present invention, two or more kinds of specific elements are preferably contained. Therefore, for example, in a case where the lithium-based solid electrolyte according to the fourth embodiment of the present invention contains two specific elements, that is, the specific element A and the specific element B which is an element different from the specific element A in terms of kind, the molar amount of the specific element A and the molar amount of the specific element B are each preferably 0.001 to 10.00 in a case where the molar amount of B in the lithium-based solid electrolyte is set to 4.00. In addition, for example, in a case where the lithium-based solid electrolyte according to the fourth embodiment of the present invention contains three specific elements, that is, the specific element A, the specific element B which is an element different from the specific element A in terms of kind, and a specific element C which is an element different from the specific elements A and B in terms of kind, the molar amount of the specific element A, the molar amount of the specific element B, and the molar amount of the specific element C are each preferably 0.001 to 10.00 in a case where the molar amount of B in the lithium-based solid electrolyte is set to 4.00.

The contents of Li, B, and the specific elements in the lithium-based solid electrolyte according to the fourth embodiment of the present invention are specified according to known element analysis. Regarding methods for element analysis, for example, Li and B are analyzed according to inductively coupled plasma optical emission spectrometry (ICP-OES), N or the like, which is one of the specific elements, is analyzed according to an inert gas melting method to specify, and F or S, which is one of the specific elements, is analyzed according to combustion ion chromatography. The content of O can be calculated as a difference between an amount obtained by adding together analytical masses of elements other than O, and the total amount of the powder. It is noted that the method of calculating the content of each element is not limited to those described above, and from an analysis result of a content of one kind of element, a content of another element may be estimated in consideration of structures of compounds to be used.

The molar amounts of Li, O, and the specific elements in a case where the molar amount of B is set to 4.00 are calculated from the content of each element, which is calculated according to the element analysis.

One of the suitable aspects of the composition of the lithium-based solid electrolyte according to the fourth embodiment of the present invention includes a lithium-based solid electrolyte containing Li, B, O, F, S, and N, in which in a case where the molar amount of B is set to 4.00, the molar amount of Li is 1.58 to 3.49 (preferably 1.58 to 3.00), the molar amount of O is 6.23 to 25.00, the molar amount of F is 0.001 to 10.00, the molar amount of S is 0.001 to 2.00, and the molar amount of N is 0.001 to 1.00.

The suitable range of the molar ratio is as described above.

It is noted that the lithium-based solid electrolyte according to the fourth embodiment of the present invention may contain another element in addition to Li, B, O, and the specific elements.

A production method for the lithium-based solid electrolyte according to the fourth embodiment of the present invention will be described in detail later. However, it is preferable that the lithium-based solid electrolyte according to the embodiment of the present invention is produced by a production method including a mechanical milling treatment. For example, in a case where a raw material (for example, a lithium-based oxide containing Li and B) of the lithium-based solid electrolyte according to the fourth embodiment of the present invention is subjected to a mechanical milling treatment, it is presumed that a crystalline component in the raw material can be non-crystalized, and as a result, a hydrated layer having excellent ionic conductivity is easily formed.

Further, from the viewpoint that the effect of the present invention is more excellent, the proportion of a full width at half maximum of a peak in which a chemical shift appears in a range of -100 to +100 ppm in a spectrum obtained in a case where a solid $^7$Li-NMR measurement of the lithium-based solid electrolyte according to the fourth embodiment of the present invention is carried out at 120°C is preferably 50% or less, more preferably 40% or less, and still more preferably 35% or less, with respect to a full width at half maximum of a peak in which a chemical shift appears in a range of -100 to +100 ppm in a spectrum obtained in a case where the solid $^7$Li-NMR measurement of the lithium-based solid electrolyte according to the fourth embodiment of the present invention is carried out at 20°C. The lower limit thereof is not particularly limited; however, it is 10% or more in a large number of cases.

The full width at half maximum (FWHM) of the peak means the width (ppm) at a point (H/2) of 1/2 of the height (H) of the peak.

The above-described characteristics are as described in the first embodiment, and the measuring method therefor is also as described in the first embodiment.

In addition, from the viewpoint that the effect of the present invention is more excellent, it is preferable that in a spectrum obtained by carrying out a solid $^7$Li-NMR measurement of the lithium-based solid electrolyte according to the fourth embodiment of the present invention at 20°C, in a case where a first peak appearing in a range of -100 to +100 ppm is subjected to waveform separation, the lithium-based solid electrolyte has a second peak having a full width at half maximum of 5 ppm or less in a range where a chemical shift is -3 to 3 ppm, and a ratio of an area intensity of the second peak to an area intensity of the first peak is 0.5% or more. The ratio of the area intensity is more preferably 2% or more and still more preferably 15% or more. The upper limit of the ratio of the area intensity is not particularly limited; however, it is 50% or less in a large number of cases.

The above-described characteristics are as described in the first embodiment, and the measuring method therefor is also as described in the first embodiment.

In addition, from the viewpoint that the effect of the present invention is more excellent, it is preferable that a coefficient of determination is 0.9400 or more, where the coefficient of determination is obtained by carrying out a linear regression analysis according to a least squares method in a wave number range of 600 to 850 cm$^{-1}$ in a Raman spectrum of the lithium-based solid electrolyte according to the fourth embodiment of the present invention.

The coefficient of determination is more preferably 0.9600 or more from the viewpoint that the effect of the present invention is more excellent. The upper limit thereof is not particularly limited; however, it is, for example, 1.0000.

The above-described characteristics are as described in the first embodiment, and the measuring method therefor is also as described in the first embodiment.

In addition, from the viewpoint that the effect of the present invention is more excellent, it is preferable that the lithium-based solid electrolyte according to the fourth embodiment of the present invention satisfies a requirement T.

The following requirement T is the same as the requirement T defined in the first embodiment described above, and the measuring method therefor is also as described in the first embodiment.

The requirement T: In a Raman spectrum of a lithium-based solid electrolyte,

in a case where none of a first peak having a peak top at 710 to 730 cm$^{-1}$ and having a full width at half maximum of 5 cm$^{-1}$ or more, a second peak having a peak top at 770 to 790 cm$^{-1}$ and having a full width at half maximum of 5 cm$^{-1}$ or more, and a third peak having a peak top at 1,020 to 1,040 cm$^{-1}$ and having a full width at half maximum of 5 cm$^{-1}$ or more are present, or

in a case where at least one specific peak selected from the group consisting of the first peak, the second peak, and the third peak is present in the Raman spectrum,

an intensity ratio of at least the one of the specific peak, which is calculated according to the following intensity measuring method, is 5.0 or less.

The intensity measuring method: A point at which the minimum value M1 of the Raman intensity in a wave number range of 400 to 600 $cm^{-1}$ of the Raman spectrum is exhibited and a point at which the minimum value M2 of the Raman intensity in a wave number range of 1,300 to 1,500 $cm^{-1}$ of the Raman spectrum is exhibited are connected to obtain a straight line. Then, in the range from a wave number at which the minimum value M1 is exhibited to a wave number at which the minimum value M2 is exhibited, the average difference value between the Raman intensity of the straight line and the Raman intensity of the Raman spectrum is calculated at each wave number in a range other than the ranges of 710 to 730 $cm^{-1}$, 770 to 790 $cm^{-1}$, and 1,020 to 1,040 $cm^{-1}$, the absolute value of the difference between the Raman intensity of the peak at a wave number at which the peak top of the specific peak is exhibited and the Raman intensity of the straight line is calculated, and the ratio of the absolute value of the difference to the average difference value is defined as the intensity ratio.

In the Raman spectrum of the lithium-based solid electrolyte, in a case where none of the first peak, the second peak, and the third peak are present, or in a case where a specific peak selected from the group consisting of the first peak, the second peak, and the third peak is present, the intensity ratio of at least one specific peak is more preferably 3.0 or less. Among the above, in a case where none of the first peak, the second peak, and the third peak are present, or in a case where a specific peak selected from the group consisting of the first peak, the second peak, and the third peak is present, it is still more preferable that the intensity ratio of at least one specific peak is 2.0 or less, and it is particularly preferable that none of the first peak, the second peak, and the third peak are present.

In addition, from the viewpoint that the effect of the present invention is more excellent, it is preferable that the mass reduction rate in a case where the lithium-based solid electrolyte according to the fourth embodiment of the present invention is heated to 800°C is 20% to 40% by mass. Among the above, from the viewpoint that the effect of the present invention is more excellent, the mass reduction rate is more preferably 25% to 35% by mass.

The above-described characteristics are as described in the first embodiment, and the measuring method therefor is also as described in the first embodiment.

The bulk elastic modulus of the lithium-based solid electrolyte according to the fourth embodiment of the present invention is not particularly limited; however, it is preferably 45 GPa or less and more preferably 40 GPa or less from the viewpoint that the effect of the present invention is more excellent. The lower limit thereof is not particularly limited; however, it is preferably 5 GPa or more.

The above-described characteristics are as described in the first embodiment, and the measuring method therefor is also as described in the first embodiment.

The median diameter (D50) of the lithium-based solid electrolyte according to the fourth embodiment of the present invention is not particularly limited; however, it is preferably 0.01 to 20 $\mu$m and more preferably 0.1 to 2.0 $\mu$m from the viewpoint that the effect of the present invention is more excellent.

In the above-described measuring method for the median diameter (D50), a particle image is acquired according to a flow-type particle image analysis method, the particle diameter distribution of the lithium-based solid electrolyte according to the fourth embodiment of the present invention is calculated, and the average particle diameter is analyzed from the obtained distribution. It is noted that the particle diameter corresponds to a circle-equivalent diameter.

«Fifth embodiment»

The lithium-based solid electrolyte according to the fifth embodiment of the present invention contains LiBsOs, $Li_3B_{11}O_{18}$, or $Li_3B_7O_{12}$, in a noncrystalline state; water; and a lithium salt.

Hereinafter, each component will be described in detail.

(LiBsOs, $Li_3B_{11}O_{18}$, or $Li_3B_7O_{12}$, in a noncrystalline state (hereinafter, also referred to as "specific boric acid compound"))

The lithium-based solid electrolyte according to the fifth embodiment of the present invention contains LiBsOs, $Li_3B_{11}O_{18}$, or $Li_3B_7O_{12}$, in a noncrystalline state.

The compound represented by LiBsOs is a compound mainly composed of Li, B, and O; however, in the present invention, it may deviate from the above standard value. More specifically, it is preferably a compound represented by $Li_{1+x}B_{3+y}O_{5+z}$ (-0.3 < x < 0.3, -0.3 < y < 0.3, and -0.3 < z < 0.3).

The compound represented by $Li_3B_{11}O_{18}$ is a compound mainly composed of Li, B, and O; however, in the present invention, it may deviate from the above standard value. More specifically, it is preferably a compound represented by $Li_{3+x}B_{11+y}O_{18+z}$ (-0.3 < x < 0.3, -0.3 < y < 0.3, and -0.3 < z < 0.3).

The compound represented by $Li_3B_7O_{12}$ is a compound mainly composed of Li, B, and O; however, in the present invention, it may deviate from the above standard value. More specifically, it is preferably a compound represented by $Li_{3+x}B_{7+y}O_{12+z}$ (-0.3 < x < 0.3, -0.3 < y < 0.3, and -0.3 < z < 0.3).

The $LiB_3O_5$ in a noncrystalline state means $LiB_3O_5$ that satisfies the following requirement Y2.

The requirement Y2: In an X-ray diffraction pattern of $LiB_3O_5$ obtained from an X-ray diffraction measurement using a CuK$\alpha$ ray,

in a case where none of a first peak of which a peak top is located in a range of 15.4° to 15.8° and a full width at half maximum is 0.65° or less, a second peak of which a peak top is located in a range of 23.4° to 23.8° and a full width at half maximum is 0.65° or less, a third peak of which a peak top is located in a range of 26.8° to 27.2° and a full width at half maximum is 0.65° or less, and a fourth peak of which a peak top is located in a range of 29.4° to 29.8° and a full width at half maximum is 0.65° or less are present, or

in a case where at least one specific peak selected from the group consisting of the first peak, the second peak, the third peak, and the fourth peak is present in the X-ray diffraction pattern,

an intensity ratio of at least the one of the specific peak, which is calculated according to the following intensity measuring method, is 5.0 or less.

The intensity measuring method: An average intensity 1 in a range of +0.45° to +0.55° from a diffraction angle 2θ of the peak top of the specific peak is calculated, an average intensity 2 in a range of -0.55° to -0.45° from the diffraction angle 2θ of the peak top of the specific peak is calculated, an arithmetic mean value of the average intensity 1 and the average intensity 2 is calculated, and a ratio of a peak intensity at the peak top of the specific peak to the arithmetic mean value is defined as the intensity ratio.

Among the above, in the requirement Y2, in the X-ray diffraction pattern of LiBsOs obtained from the X-ray diffraction measurement using the CuKα ray, in a case where none of the first peak, the second peak, the third peak, and the fourth peak are present, or a specific peak selected from the group consisting of the first peak, the second peak, the third peak, and the fourth peak is present, the intensity ratio of at least one specific peak is preferably 3.0 or less. Among the above, in a case where none of the first peak, the second peak, the third peak, and the fourth peak are present, or a specific peak selected from the group consisting of the first peak, the second peak, the third peak, and the fourth peak is present, the intensity ratio of at least one specific peak is more preferably 2.0 or less.

The $Li_3B_{11}O_{18}$ in a noncrystalline state means $Li_3B_{11}O_{18}$ that satisfies the following requirement Y3.

The requirement Y3: In an X-ray diffraction pattern of $Li_3B_{11}O_{18}$ obtained from an X-ray diffraction measurement using a CuKα ray,

in a case where none of a first peak of which a peak top is located in a range of 19.7° to 20.1° and a full width at half maximum is 0.65° or less, a second peak of which a peak top is located in a range of 22.3° to 22.7° and a full width at half maximum is 0.65° or less, and a third peak of which a peak top is located in a range of 27.3° to 27.7° and a full width at half maximum is 0.65° or less are present, or

in a case where at least one specific peak selected from the group consisting of the first peak, the second peak, and the third peak is present in the X-ray diffraction pattern,

an intensity ratio of at least the one of the specific peak, which is calculated according to the following intensity measuring method, is 5.0 or less.

The intensity measuring method: An average intensity 1 in a range of +0.45° to +0.55° from a diffraction angle 2θ of the peak top of the specific peak is calculated, an average intensity 2 in a range of -0.55° to -0.45° from the diffraction angle 2θ of the peak top of the specific peak is calculated, an arithmetic mean value of the average intensity 1 and the average intensity 2 is calculated, and a ratio of a peak intensity at the peak top of the specific peak to the arithmetic mean value is defined as the intensity ratio.

Among the above, in the requirement Y3, in the X-ray diffraction pattern of $Li_3B_{11}O_{18}$ obtained from the X-ray diffraction measurement using the CuKα ray, in a case where none of the first peak, the second peak, and the third peak are present, or a specific peak selected from the group consisting of the first peak, the second peak, and the third peak is present, the intensity ratio of at least one specific peak is preferably 3.0 or less. Among the above, in a case where none of the first peak, the second peak, and the third peak are present, or in a case where a specific peak selected from the group consisting of the first peak, the second peak, and the third peak is present, the intensity ratio of at least one specific peak is more preferably 2.0 or less.

The $Li_3B_7O_{12}$ in a noncrystalline state means $Li_3B_7O_{12}$ that satisfies the following requirement Y4.

The requirement Y4: In an X-ray diffraction pattern of $Li_3B_7O_{12}$ obtained from an X-ray diffraction measurement using a CuKα ray, in a case where a first peak of which a peak top is located in a range of 16.5° to 16.9° and a full width at half maximum is 0.65° or less is not present, or in a case where in the X-ray diffraction pattern, the first peak is present, an intensity ratio of at least one first peak, which is calculated according to the following intensity measuring method, is 5.0 or less.

The intensity measuring method: An average intensity 1 in a range of +0.45° to +0.55° from a diffraction angle 2θ of the peak top of the specific peak is calculated, an average intensity 2 in a range of -0.55° to -0.45° from the diffraction angle 2θ of the peak top of the specific peak is calculated, an arithmetic mean value of the average intensity 1 and the average intensity 2 is calculated, and a ratio of a peak intensity at the peak top of the specific peak to the arithmetic mean value is defined as the intensity ratio.

Among the above, in an X-ray diffraction pattern of $Li_3B_7O_{12}$ obtained from an X-ray diffraction measurement using a CuKα ray in the requirement Y4, in a case where the first peak is not present, or in a case where the first peak is present, the intensity ratio of the first peak is preferably 3.0 or less. Among the above, in a case where the first peak is not present, or in a case where the first peak is present, the intensity ratio of the first peak is more preferably 2.0 or less.

The requirements Y2 to Y4 can be calculated according to the same procedure, except that each of the above-described measurement target for the requirement Y is changed and the peak position to be detected is changed.

In the requirements Y2 to Y4, similarly to the requirement Y, in a case where a peak is not present, where the peak is derived from the crystal structure of the specific boric acid compound, it is presumed that the specific boric acid compound does not have a predetermined crystal structure but has a non-crystal structure, and thus a hydrated layer having excellent ionic conductivity is easily formed as described above. In addition, in the requirements Y2 to Y4, similarly to the requirement Y, even in a case where a specific peak is present, it is presumed that the fact that the intensity ratio of any one of the existing specific peaks is equal to or smaller than a predetermined value indicates that the specific boric acid compound has almost no crystal structure, and a hydrated layer having excellent ionic conductivity is easily formed as described above.

It is noted that in the X-ray diffraction pattern of the requirement Y2, in a case where two or more peaks of which a peak top is located in a range of 15.4° to 15.8° and a full width at half maximum is 0.65° or less are present, a peak having the highest diffracted X-ray intensity is selected as the first peak, and the determination of the requirement Y2 is carried out.

In addition, in the X-ray diffraction pattern of the requirement Y2, in a case where two or more peaks of which a peak top is located in a range of 23.4° to 23.8° and a full width at half maximum is 0.65° or less are present, a peak having the highest diffracted X-ray intensity is selected as the second peak, and the determination of the requirement Y2 is carried out.

In addition, in the X-ray diffraction pattern of the requirement Y2, in a case where two or more peaks of which a peak top is located in a range of 26.8° to 27.2° and a full width at half maximum is 0.65° or less are present, a peak having the highest diffracted X-ray intensity is selected as the third peak, and the determination of the requirement Y2 is carried out.

In addition, in the X-ray diffraction pattern of the requirement Y2, in a case where two or more peaks of which a peak top is located in a range of 29.4° to 29.8° and a full width at half maximum is 0.65° or less are present, a peak having the highest diffracted X-ray intensity is selected as the fourth peak, and the determination of the requirement Y2 is carried out.

It is noted that in the X-ray diffraction pattern of the requirement Y3, in a case where two or more peaks of which a peak top is located in a range of 19.7° to 20.1° and a full width at half maximum is 0.65° or less are present, a peak having the highest diffracted X-ray intensity is selected as the first peak, and the determination of the requirement Y3 is carried out.

In addition, in the X-ray diffraction pattern of the requirement Y3, in a case where two or more peaks of which a peak top is located in a range of 22.3° to 22.7° and a full width at half maximum is 0.65° or less are present, a peak having the highest diffracted X-ray intensity is selected as the second peak, and the determination of the requirement Y3 is carried out.

In addition, in the X-ray diffraction pattern of the requirement Y3, in a case where two or more peaks of which a peak top is located in a range of 27.3° to 27.7° and a full width at half maximum is 0.65° or less are present, a peak having the highest diffracted X-ray intensity is selected as the third peak, and the determination of the requirement Y3 is carried out.

It is noted that in the X-ray diffraction pattern of the requirement Y4, in a case where two or more peaks of which a peak top is located in a range of 16.5° to 16.9° and a full width at half maximum is 0.65° or less are present, a peak having the highest diffracted X-ray intensity is selected as the first peak, and the determination of the requirement Y4 is carried out.

It is preferable that the LiBsOs in a noncrystalline state satisfies the following requirement X2 from the viewpoint that the effect of the present invention is more excellent.

The following requirement X2 is a requirement that is evaluated according to the same procedure as in the requirement W described above, except that LiBsOs in a noncrystalline state is used as a measurement target, and the evaluation method therefor is as described above.

The requirement X2: In a reduced two-body distribution function G(r) of the $LiB_3O_5$ in a noncrystalline state obtained from an X-ray total scattering measurement, a first peak of which a peak top is located in a range where r is 1.43 ± 0.2 Å and a second peak of which a peak top is located in a range where r is 2.40 ± 0.2 Å are present, and G(r) of the peak top of the first peak and G(r) of the peak top of the second peak indicate more than 1.0.

It is preferable that the $Li_3B_{11}O_{18}$ in a noncrystalline state satisfies the following requirement X3 from the viewpoint that the effect of the present invention is more excellent.

The following requirement X3 is a requirement that is evaluated according to the same procedure as in the requirement W described above, except that $Li_3B_{11}O_{18}$ in a noncrystalline state is used as a measurement target, and the evaluation method therefor is as described above.

The requirement X3: In a reduced two-body distribution function G(r) of the $Li_3B_{11}O_{18}$ in a noncrystalline state obtained from an X-ray total scattering measurement, a first peak of which a peak top is located in a range where r is $1.43 \pm 0.2$ Å and a second peak of which a peak top is located in a range where r is $2.40 \pm 0.2$ Å are present, and G(r) of the peak top of the first peak and G(r) of the peak top of the second peak indicate more than 1.0.

It is preferable that the $Li_3B_7O_{12}$ in a noncrystalline state satisfies the following requirement X4 from the viewpoint that the effect of the present invention is more excellent.

The following requirement X4 is a requirement that is evaluated according to the same procedure as in the requirement W described above, except that $Li_3B_7O_{12}$ in a noncrystalline state is used as a measurement target, and the evaluation method therefor is as described above.

The requirement X4: In a reduced two-body distribution function G(r) of the $Li_3B_7O_{12}$ in a noncrystalline state obtained from an X-ray total scattering measurement, a first peak of which a peak top is located in a range where r is $1.43 \pm 0.2$ Å and a second peak of which a peak top is located in a range where r is $2.40 \pm 0.2$ Å are present, and G(r) of the peak top of the first peak and G(r) of the peak top of the second peak indicate more than 1.0.

It is noted that in the requirements X2 to X4, similarly to the requirement X, the technical meaning thereof means that as described above, periodic structures corresponding to the interatomic distance of boron (B) -O (oxygen) and the interatomic distance of boron (B) -boron (B) are present in the specific boric acid compound.

The manufacturing method for the specific boric acid compound is not particularly limited; however, examples thereof include a method in which LiBsOs, $Li_3B_{11}O_{18}$, or $Li_3B_7O_{12}$ having a crystal structure is subjected to a mechanical milling treatment described later, thereby manufacturing the specific boric acid compound.

(Water)

The lithium-based solid electrolyte according to the fifth embodiment of the present invention contains water.

In the lithium-based solid electrolyte according to the fifth embodiment of the present invention, the content of the water is not particularly limited. Among the above, from the viewpoint that the effect of the present invention is more excellent, the molar ratio of the water to the specific boric acid compound in the lithium-based solid electrolyte according to the third embodiment of the present invention (molar amount of water/molar amount of specific boric acid compound) is preferably 3 to 15, more preferably 4 to 13, still more preferably 5 to 13, and particularly preferably 10 to 13.

(Lithium salt)

The lithium-based solid electrolyte according to the fifth embodiment of the present invention contains a lithium salt.

The kind of the lithium salt is not particularly limited, and examples thereof include a lithium salt exemplified in a step 1A described later, the details of which will be described later.

In the lithium-based solid electrolyte according to the fifth embodiment of the present invention, the content of the lithium salt is not particularly limited.

In the lithium-based solid electrolyte according to the fifth embodiment of the present invention, the mass ratio of the content of the lithium salt to the content of the specific lithium tetraborate described above (content mass of lithium salt/content mass of specific boric acid compound) is not particularly limited. Among the above, from the viewpoint that the effect of the present invention is more excellent, the molar ratio of the lithium salt to the specific boric acid compound (molar amount of lithium salt/molar amount of specific boric acid compound) in the lithium-based solid electrolyte according to the fifth embodiment of the present invention, is preferably 0.001 to 1.2, more preferably 0.01 to 1.2, still more preferably 0.1 to 1.2, and particularly preferably 0.5 to 1.2.

In a case where the lithium-based solid electrolyte according to the fifth embodiment of the present invention contains LiBsOs in a noncrystalline state, it is preferable that the lithium-based solid electrolyte according to the fifth embodiment of the present invention satisfies the following requirement Y5. The requirement Y5 is a requirement that is evaluated according to the same procedure as in the requirement Y2, except that the lithium-based solid electrolyte is used as a measurement target.

The requirement Y5: In an X-ray diffraction pattern of the lithium-based solid electrolyte obtained from an X-ray diffraction measurement using a CuKα ray,

in a case where none of a first peak of which a peak top is located in a range of 15.4° to 15.8° and a full width at half maximum is 0.65° or less, a second peak of which a peak top is located in a range of 23.4° to 23.8° and a full width at half maximum is 0.65° or less, a third peak of which a peak top is located in a range of 26.8° to 27.2° and a full width at half maximum is 0.65° or less, and a fourth peak of which a peak top is located in a range of 29.4° to 29.8° and a full width at half maximum is 0.65° or less are present, or

in a case where at least one specific peak selected from the group consisting of the first peak, the second peak, the third peak, and the fourth peak is present in the X-ray diffraction pattern,

an intensity ratio of at least the one of the specific peak, which is calculated according to the following intensity measuring method, is 5.0 or less.

The intensity measuring method: An average intensity 1 in a range of +0.45° to +0.55° from a diffraction angle 2θ of the peak top of the specific peak is calculated, an average intensity 2 in a range of -0.55° to -0.45° from the diffraction angle 2θ of the peak top of the specific peak is calculated, an arithmetic mean value of the average intensity 1 and the average intensity 2 is calculated, and a ratio of a peak intensity at the peak top of the specific peak to the arithmetic mean value is defined as the intensity ratio.

Among the above, in the requirement Y5, in the X-ray diffraction pattern of the lithium-based solid electrolyte obtained from the X-ray diffraction measurement using the CuKα ray, in a case where none of the first peak, the second peak, the third peak, and the fourth peak are present, or a specific peak selected from the group consisting of the first peak, the second peak, the third peak, and the fourth peak is present, the intensity ratio of at least one specific peak is preferably 3.0 or less. Among the above, in a case where none of the first peak, the second peak, the third peak, and the fourth peak are present, or a specific peak selected from the group consisting of the first peak, the second peak, the third peak, and the fourth peak is present, the intensity ratio of at least one specific peak is more preferably 2.0 or less.

In addition, in a case where the lithium-based solid electrolyte according to the fifth embodiment of the present invention contains $Li_3B_{11}O_{18}$ in a noncrystalline state, it is preferable that the lithium-based solid electrolyte according to the fifth embodiment of the present invention satisfies the following requirement Y6. The requirement Y6 is a requirement that is evaluated according to the same procedure as in the requirement Y3, except that the lithium-based solid electrolyte is used as a measurement target.

The requirement Y6: In an X-ray diffraction pattern of the lithium-based solid electrolyte obtained from an X-ray diffraction measurement using a CuKα ray,

in a case where none of a first peak of which a peak top is located in a range of 19.7° to 20.1° and a full width at half maximum is 0.65° or less, a second peak of which a peak top is located in a range of 22.3° to 22.7° and a full width at half maximum is 0.65° or less, and a third peak of which a peak top is located in a range of 27.3° to 27.7° and a full width at half maximum is 0.65° or less are present, or

in a case where at least one specific peak selected from the group consisting of the first peak, the second peak, and the third peak is present in the X-ray diffraction pattern,

an intensity ratio of at least the one of the specific peak, which is calculated according to the following intensity measuring method, is 5.0 or less.

The intensity measuring method: An average intensity 1 in a range of +0.45° to +0.55° from a diffraction angle 2θ of the peak top of the specific peak is calculated, an average intensity 2 in a range of -0.55° to -0.45° from the diffraction angle 2θ of the peak top of the specific peak is calculated, an arithmetic mean value of the average intensity 1 and the average intensity 2 is calculated, and a ratio of a peak intensity at the peak top of the specific peak to the arithmetic mean value is defined as the intensity ratio.

Among the above, in the requirement Y6, in the X-ray diffraction pattern of the lithium-based solid electrolyte obtained from the X-ray diffraction measurement using the CuKα ray, in a case where none of the first peak, the second peak, and the third peak are present, or a specific peak selected from the group consisting of the first peak, the second peak, and the third peak is present, the intensity ratio of at least one specific peak is preferably 3.0 or less. Among the above, in a case where none of the first peak, the second peak, and the third peak are present, or in a case where a specific peak selected from the group consisting of the first peak, the second peak, and the third peak is present, the intensity ratio of at least one specific peak is more preferably 2.0 or less.

In addition, in a case where the lithium-based solid electrolyte according to the fifth embodiment of the present invention contains $Li_3B_7O_{12}$ in a noncrystalline state, it is preferable that the lithium-based solid electrolyte according to the fifth embodiment of the present invention satisfies the following requirement Y7. The requirement Y7 is a requirement that is evaluated according to the same procedure as in the requirement Y4, except that the lithium-based solid electrolyte is used as a measurement target.

The requirement Y7: In an X-ray diffraction pattern of the lithium-based solid electrolyte obtained from an X-ray diffraction measurement using a CuKα ray, in a case where a first peak of which a peak top is located in a range of 16.5° to 16.9° and a full width at half maximum is 0.65° or less is not present, or in a case where in the X-ray diffraction pattern, the first peak is present, an intensity ratio of at least one first peak, which is calculated according to the following intensity measuring method, is 5.0 or less.

The intensity measuring method: An average intensity 1 in a range of +0.45° to +0.55° from a diffraction angle

$2\theta$ of the peak top of the specific peak is calculated, an average intensity 2 in a range of -0.55° to -0.45° from the diffraction angle $2\theta$ of the peak top of the specific peak is calculated, an arithmetic mean value of the average intensity 1 and the average intensity 2 is calculated, and a ratio of a peak intensity at the peak top of the specific peak to the arithmetic mean value is defined as the intensity ratio.

Among the above, in an X-ray diffraction pattern of the lithium-based solid electrolyte obtained from an X-ray diffraction measurement using a CuK$\alpha$ ray in the requirement Y7, in a case where the first peak is not present, or in a case where the first peak is present, the intensity ratio of the first peak is preferably 3.0 or less. Among the above, in a case where the first peak is not present, or in a case where the first peak is present, the intensity ratio of the first peak is more preferably 2.0 or less.

It is noted that in the X-ray diffraction pattern of the requirement Y5, in a case where two or more peaks of which a peak top is located in a range of 15.4° to 15.8° and a full width at half maximum is 0.65° or less are present, a peak having the highest diffracted X-ray intensity is selected as the first peak, and the determination of the requirement Y5 is carried out.

In addition, in the X-ray diffraction pattern of the requirement Y5, in a case where two or more peaks of which a peak top is located in a range of 23.4° to 23.8° and a full width at half maximum is 0.65° or less are present, a peak having the highest diffracted X-ray intensity is selected as the second peak, and the determination of the requirement Y5 is carried out.

In addition, in the X-ray diffraction pattern of the requirement Y5, in a case where two or more peaks of which a peak top is located in a range of 26.8° to 27.2° and a full width at half maximum is 0.65° or less are present, a peak having the highest diffracted X-ray intensity is selected as the third peak, and the determination of the requirement Y5 is carried out.

In addition, in the X-ray diffraction pattern of the requirement Y5, in a case where two or more peaks of which a peak top is located in a range of 29.4° to 29.8° and a full width at half maximum is 0.65° or less are present, a peak having the highest diffracted X-ray intensity is selected as the fourth peak, and the determination of the requirement Y5 is carried out.

It is noted that in the X-ray diffraction pattern of the requirement Y6, in a case where two or more peaks of which a peak top is located in a range of 19.7° to 20.1° and a full width at half maximum is 0.65° or less are present, a peak having the highest diffracted X-ray intensity is selected as the first peak, and the determination of the requirement Y6 is carried out.

In addition, in the X-ray diffraction pattern of the requirement Y6, in a case where two or more peaks of which a peak top is located in a range of 22.3° to 22.7° and a full width at half maximum is 0.65° or less are present, a peak having the highest diffracted X-ray intensity is selected as the second peak, and the determination of the requirement Y6 is carried out.

In addition, in the X-ray diffraction pattern of the requirement Y6, in a case where two or more peaks of which a peak top is located in a range of 27.3° to 27.7° and a full width at half maximum is 0.65° or less are present, a peak having the highest diffracted X-ray intensity is selected as the third peak, and the determination of the requirement Y6 is carried out.

It is noted that in the X-ray diffraction pattern of the requirement Y7, in a case where two or more peaks of which a peak top is located in a range of 16.5° to 16.9° and a full width at half maximum is 0.65° or less are present, a peak having the highest diffracted X-ray intensity is selected as the first peak, and the determination of the requirement Y7 is carried out.

In addition, it is preferable that the lithium-based solid electrolyte according to the fifth embodiment of the present invention satisfies the following requirement X5 from the viewpoint that the effect of the present invention is more excellent.

The following requirement X5 is a requirement that is evaluated according to the same procedure as in the requirement W described above, except that the lithium-based solid electrolyte according to the fifth embodiment of the present invention is used as a measurement target, and the evaluation method therefor is as described above.

The requirement X5: In a reduced two-body distribution function G(r) of the lithium-based solid electrolyte according to the fifth embodiment obtained from an X-ray total scattering measurement, a first peak of which a peak top is located in a range where r is $1.43 \pm 0.2$ Å and a second peak of which a peak top is located in a range where r is $2.40 \pm 0.2$ Å are present, and G(r) of the peak top of the first peak and G(r) of the peak top of the second peak indicate more than 1.0.

<<Inorganic solid electrolyte>>

<First embodiment>

An inorganic solid electrolyte according to a first embodiment of the present invention is an inorganic solid electrolyte having a conductivity of an ion of an element selected from a metal element belonging to a Group 1 element of the periodic table and a Group 2 element of the periodic table.

The metal element belonging to the Group 1 element of the periodic table is an element other than the hydrogen element (H) among the elements exemplified as the Group 1 element of the periodic table, and examples thereof include Li, Na, K, Rb, Cs, and Fr.

In addition, examples of the Group 2 element of the periodic table include Be, Mg, Ca, Sr, Ba, and Ra.

Among them, the inorganic solid electrolyte preferably has a conductivity of a Li ion.

The inorganic solid electrolyte according to the first embodiment of the present invention contains an element selected from the group consisting of a metal element belonging to a Group 1 element of the periodic table and a Group 2 element of the periodic table (hereinafter, also simply referred to as an "element X"), B, and O.

Examples of the element X include the above-described examples, where Li is preferable.

In addition, the inorganic solid electrolyte according to the first embodiment of the present invention further contains two or more specific elements selected from the group consisting of an element in Group 3 of the periodic table, an element in Group 4 of the periodic table, an element in Group 13 of the periodic table, an element in Group 14 of the periodic table, an element in Group 15 of the periodic table, an element in Group 16 of the periodic table, an element in Group 17 of the periodic table, and H. The kind of the specific element contained in the inorganic solid electrolyte according to the first embodiment of the present invention may be 3 or more kinds. Among them, from the viewpoint that the effect of the present invention is more excellent", the kind of the specific element contained in the inorganic solid electrolyte is preferably 2 to 5 kinds and more preferably 2 to 4 kinds.

Examples of the Group 3 element of the periodic table include Sc, Y, a lanthanoid element, and an actinoid element.

Examples of the Group 4 element of the periodic table include Ti, Zr, Hf, and Rf.

Examples of the Group 13 element of the periodic table include B, Al, Ga, In, Tl, and Nh.

Examples of the Group 14 element of the periodic table include C, Si, Ge, Sn, Pb, and Fl.

Examples of the Group 15 element of the periodic table include N, P, As, Sb, Bi, and Mc.

Examples of the Group 16 element of the periodic table include O, S, Se, Te, Po, and Lv.

Examples of the Group 17 element of the periodic table include F, Cl, Br, I, At, and Ts.

The inorganic solid electrolyte according to the first embodiment of the present invention preferably contains two or more specific elements selected from the group consisting of F, S, N, P, and C, more preferably contains two or more specific elements selected from the group consisting of F, S, C, and N, and still more preferably contains three specific elements of F, S, and N.

In the inorganic solid electrolyte according to the first embodiment of the present invention, the molar amount of the element X is preferably 0.001 to 1,000 in a case where the molar amount of the element X is indicated by setting the molar amount of B in the inorganic solid electrolyte to 4.00. That is, in a case where the molar content amount of B is set to 4.00, the relative value of the molar content amount of the element X is preferably 0.001 to 1,000.

Among the above, from the viewpoint that the effect of the present invention is more excellent, in a case where the molar amount of the element X is indicated by setting the molar amount of B in the lithium-based solid electrolyte to 4.00, the molar amount of the element X is more preferably 0.1 to 10, still more preferably 1.58 to 3.49, particularly preferably 1.58 to 3.00, more particularly preferably 1.90 to 3.00, and most preferably 2.00 to 3.00.

In the inorganic solid electrolyte according to the first embodiment of the present invention, the molar amount of O is preferably 0.001 to 1,000 in a case where the molar amount of O is indicated by setting the molar amount of B in the inorganic solid electrolyte to 4.00. That is, in a case where the molar content amount of B is set to 4.00, the relative value of the molar content amount of O is preferably 0.001 to 1,000.

Among the above, from the viewpoint that the effect of the present invention is more excellent, the molar amount of O is more preferably 0.1 to 100, still more preferably 6.23 to 25.0, and particularly preferably 10.00 to 23.00 in a case where the molar amount of O is indicated by setting the molar amount of B in the inorganic solid electrolyte to 4.00.

In the inorganic solid electrolyte according to the first embodiment of the present invention, in a case where the molar amount of the specific element is indicated by setting the molar amount of B in the inorganic solid electrolyte to 4.00, the molar amount of each of the specific elements is preferably 0.001 to 1,000. That is, in a case where the molar content amount of B is set to 4.00, the relative value of the molar content amount of each of the specific elements is preferably 0.001 to 1,000.

Among the above, from the viewpoint that the effect of the present invention is more excellent, the molar amount of each of the specific elements is more preferably 0.001 to 100, still more preferably 0.001 to 6.0, and particularly preferably 0.01 to 5.0 in a case where the molar amount of the specific element is indicated by setting the molar amount of B in the inorganic solid electrolyte to 4.00.

As described above, in the inorganic solid electrolyte according to the first embodiment of the present invention, two or more kinds of specific elements are contained. Therefore, for example, in a case where the inorganic solid electrolyte according to the first embodiment of the present invention contains two specific elements, that is, the specific element A and the specific element B which is an element different from the specific element A in terms of kind, the molar amount of the specific element A and the molar amount of the specific element B are each preferably 0.001 to 1,000 in a case where the molar amount of B in the inorganic solid electrolyte is set to 4.00. In addition, for example, in a case where the inorganic solid electrolyte according to the first embodiment of the present invention contains three specific elements, that is, the specific element A, the specific element B which is an element different from the specific element A in terms of kind, and a specific element C which is an element different from the specific elements A and B in terms of kind, the molar amount of the specific element A, the molar amount of the specific element B, and the molar amount of the specific element C are each preferably 0.001 to 1,000 in a case where the molar amount of B in the inorganic solid electrolyte is set to 4.00.

The contents of the elements X and B and the specific elements in the inorganic solid electrolyte according to the first embodiment of the present invention are specified according to known element analysis.

It is noted that the inorganic solid electrolyte according to the first embodiment of the present invention may contain another element in addition to the element X, B, O, and the specific elements.

The inorganic solid electrolyte according to the first embodiment of the present invention is noncrystalline.

Since the inorganic solid electrolyte according to the first embodiment of the present invention is noncrystalline and satisfies the requirement R described later, it is presumed that a soft hydrated layer is easily generated on the surface side of the inorganic solid electrolyte, and the presence of this hydrated layer improves the ionic conductivity.

The inorganic solid electrolyte according to the first embodiment of the present invention satisfies the following requirement R.

It is noted that the requirement R is a requirement that is evaluated according to the same procedure, except that the inorganic solid electrolyte according to the first embodiment is used as a measurement target for the requirement Z for the lithium-based solid electrolyte according to the fourth embodiment of the present invention described above, and the evaluation method therefor is as described above. A case where the requirement R is satisfied indicates that the inorganic solid electrolyte contains a large number of OH groups and a large amount of water, similarly to the case of the requirement Z described above.

The requirement R: In an infrared absorption spectrum of the inorganic solid electrolyte, a ratio of a maximum absorption intensity in a wave number range of 3,000 to 3,500 cm$^{-1}$ to a maximum absorption intensity in a wave number range of 800 to 1,600 cm$^{-1}$ is 1/5 or more.

<Second embodiment>

An inorganic solid electrolyte according to a second embodiment of the present invention contains a compound containing an element (corresponding to the element X described above) selected from the group consisting of a metal element belonging to a Group 1 element of the periodic table and a Group 2 element of the periodic table, B, and O; water; and a salt containing an element selected from the group consisting of a metal element belonging to a Group 1 element of the periodic table and a Group 2 element of the periodic table.

(Compound containing element X, B, and O (hereinafter, also simply referred to as "element X-containing compound"))

The inorganic solid electrolyte according to the second embodiment of the present invention contains a compound containing the element X, B, and O.

Examples of the element X are as described in the above-described inorganic solid electrolyte according to the first embodiment, where Li is preferable.

In a case where the element X is Li, examples of the compound include $Li_2B_4O_7$, LiBsOs, LiBOs, $Li_3B_{11}O_{18}$, and $Li_2B_7O_{12}$.

The compound is preferably noncrystalline.

(Water)

The inorganic solid electrolyte according to the second embodiment of the present invention contains water.

In the inorganic solid electrolyte according to the second embodiment of the present invention, the content of the water is not particularly limited. Among the above, from the viewpoint that the effect of the present invention is more excellent, the molar ratio of the water to the element X-containing compound in the inorganic solid electrolyte according to the second embodiment of the present invention (molar amount of water/molar amount of element X-containing compound) is preferably 3 to 15, more preferably 4 to 13, still more preferably 5 to 13, and particularly preferably 10 to 13.

(Salt containing element selected from group consisting of metal element belonging to Group 1 element of periodic table and Group 2 element of periodic table)

The inorganic solid electrolyte according to the second embodiment of the present invention contains a salt that contains an element (corresponding to the element X described above) selected from the group consisting of a metal element belonging to a Group 1 element of the periodic table and a Group 2 element of the periodic table (hereinafter, also simply referred to as an "element X-containing salt").

The element X-containing salt is not particularly limited as long as it is a salt containing the element X. For example, in a case where the element X is Li, the element X-containing salt corresponds to a lithium salt, and in a case where the element X is Na, the element X-containing salt corresponds to a sodium salt.

The element X-containing salt is generally composed of a cation of the element X and an anion in a large number of cases. The structure of the anion is not particularly limited, and examples thereof include known anions, where an organic anion is preferable. The organic ion is preferably an organic anion having a fluorine atom.

The element X-containing salt preferably contains two or more specific elements selected from the group consisting of an element in Group 3 of the periodic table, an element in Group 4 of the periodic table, an element in Group 13 of the periodic table, an element in Group 14 of the periodic table, an element in Group 15 of the periodic table, an element in Group 16 of the periodic table, an element in Group 17 of the periodic table, and H.

In the inorganic solid electrolyte according to the second embodiment of the present invention, the mass ratio of the content of the element X-containing salt to the content of the element X-containing compound described above (content mass of element X-containing salt/content mass of element X-containing compound) is not particularly limited. Among the above, in the inorganic solid electrolyte according to the second embodiment of the present invention, the molar ratio of the element X-containing salt to the element X-containing compound (molar amount of element X-containing salt/molar amount of element X-containing compound) is preferably 0.001 to 1.5, more preferably 0.001 to 1.2, still more preferably 0.01 to 1.2, particularly preferably 0.1 to 1.2, and most preferably 0.5 to 1.2 from the viewpoint that the effect of the present invention is more excellent.

<Production method for lithium-based solid electrolyte>

Production methods for the lithium-based solid electrolytes (according to the first embodiment to fourth embodiments) of the present invention are not particularly limited. However, from the viewpoint that the lithium-based solid electrolyte according to the embodiment of the present invention can be produced with high productivity, a production method having the following steps 1A to 3A is preferable.

Step 1A: A step of subjecting a lithium-based oxide containing Li and B to a mechanical milling treatment in the presence of a specific element source
Step 2A: A step of mixing the product obtained in the step 1A with water
Step 3A: A step of removing water from a dispersion liquid obtained in the step 2A to obtain a lithium-based solid electrolyte

Hereinafter, the procedure of the production method will be described in detail.

The step 1A is a step of subjecting a lithium-based oxide containing Li and B to a mechanical milling treatment in the presence of a specific element source

Hereinafter, a material that is used in the step 1A will be described in detail, and then the procedure will be described in detail.

The specific element source contains two or more kinds of elements selected from the group consisting of a Group 4 element of the periodic table, a Group 15 element of the periodic table, a Group 16 element of the periodic table, a Group 17 element of the periodic table, Si, C, Sc, Y, and H, and it preferably contains two or more kinds of elements selected from the group consisting of F, Cl, Br, I, S, P, Si, Se, Te, C, Sb, As, Sc, Y, Zr, Ti, Hf, H, and N. It suffices that the specific element source contains two or more kinds of elements among the above-described elements, and the specific element source may be composed of one kind of compound or may be composed of two or more kinds of compounds. For example, the specific element source may be composed of a compound containing two or more kinds of elements selected from the group consisting of F, Cl, Br, I, S, P, Si, Se, Te, C, Sb, As, Sc, Y, Zr, Ti, Hf, H, and N, or it may be composed of a compound 1 containing at least one kind of element selected from the group consisting of F, Cl, Br, I, S, P, Si, Se, Te, C, Sb, As, Sc, Y, Zr, Ti, Hf, H, and N, and a compound 2 containing an element selected from the above group, where the kind of the element is different from the kind of the element selected from the above group contained in the compound 1.

The specific element source preferably contains two to four elements selected from the group consisting of F, Cl, Br, I, S, P, Si, Se, Te, C, Sb, As, Sc, Y, Zr, Ti, Hf, H, and N, and it is more preferably contains three kinds of elements.

The compound contained in the specific element source is preferably a salt and more preferably a lithium salt (particularly, a lithium imide salt).

The lithium salt is preferably a compound represented by Formula (1).

$$\text{Formula (1)} \qquad \text{LiN}(R_{f1}SO_2)(R_{f2}SO_2)$$

$R_{f1}$ and $R_{f2}$ each independently represent a halogen atom or a perfluoroalkyl group.

In a case where $R_{f1}$ and $R_{f2}$ are a perfluoroalkyl group, the number of carbon atoms in the perfluoroalkyl group is not particularly limited.

$R_{f1}$ and $R_{f2}$ are preferably a halogen atom or a perfluoroalkyl group having 1 to 6 carbon atoms, more preferably a halogen atom or a perfluoroalkyl group having 1 to 2 carbon atoms, and still more preferably a halogen atom. As the volume of the terminal group increases, the steric hindrance increases, which becomes a factor that hinders ion conduction. Therefore, in a case where $R_{f1}$ and $R_{f2}$ are a perfluoroalkyl group, the perfluoroalkyl group preferably has a small number of carbon atoms.

Hereinafter, the compound contained in the specific element source will be exemplified. It is noted that among the compounds exemplified below, a compound containing only one specific element is used together with another compound containing at least one kind of another specific element so that two or more specific elements are contained in the specific element source as described above.

Inorganic lithium salt (L-1): An inorganic fluoride salt such as $LiPF_6$, $LiBF_4$, $LiAsF_6$, or $LiSbF_6$; a perhalogenate such as $LiClO_4$, $LiBrO_4$, or $LiIO_4$; or an inorganic chloride salt such as $LiAlCl_4$.

Fluorine-containing organic lithium salt (L-2): A perfluoroalkane sulfonate such as $LiCF_3SO_3$; a perfluoroalkanesulfonylimide salt such as $LiN(CF_3SO_2)_2$, $LiN(CF_3CF_2SO_2)_2$, $LiN(FSO_2)_2$, or $LiN(CF_3SO_2)(C_4F_9SO_2)$; a perfluoroalkane sulfonylmethide salt such as $LiC(CF_3SO_2)_3$; or a fluoroalkyl fluorophosphate such as $Li[PF_5(CF_2CF_2CF_3)]$, $Li[PF_4(CF_2CF_2CF_3)_2]$, $Li[PF_3(CF_2CF_2CF_3)_3]$, $Li[PF_5(CF_2CF_2CF_2CF_3)]$, $Li[PF_4(CF_2CF_2CF_2CF_3)_2]$, or $Li[PF_3(CF_2CF_2CF_2CF_3)_3]$.

Oxalatoborate salt (L-3): Lithium bis(oxalato)borate or lithium difluorooxalatoborate.

In addition to the above, examples thereof include $LiF$, $LiCl$, $LiBr$, $LiI$, $Li_2SO_4$, $LiNO_3$, $Li_2CO_3$, $CH_3COOLi$, $LiAsF_6$, $LiSbF_6$, $LiAlCl_4$, and $LiB(C_6H_5)_4$.

Among these, $LiPF_6$, $LiBF_4$, $LiAsF_6$, $LiSbF_6$, $LiClO_4$, $Li(R^{f1}SO_3)$, $LiN(R_{f1}SO_2)_2$, $LiN(FSO_2)_2$, or $LiN(R^{f1}SO_2)(R^{f2}SO_2)$ is preferable, and $LiPF_6$, $LiBF_4$, $LiN(R^{f1}SO_2)_2$, $LiN(FSO_2)_2$, or $LiN(R^{f1}SO_2)(R^{f2}SO_2)$ is more preferable.

Here, $R^{f1}$ and $R^{f2}$ each independently represent a fluorine atom or a perfluoroalkyl group.

The using amount of the specific element source is not particularly limited, and the using amount thereof is appropriately adjusted so that the above-described lithium-based solid electrolyte according to the embodiment of the present invention is obtained.

Among them, the using amount of the specific element source is preferably 1 to 300 parts by mass and more preferably 100 to 200 parts by mass with respect to 100 parts by mass of the lithium-based oxide containing Li and B.

Examples of the lithium-based oxide containing Li and B include $Li_2B_4O_7$, $LiBOs$, $LiB_3O_5$, $Li_3B_{11}O_{18}$, $Li_2B_7O_{12}$, $LiB_2O_3(OH)H_2O$, and $Li_4B_8O_{13}(OH)_2(H_2O)_3$.

The mechanical milling treatment is a treatment of pulverizing a sample while applying mechanical energy.

Examples of the mechanical milling treatment include ball milling, vibration milling, turbo milling, and disc milling, where ball milling is preferable from the viewpoint that the lithium-based solid electrolyte according to the embodiment of the present invention can be produced with high productivity. Examples of the ball milling include vibration ball milling, rotary ball milling, and planetary ball milling, where planetary ball milling is more preferable.

As the conditions for ball milling treatment, the optimum conditions are selected depending on the raw materials to be used.

The material of the pulverization balls (the media) to be used at the time of ball milling is not particularly limited. However, examples thereof include agate, silicon nitride, stabilized zirconia (YSZ), alumina, and an iron-based alloy, where stabilized zirconia (YSZ) is preferable from the viewpoint that the lithium-based solid electrolyte according to the embodiment of the present invention can be produced with high productivity.

The average particle diameter of the pulverization balls is not particularly limited; however, it is preferably 1 to 10 mm and more preferably 3 to 7 mm from the viewpoint that the lithium-based solid electrolyte according to the embodiment of the present invention can be produced with high productivity. The average particle diameter is a value obtained by measuring the diameters of any 50 pulverization balls and arithmetically averaging them. In a case where the pulverization ball is not spherical, the major axis shall be taken as the diameter.

The number of pulverization balls used at the time of ball milling is not particularly limited; however, it is preferably 10 to 100 and more preferably 40 to 60 from the viewpoint that the lithium-based solid electrolyte according to the embodiment of the present invention can be produced with high productivity.

The material of the pulverization pot to be used at the time of ball milling is not particularly limited. However, examples thereof include agate, silicon nitride, stabilized zirconia (YSZ), alumina, and an iron-based alloy, where stabilized zirconia (YSZ) is preferable from the viewpoint that the lithium-based solid electrolyte according to the embodiment of the present invention can be produced with high productivity.

The rotation speed in a case of carrying out ball milling is not particularly limited; however, it is preferably 200 to 700 rpm and more preferably 350 to 550 rpm from the viewpoint that the lithium-based solid electrolyte according to the embodiment of the present invention can be produced with high productivity.

The treatment time of ball milling is not particularly limited; however, it is preferably 10 to 200 hours and more preferably 20 to 140 hours from the viewpoint that the lithium-based solid electrolyte according to the embodiment of the present invention can be produced with high productivity.

The atmosphere in a case of carrying out ball milling may be an atmosphere of atmospheric air or may be an atmosphere of an inert gas (for example, argon, helium, or nitrogen).

The step 2A is a step of mixing the product obtained in the step 1A with water. In a case of carrying out this step, water is mixed with the lithium-based oxide containing Li and B, which is obtained in the step 1A by being subjected to the mechanical milling treatment, whereby the lithium-based solid electrolyte according to the embodiment of the present invention, which contains a large amount of the oxygen element (O), is generated.

The using amount of water is not particularly limited. However, from the viewpoint that the effect of the present invention is more excellent, the using amount of water is preferably 10 to 200 parts by mass and more preferably 50 to 150 parts by mass with respect to 100 parts by mass of the product obtained in the step 1A.

The method of mixing the product obtained in the step 1A with water is not particularly limited. The mixing may be carried out in a batchwise manner or may be carried out so that water is added stepwise to the product obtained in the step 1A.

At the time of mixing, an ultrasonic treatment may be carried out, as necessary.

The time of the ultrasonic treatment is not particularly limited; however, it is preferably 10 minutes to 5 hours from the viewpoint that the effect of the present invention is more excellent.

The step 3A is a step of removing water from a dispersion liquid obtained in the step 2A to obtain a lithium-based solid electrolyte.

The method of removing water from the dispersion liquid obtained in the step 2A is not particularly limited. Water may be removed by a heating treatment or may be removed by a vacuum drying treatment.

It is noted that before the step 1A, a step 0 of subjecting the lithium-based oxide containing Li and B to a mechanical milling treatment in an environment in which the specific element source is not present may be carried out.

The suitable aspect of the mechanical milling treatment carried out in the step 0 is the same as the suitable aspect of the mechanical milling treatment carried out in the step 1A.

Another suitable aspect of the production method for a lithium-based solid electrolyte according to the embodiment of the present invention is preferably a production method having the following steps 1B to 3B.

Step 1B: A step of subjecting a lithium-based oxide containing Li and B to a mechanical milling treatment
Step 2B: A step of mixing the product obtained in the step 1B, water, and a specific element source
Step 3B: A step of removing water from a dispersion liquid obtained in the step 2B to obtain a lithium-based solid electrolyte

The difference between the step 1B and the step 1A includes that the mechanical milling treatment is carried out in the presence of the specific element source in the step 1A, whereas the mechanical milling treatment is carried out in the step 1B without using the specific element source.

The suitable aspect of the mechanical milling treatment carried out in the step 1B is the same as the suitable aspect of the mechanical milling treatment carried out in the step 1A.

The difference between the step 2B and the step 2A includes that, in the step 2B, the product obtained in the step 1B, water, and the specific element source are mixed.

The specific element source that is used in the step 2B is the same as the specific element source that is used in the step 1A.

The using amount of the specific element source in the step 2B is preferably 1 to 300 parts by mass and more preferably 100 to 200 parts by mass with respect to 100 parts by mass of the product obtained in the step 1B.

The procedure of the step 2B is not particularly limited. A method (method 1) of collectively mixing the product obtained in step 1B, water, and a specific element source may be adopted, a method (method 2) of mixing the product obtained in step 1B with water to prepare a solution and then mixing the obtained solution with a specific element source may be adopted, or a method (method 3) of mixing the product obtained in the step 1B with water to prepare a solution 1, mixing a specific element source with water to prepare a solution 2, and mixing the solution 1 with the solution 2 may be adopted. In a case where the product obtained in the step 1B is mixed with water, a dispersion treatment such as an ultrasonic treatment may be appropriately carried out.

Among the above, the method 3 is preferable from the viewpoint that the effect of the present invention is more excellent.

In the method 2, in a case where the amount of the specific element source is too large at the time of mixing the product obtained in the step 1B with water to mix the solution with the specific element source, the obtained solution is easily gelated, and thus it is difficult to increase the mixing amount of the specific element source. On the other hand, in the method 3, even in a case where the product obtained in the step 1B and the specific element source are mixed at an equimolar amount, the gelation of the solution hardly occurs, and thus the mixing amount of the specific element source is easily increased.

The procedures for the step 3B and the step 3A are the same.

Another suitable aspect of the production method for a lithium-based solid electrolyte according to the embodiment of the present invention is preferably a production method having the following steps 1C to 3C.

Step 1C: A step of subjecting a lithium-based oxide containing Li and B to a mechanical milling treatment
Step 2C: A step of mixing the product obtained in the step 1C with water
Step 3C: A step of mixing a product obtained by removing water from the dispersion liquid obtained in the step 2C with the specific element source to obtain the lithium-based solid electrolyte

The procedures for the step 1C and the step 1B are the same.

The procedures for the step 2C and the step 2A are the same.

The difference between the step 3C and the step 3A includes that the product obtained by removing water from the dispersion liquid obtained in the step 2C is mixed with the specific element source.

The specific element source that is used in the step 3C is the same as the specific element source that is used in the step 1A.

The using amount of the specific element source in the step 3C is preferably 1 to 300 parts by mass and more preferably 100 to 200 parts by mass with respect to 100 parts by mass of the product obtained by removing water from the dispersion liquid obtained in the step 2C.

The method of mixing the product obtained by removing water from the dispersion liquid obtained in the step 2C with the specific element source is not particularly limited, and a method of infusing the product with a solution obtained by dissolving the specific element source in water to mix the two may be adopted.

That is, examples of the suitable aspect of the production method for a lithium-based solid electrolyte according to the embodiment of the present invention include a production method including;

a step 1 of subjecting a lithium-based oxide containing Li and B to a mechanical milling treatment,
a step 2 of mixing a product obtained in the step 1 with water, and
a step 3 of removing water from a dispersion liquid obtained in the step 2 to obtain a lithium-based solid electrolyte,
the production method satisfying any one of the following requirements 1 to 3;
the requirement 1: the mechanical milling treatment of the step 1 is carried out in the presence of a specific element source,
the requirement 2: in the step 2, the product, water, and the specific element source are mixed, or
the requirement 3: in the step 3, a product obtained by removing water from the dispersion liquid obtained in the step 2 is mixed with the specific element source to obtain the lithium-based solid electrolyte.

It is noted that in the above description, although the description has been made for an aspect of using the specific element source containing two or more kinds of elements selected from the group consisting of F, Cl, Br, I, S, P, Si, Se, Te, C, Sb, As, Sc, Y, Zr, Ti, Hf, H, and N, the production method for a lithium-based solid electrolyte according to the embodiment of the present invention is not limited in terms of the aspect thereof.

For example, the lithium-based solid electrolyte according to the fourth embodiment of the present invention described above may contain one or more kinds of elements selected from the group consisting of F, Cl, Br, I, S, P, Si, Se, Te, C, Sb, As, Sc, Y, Zr, Ti, Hf, H, and N. In order to contain such one or more kinds of elements, an element source containing one or more kinds of elements selected from the group consisting of F, Cl, Br, I, S, P, Si, Se, Te, C, Sb, As, Sc, Y, Zr, Ti, Hf, H, and N may be used as the specific element source.

<production method for inorganic solid electrolyte>

Production methods for the inorganic solid electrolyte (according to the first embodiment to the second embodiment) of the present invention are not particularly limited, and known methods can be adopted.

Among the above, it is preferable that the production is carried out according to the same procedure as that of the production method for the lithium-based solid electrolyte according to the embodiment of the present invention, except that an oxide containing the element X and B is used instead of the lithium-based oxide containing Li and B, and an element X-containing salt is used instead of the specific element source.

<Dispersion liquid>

A dispersion liquid according to the embodiment of the present invention contains the above-described lithium-based solid electrolyte or inorganic solid electrolyte according to the embodiment of the present invention and a solvent (for example, an organic solvent or water). The dispersion liquid according to the embodiment of the present invention is in a liquid state, can be applied onto various objects to be coated, and is useful for producing a solid electrolyte layer.

The content of the lithium-based solid electrolyte or inorganic solid electrolyte in the dispersion liquid according to the embodiment of the present invention is not particularly limited; however, it is preferably 5% to 80% by mass and more preferably 30% to 70% by mass with respect to the total mass of the dispersion liquid.

The content of the solvent in the dispersion liquid according to the embodiment of the present invention is not particularly limited; however, it is preferably 20% to 95% by mass and more preferably 30% to 70% by mass with respect to the total mass of the dispersion liquid.

The dispersion liquid according to the embodiment of the present invention may contain another component in addition to the lithium-based solid electrolyte or inorganic solid electrolyte according to the embodiment of the present invention and the solvent.

Examples of the other component include a binder.

Examples of the binder include various organic polymeric compounds (polymers).

The organic polymeric compound that constitutes the binder may have a particle shape or may have a non-particle shape.

In addition, examples of the other component include a solid electrolyte other than the lithium-based solid electrolyte or inorganic solid electrolyte according to the embodiment of the present invention. The other solid electrolyte means a solid-form electrolyte capable of migrating ions therein. The solid electrolyte is preferably an inorganic solid electrolyte.

Examples of the other solid electrolyte include a sulfide-based inorganic solid electrolyte, an oxide-based inorganic solid electrolyte, a halide-based inorganic solid electrolyte, and a hydride-based solid electrolyte.

A manufacturing method for the dispersion liquid according to the embodiment of the present invention is not particularly limited, and examples thereof include a manufacturing method including the above-described step 1A and the step 2A, and a manufacturing method including the step 1B and the step 2B.

<Use application>

Since the lithium-based solid electrolyte and the inorganic solid electrolyte according to the embodiment of the present invention exhibit excellent ionic conductivity, they can be applied to various use applications. The lithium-based solid electrolyte and the inorganic solid electrolyte according to the embodiment of the present invention can be used in, for example, various batteries (for example, an all-solid state secondary battery, a solid oxide-type fuel cell, and a battery using solid oxide water vapor electrolysis). Among them, the lithium-based solid electrolyte according to the embodiment of the present invention is preferably used for an all-solid state lithium ion secondary battery.

More specifically, the lithium-based solid electrolyte and the inorganic solid electrolyte according to the embodiment of the present invention are preferably used in the formation of a solid electrolyte that is contained in a positive electrode active material layer, a solid electrolyte layer, and a negative electrode active material layer in an all-solid state secondary battery. Among them, the lithium-based solid electrolyte according to the embodiment of the present invention is preferably used in the formation of a solid electrolyte that is contained in a positive electrode active material layer, a solid electrolyte layer, and a negative electrode active material layer in an all-solid state lithium ion secondary battery. In addition, the lithium-based solid electrolyte according to the embodiment of the present invention is preferably used as a solid electrolyte that is contained in any one of a positive electrode active material layer, a solid electrolyte layer, or a negative electrode active material layer in an all-solid state lithium ion secondary battery.

In addition, the lithium-based solid electrolyte and the inorganic solid electrolyte according to the embodiment of the present invention are suitably used as a coating material for coating the surface of the positive electrode active material. That is, one of the suitable aspects according to the present invention includes a modified positive electrode active material containing a positive electrode active material and a coating layer disposed on the positive electrode active material, where the coating layer contains the lithium-based solid electrolyte or inorganic solid electrolyte according to the embodiment of the present invention.

Further, the lithium-based solid electrolyte and the inorganic solid electrolyte according to the embodiment of the present invention are suitably used as a coating material for coating the surface of the negative electrode active material. That is, one of the suitable aspects according to the present invention includes a modified negative electrode active material containing a negative electrode active material and a coating layer disposed on the negative electrode active material, where the coating layer contains the lithium-based solid electrolyte or inorganic solid electrolyte according to the embodiment of the present invention.

In a case where the lithium-based solid electrolyte and the inorganic solid electrolyte according to the embodiment of the present invention are used, it is preferable that the lithium-based solid electrolyte and the inorganic solid electrolyte according to the embodiment of the present invention are used after being subjected to a pressurization treatment to be molded into a predetermined shape.

The method for pressurization treatment is not particularly limited, and examples thereof include a method using a known press device.

The pressurizing force at the time of the pressurization treatment is not particularly limited, and the optimum pressure is appropriately selected; however, it is preferably 5 to 1,500 MPa and more preferably 10 to 600 MPa from the viewpoint that the effect of the present invention is more excellent.

The time of the pressurization treatment is not particularly limited; however, it is preferably 1 sec to 0.5 hours and more preferably 2 sec to 0.2 hours from the viewpoint that the effect of the present invention is more excellent and the viewpoint of productivity.

Further, a heating treatment may be carried out at the time of the pressurization treatment. The heating temperature at the time of the heating treatment is not particularly limited; however, it is preferably 40°C to 400°C and more preferably 50°C to 350°C. The heating time at the time of the heating treatment is preferably 1 minute to 6 hours.

The atmosphere during the pressurization is not particularly limited, and examples thereof include an atmosphere of atmospheric air, an atmosphere of dried air (the dew point: -20°C or lower), and an atmosphere of inert gas (for example, argon, helium, or nitrogen).

The ion conductivity (27°C) of each of the lithium-based solid electrolyte and the inorganic solid electrolyte according to the embodiment of the present invention is not particularly limited; however, it is preferably $1.0 \times 10^{-5}$ S/cm or more and more preferably $1.0 \times 10^{-4}$ S/cm or more from the viewpoint of application to various use applications. The upper limit thereof is not particularly limited, and it is $1.0 \times 10^{-2}$ S/cm or less in a large number of cases.

The dispersion liquid according to the embodiment of the present invention containing the lithium-based solid electrolyte or inorganic solid electrolyte according to the embodiment of the present invention can be suitably used as a dispersion liquid for forming a solid electrolyte layer.

A method of forming a solid electrolyte layer using the dispersion liquid for forming a solid electrolyte layer is not particularly limited; however, examples thereof include a method of applying a dispersion liquid for forming a solid electrolyte layer to form a solid electrolyte layer. It is noted that, as necessary, the formed coating film may be subjected to a pressurization treatment.

The coating method for a dispersion liquid for forming a solid electrolyte layer is not particularly limited, and examples thereof include spray coating, spin coating, dip coating, slit coating, stripe coating, an aerosol deposition method, thermal spraying, and bar coating.

It is noted that after applying the dispersion liquid for forming a solid electrolyte layer, the obtained coating film may be subjected to a drying treatment, as necessary. The drying temperature is not particularly limited; however, the lower limit thereof is preferably 30°C or higher, more preferably 60°C or higher, and still more preferably 80°C or higher. The upper limit of the drying temperature is preferably 300°C or lower and more preferably 250°C or lower.

The method of subjecting a coating film to a pressurization treatment is not particularly limited; however, examples thereof include a method using a known press device (for example, a hydraulic cylinder pressing machine).

The pressurizing force at the time of the pressurization treatment is not particularly limited; however, it is preferably 5 to 1,500 MPa and more preferably 300 to 600 MPa from the viewpoint that the ionic conductivity of the solid electrolyte layer to be formed is more excellent.

The time of the pressurization treatment is not particularly limited; however, it is preferably 1 to 6 hours and more preferably 1 to 20 minutes from the viewpoint that the ionic conductivity of the solid electrolyte layer to be formed is more excellent and the viewpoint of productivity.

Further, a heating treatment may be carried out at the time of the pressurization treatment. The heating temperature at the time of the heating treatment is not particularly limited; however, it is preferably 30 to 300°C, and the heating time is more preferably 1 minute to 6 hours.

The atmosphere during the pressurization is not particularly limited, and examples thereof include an atmosphere of atmospheric air, an atmosphere of dried air (the dew point: -20°C or lower), and an atmosphere of inert gas (for example, argon, helium, or nitrogen).

It is also preferable that the lithium-based solid electrolyte and the inorganic solid electrolyte according to the embodiment of the present invention are used as components of a composition for forming an electrode. That is, the composition for forming an electrode according to the embodiment of the present invention contains the above-described lithium-based solid electrolyte according to the embodiment of the present invention.

The composition for forming an electrode according to the embodiment of the present invention contains the above-described lithium-based solid electrolyte or inorganic solid electrolyte according to the embodiment of the present invention, and an active material.

The mixing ratio of the lithium-based solid electrolyte or inorganic solid electrolyte to the active material in the composition for forming an electrode is not particularly limited. However, although the content ratio of the lithium-based solid electrolyte or inorganic solid electrolyte to the active material (mass of lithium-based solid electrolyte or mass of inorganic solid electrolyte/mass of active material) is not particularly limited, it is preferably 0.01 to 50 and more preferably 0.05 to 20.

The lithium-based solid electrolyte and the inorganic solid electrolyte, which are contained in the composition for forming an electrode, are as described above.

Examples of the active material include a positive electrode active material and a negative electrode active material. Hereinafter, the active material will be described in detail.

(Negative electrode active material)

The negative electrode active material is preferably capable of reversibly intercalating and deintercalating lithium ions. The negative electrode active material is not particularly limited, and examples thereof include a carbonaceous material, an oxide of a metal or metalloid element, a lithium single body, a lithium alloy, and a negative electrode active material capable of forming an alloy with lithium.

The carbonaceous material that is used as the negative electrode active material is a material substantially consisting of carbon. Examples thereof include petroleum pitch, carbon black such as acetylene black (AB), graphite (natural graphite or artificial graphite such as vapor-grown graphite), and carbonaceous material obtained by baking a variety of synthetic resins such as polyacrylonitrile (PAN)-based resins or furfuryl alcohol resins.

Furthermore, examples thereof also include a variety of carbon fibers such as PAN-based carbon fibers, cellulose-based carbon fibers, pitch-based carbon fibers, vapor-grown carbon fibers, dehydrated polyvinyl alcohol (PVA)-based carbon fibers, lignin carbon fibers, vitreous carbon fibers, and activated carbon fibers, mesophase microspheres, graphite whisker, and tabular graphite.

These carbonaceous materials can be classified into non-graphitizable carbonaceous materials (also referred to as "hard carbon") and graphitizable carbonaceous materials based on the graphitization degree.

In addition, it is preferable that the carbonaceous material has the surface spacing, density, or crystallite size described in JP1987-022066A (JP-S62-022066A), JP1990-006856A (JP-H2-006856A), and JP1991-045473A (JP-H3-045473A). The carbonaceous material is not necessarily a single material and, for example, may be a mixture of natural graphite and artificial graphite described in JP1993-090844A (JP-H5-090844A) or graphite having a coating layer described in JP1994-004516A (JP-H6-004516A).

The carbonaceous material is preferably hard carbon or graphite, and it is more preferably graphite.

The oxide of a metal element or a metalloid element that can be used as the negative electrode active material is not particularly limited as long as it is an oxide capable of intercalating and deintercalating lithium, and examples thereof include an oxide of a metal element (metal oxide), a composite oxide of a metal element or a composite oxide of a metal element and a metalloid element, and an oxide of a metalloid element (a metalloid oxide). It is noted that a composite oxide of a metal element and a composite oxide of a metal element and a metalloid element are also collectively referred to as "metal composite oxide).

This oxide is preferably a noncrystalline oxide, and it is also preferably a chalcogenide which is a reaction product between a metal element and a Group 16 element of the periodic table.

In the present invention, the metalloid element refers to an element having intermediate properties between those of a metal element and a non-metalloid element. Typically, the metalloid elements include six elements including boron, silicon, germanium, arsenic, antimony, and tellurium, and further include three elements including selenium, polonium, and astatine.

In addition, "noncrystalline" represents an oxide having a broad scattering band with an apex in a range of $20°$ to $40°$ in terms of the $2\theta$ value in case of being measured by an X-ray diffraction method using a $CuK\alpha$ ray, and the oxide may have a crystalline diffraction line. The highest intensity in a crystalline diffraction line observed in a range of $40°$ to $70°$ in terms of the $2\theta$ value is preferably 100 times or less and more preferably 5 times or less with respect to the intensity of a diffraction line at the apex in a broad scattering band observed in a range of $20°$ to $40°$ in terms of the $2\theta$ value, and it is still more preferable that the oxide does not have a crystalline diffraction line.

In the compound group consisting of the noncrystalline oxides and the chalcogenides, noncrystalline oxides of metalloid elements and chalcogenides are more preferable, and (composite) oxides consisting of one kind of element or a combination of two or more kinds of elements selected from elements (for example, Al, Ga, Si, Sn, Ge, Pb, Sb, and Bi) belonging to Groups 13 (IIIB) to 15 (VB) in the periodic table or chalcogenides are still more preferable.

The noncrystalline oxide and the chalcogenide are preferably $Ga_2O_3$, $GeO$, $PbO$, $PbO_2$, $Pb_2O_3$, $Pb_2O_4$, $Pb_3O_4$,

$Sb_2O_3$, $Sb_2O_4$, $Sb_2O_8Bi_2O_3$, $Sb_2O_8Si_2O_3$, $Sb_2O_5$, $Bi_2O_3$, $Bi_2O_4$, GeS, PbS, $PbS_2$, $Sb_2S_3$, or $Sb_2S_5$.

The negative electrode active material which can be used in combination with noncrystalline oxide negative electrode active material containing Sn, Si, or Ge as a major constitutional component is preferably a carbonaceous material capable of intercalating and/or deintercalating lithium ions or lithium metal, a lithium single body, a lithium alloy, or a negative electrode active material that is capable of being alloyed with lithium.

It is preferable that an oxide of a metal element or a metalloid element (in particular, a metal (composite) oxide) and the chalcogenide contains at least one of titanium or lithium as the constitutional component from the viewpoint of high current density charging and discharging characteristics.

Examples of the metal composite oxide (lithium composite metal oxide) including lithium include a composite oxide of lithium oxide and the above metal composite oxide or the above chalcogenide. More specific examples thereof include $Li_2SnO_2$.

It is also preferable that the negative electrode active material (for example, a metal oxide) contains a titanium element (a titanium oxide). Specifically, $Li_4Ti_5O_{12}$ (lithium titanium oxide [LTO]) is preferable from the viewpoint that the volume variation during the intercalation and deintercalation of lithium ions is small, and thus the high-speed charging and discharging characteristics are excellent, and the deterioration of electrodes is suppressed, whereby it becomes possible to improve the life of the all-solid state lithium ion secondary battery.

The lithium alloy as the negative electrode active material is not particularly limited as long as it is typically used as a negative electrode active material for an all-solid state lithium ion secondary battery, and examples thereof include a lithium aluminum alloy.

The negative electrode active material capable of forming an alloy with lithium is not particularly limited as long as it is typically used as a negative electrode active material for an all-solid state lithium ion secondary battery. Examples of the negative electrode active material include a negative electrode active material (an alloy) containing a silicon element or a tin element and a metal such as Al or In, where a negative electrode active material (a silicon element-containing active material) containing a silicon element capable of exhibiting high battery capacity is preferable, and a silicon element-containing active material in which the content of the silicon element is 50% by mole or more with respect to all constitutional elements is more preferable.

In general, a negative electrode containing the negative electrode active material (for example, an Si negative electrode containing a silicon element-containing active material or an Sn negative electrode containing an active material containing a tin element) can intercalate a larger amount of Li ions than a carbon negative electrode (for example, graphite or acetylene black). That is, the amount of Li ions intercalated per unit mass increases. Therefore, it is possible to increase the battery capacity. As a result, there is an advantage that the battery driving duration can be extended.

Examples of the silicon element-containing active material include a silicon-containing alloy (for example, $LaSi_2$, $VSi_2$, La-Si, Gd-Si, or Ni-Si) containing a silicon material such as Si or SiOx ($0 < x \leq 1$) and furthermore titanium, vanadium, chromium, manganese, nickel, copper, or lanthanum, or a structured active material thereof (for example, $LaSi_2$/Si). Other examples thereof include an active material containing a silicon element and a tin element, such as SnSiOs or $SnSiS_3$. It is noted that since SiOx itself can be used as a negative electrode active material (a metalloid oxide) and Si is produced along with the operation of an all-solid state lithium ion secondary battery, SiOx can be used as a negative electrode active material (or a precursor material thereof) capable of being alloyed with lithium.

Examples of the negative electrode active material having a tin element include an active material containing Sn, SnO, $SnO_2$, SnS, or $SnS_2$, and the above-described active material including a silicon element and a tin element.

From the viewpoint of battery capacity, the negative electrode active material is preferably a negative electrode active material capable of being alloyed with lithium, more preferably the above-described silicon material or silicon-containing alloy (an alloy containing a silicon element), and still more preferably silicon (Si) or a silicon-containing alloy.

The shape of the negative electrode active material is not particularly limited; however, it is preferably a particle shape. The volume average particle diameter of the negative electrode active material is not particularly limited; however, it is preferably 0.1 to 60 $\mu$m, more preferably 0.5 to 20 $\mu$m, and still more preferably 1.0 to 15 $\mu$m.

The volume average particle diameter is measured according to the following procedure.

Using water (heptane in a case where the inorganic solid electrolyte is unstable in water), the negative electrode active material is diluted in a 20 mL sample bottle to prepare 1% by mass of a dispersion liquid. The diluted dispersion liquid sample is irradiated with 1 kHz ultrasonic waves for 10 minutes and is then immediately used for testing. Data collection is carried out 50 times using this dispersion liquid sample, a laser diffraction/scattering-type particle size distribution analyzer, and a quartz cell for measurement at a temperature of 25°C to obtain the volume average particle diameter. Other detailed conditions and the like can be found in JIS Z8828: 2013 "Particle Diameter Analysis-Dynamic Light Scattering" as necessary. Five samples per level are prepared, and the average values therefrom are employed.

One kind of negative electrode active material may be used singly, or two or more kinds thereof may be used in combination.

The surface of the negative electrode active material may be subjected to surface coating with another metal oxide.

Examples of the surface coating agent include a metal oxide containing Ti, Nb, Ta, W, Zr, Al, Si, or Li. Examples thereof include titanium oxide spinel, tantalum-based oxides, niobium-based oxides, and lithium niobate-based compounds, and specific examples thereof include $Li_4Ti_5O_{12}$, $Li_2Ti_2O_5$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, $Li_2MoO_4$, $Li_3BO_3$, $LiBO_2$, $Li_2CO_3$, $Li_2SiO_3$, $SiO_2$, $TiO_2$, $ZrO_2$, $Al_2O_3$, and $B_2O_3$.

In addition, the surface of the electrode containing the negative electrode active material may be subjected to a surface treatment with sulfur or phosphorous.

Further, the particle surface of the negative electrode active material may be subjected to a surface treatment with an actinic ray or an active gas (for example, plasma) before or after the surface coating.

(Positive electrode active material)

The positive electrode active material is preferably capable of reversibly intercalating and/or deintercalating lithium ions. The positive electrode active material is not particularly limited. It is preferably a transition metal oxide and more preferably a transition metal oxide having a transition metal element $M^a$ (one or more kinds of elements selected from Co, Ni, Fe, Mn, Cu, and V). In addition, an element $M^b$ (an element of Group 1 (Ia) of the metal periodic table other than lithium, an element of Group 2 (IIa), or an element such as Al, Ga, In, Ge, Sn, Pb, Sb, Bi, Si, P, or B) may be mixed into this transition metal oxide. The mixing amount is preferably 0% to 30% by mol of the amount (100% by mol) of the transition metal element $M^a$. It is more preferable that the transition metal oxide is synthesized by mixing the above components such that a molar ratio $Li/M^a$ is 0.3 to 2.2.

Specific examples of the transition metal oxides include transition metal oxides having a bedded salt-type structure (MA), transition metal oxides having a spinel-type structure (MB), lithium-containing transition metal phosphoric acid compounds (MC), lithium-containing transition metal halogenated phosphoric acid compounds (MD), and lithium-containing transition metal silicate compounds (ME). Among them, a transition metal oxide having a bedded salt-type structure (MA) is preferable, and $LiCoO_2$ or $LiNi_{1/3}Co_{1/3}Mm_{1/3}O_2$ is more preferable.

Examples of the transition metal oxides having a bedded salt-type structure (MA) include $LiCoO_2$ (lithium cobalt oxide [LCO]), $LiNi_2O_2$ (lithium nickelate), $LiNi_{0.85}Co_{0.10}Al_{0.05}O_2$ (lithium nickel cobalt aluminum oxide [NCA]), $LiNi_{1/3}Co_{1/3}Mn_{1/3}O_2$ (lithium nickel manganese cobalt oxide [NMC]), and $LiNi_{0.5}Mn_{0.5}O_2$ (lithium manganese nickelate).

Examples of the transition metal oxides having a spinel-type structure (MB) include $LiMn_2O_4$(LMO), $LiCoMnO_4$, $Li_2FeMn_3O_8$, $Li_2CuMn_3O_8$, $Li_2CrMn_3O_8$, and $Li_2NiMn_3O_8$.

Examples of the lithium-containing transition metal phosphoric acid compound (MC) include olivine-type iron phosphate salts such as $LiFePO_4$ and $Li_3Fe_2(PO_4)_3$, iron pyrophosphates such as $LiFeP_2O_7$, and cobalt phosphates such as $LiCoPO_4$, and a monoclinic NASICON-type vanadium phosphate salt such as $Li_3V_2(PO_4)_3$ (lithium vanadium phosphate).

Examples of the lithium-containing transition metal halogenated phosphoric acid compound (MD) include an iron fluorophosphate such as $Li_2FePO_4F$, a manganese fluorophosphate such as $Li_2MnPO_4F$, a cobalt fluorophosphate such as $Li_2CoPO_4F$.

Examples of the lithium-containing transition metal silicate compound (ME) include $Li_2FeSiO_4$, $Li_2MnSiO_4$, and $Li_2CoSiO_4$.

The shape of the positive electrode active material is not particularly limited; however, it is preferably a particle shape. The volume average particle diameter of the positive electrode active material is not particularly limited; however, it is preferably 0.1 to 50 $\mu$m. The volume average particle diameter of the positive electrode active material particles can be measured in the same manner as the volume average particle diameter of the negative electrode active material

A positive electrode active material obtained using a baking method may be used after being washed with water, an acidic aqueous solution, an alkaline aqueous solution, or an organic solvent.

Similar to the negative electrode active material, the positive electrode active material may be subjected to surface coating with the above-described surface coating agent, sulfur, or phosphorus, and further with an actinic ray.

One kind of positive electrode active material may be used singly, or two or more kinds thereof may be used in combination.

The composition for forming an electrode may contain other components in addition to the lithium-based solid electrolyte, the inorganic solid electrolyte, and the active material.

The composition for forming an electrode may contain a conductive auxiliary agent.

As the conductive auxiliary agent, a conductive auxiliary agent that is known as a general conductive auxiliary agent can be used. Examples of the conductive auxiliary agent include graphite such as natural graphite and artificial graphite, carbon black such as acetylene black, Ketjen black, and furnace black, amorphous carbon such as needle cokes, a carbon fiber such as a vapor-grown carbon fiber or a carbon nanotube, and a carbonaceous material such as graphene or fullerene, which are electron-conductive materials. Further, a conductive polymer such as polyaniline, polypyrrole, polythiophene, polyacetylene, or a polyphenylene derivative may also be used.

In addition to the above conductive auxiliary agent, a general conductive auxiliary agent containing no carbon atom such as a metal powder or metal fiber may be used.

It is noted that the conductive auxiliary agent refers to those that do not cause the intercalation and deintercalation of Li at a time when a battery is charged and discharged and do not function as an active material. As a result, among the conductive auxiliary agents, a conductive auxiliary agent that can function as the active material in the active material layer at the time of charging and discharging of the battery is classified as an active material but not as a conductive auxiliary agent. Whether or not the conductive auxiliary agent functions as the active material at the time of charging and discharging of a battery is not unambiguously determined but is determined by the combination with the active material.

In addition, examples of the other component also include the above-described binder and lithium salt.

The composition for forming an electrode may contain a dispersion medium.

Examples of the dispersion medium include water and various organic solvents.

The composition for forming an electrode may contain, as other components other than the respective components described above, an ionic liquid, a thickener, a crosslinking agent (an agent that causes a crosslinking reaction by radical polymerization, condensation polymerization, or ring-opening polymerization), a polymerization initiator (an agent that generates an acid or a radical by heat or light), an antifoaming agent, a leveling agent, a dehydrating agent, and an antioxidant.

The method of forming electrodes (a negative electrode active material layer and a positive electrode active material layer) using the above-described composition for forming an electrode is not particularly limited; however, examples thereof include a method of applying a composition for forming an electrode to form an electrode. It is noted that, as necessary, the formed coating film may be subjected to a pressurization treatment.

The coating method for a composition for forming an electrode is not particularly limited, and examples thereof include spray coating, spin coating, dip coating, slit coating, stripe coating, an aerosol deposition method, thermal spraying, and bar coating.

It is noted that after applying the composition for forming an electrode, the obtained coating film may be subjected to a drying treatment, as necessary. The drying temperature is not particularly limited; however, the lower limit thereof is preferably 30°C or higher, more preferably 60°C or higher, and still more preferably 80°C or higher. The upper limit of the drying temperature is preferably 300°C or lower and more preferably 250°C or lower.

The method of subjecting a coating film to a pressurization treatment is not particularly limited; however, examples thereof include a method using a known press device (for example, a hydraulic cylinder pressing machine).

The pressurizing force at the time of the pressurization treatment is not particularly limited; however, it is preferably 5 to 1,500 MPa and more preferably 300 to 600 MPa.

The time of the pressurization treatment is not particularly limited; however, it is preferably 1 minute to 6 hours and more preferably 1 to 20 minute from the viewpoint of productivity.

Further, a heating treatment may be carried out at the time of the pressurization treatment. The heating temperature at the time of the heating treatment is not particularly limited; however, it is preferably 30 to 300°C, and the heating time is preferably 1 minute to 6 hours.

The atmosphere during the pressurization is not particularly limited, and examples thereof include an atmosphere of atmospheric air, an atmosphere of dried air (the dew point: -20°C or lower), and an atmosphere of inert gas (for example, argon, helium, or nitrogen).

<Solid electrolyte sheet>

The lithium-based solid electrolyte and the inorganic solid electrolyte according to the embodiment of the present invention may be contained in a solid electrolyte sheet.

The solid electrolyte sheet is preferably used as a solid electrolyte sheet for an all-solid state battery.

The solid electrolyte sheet can be formed by molding the lithium-based solid electrolyte or inorganic solid electrolyte according to the embodiment of the present invention into a sheet shape. The molding method is not particularly limited, and for example, a dispersion liquid containing the lithium-based solid electrolyte or inorganic solid electrolyte according to the embodiment of the present invention may be subjected to press molding to form a sheet.

<Electrode sheet for all-solid state secondary battery>

The lithium-based solid electrolyte and the inorganic solid electrolyte according to the embodiment of the present invention may be contained in an electrode sheet for an all-solid state secondary battery. In particular, the lithium-based solid electrolyte according to the embodiment of the present invention may be contained in an electrode sheet for an all-solid state lithium ion secondary battery.

Hereinafter, an electrode sheet for an all-solid state lithium ion secondary battery will be mainly described in detail.

The electrode sheet for an all-solid state lithium ion secondary battery according to the embodiment of the present invention is a sheet-shaped molded body capable of forming an electrode active material layer of an all-solid state lithium ion secondary battery, and it is preferably used in an electrode or a laminate of an electrode and a solid electrolyte layer.

It suffices that an electrode sheet for an all-solid state lithium ion secondary battery according to the embodiment of the present invention (simply, also referred to as an "electrode sheet") is an electrode sheet including an active material electrode layer (hereinafter, simply also referred to as an "active material electrode layer") selected from the group consisting of a negative electrode active material layer and a positive electrode active material layer, and it may be a sheet in which an active material electrode layer is formed on a base material (a collector) or may be a sheet that is formed of an active material electrode layer without containing a base material. The electrode sheet is typically a sheet including a collector and an active material electrode layer, and examples of the aspect thereof include an aspect including a collector, an active material electrode layer, and a solid electrolyte layer in this order and an aspect including a collector, an active material electrode layer, a solid electrolyte layer, and an active material electrode layer in this order.

The electrode sheet according to the embodiment of the present invention may include the above-described other layer. The layer thickness of each of the layers forming the electrode sheet according to the embodiment of the present invention is the same as the layer thickness of each of the layers described later regarding the all-solid state lithium ion secondary battery.

In the sheet for an all-solid state lithium ion secondary battery according to the embodiment of the present invention, at least one layer of the active material electrode layers contains the lithium-based solid electrolyte according to the embodiment of the present invention.

A manufacturing method for an electrode sheet for an all-solid state lithium ion secondary battery according to the embodiment of the present invention is not particularly limited. For example, the electrode sheet for an all-solid state secondary battery according to the embodiment of the present invention can be manufactured by forming the active material electrode layer using the composition for forming an electrode according to the embodiment of the present invention.

Examples thereof include a method of applying a composition for forming an electrode onto a collector (another layer may be interposed) to form a coating film and subjecting the resultant coating film to a pressurization treatment.

Examples of the method of applying a composition for forming an electrode and the method of subjecting a coating film to a pressurization treatment include the methods described in the composition for forming an electrode.

<All-solid state secondary battery>

The all-solid state secondary battery according to the embodiment of the present invention includes a positive electrode active material layer, a negative electrode active material layer facing the positive electrode active material layer, and a solid electrolyte layer disposed between the positive electrode active material layer and the negative electrode active material layer. The positive electrode active material layer is preferably formed on a positive electrode collector to configure a positive electrode. The negative electrode active material layer is preferably formed on a negative electrode collector to configure a negative electrode.

At least one layer of the negative electrode active material layer, the positive electrode active material layer, or the solid electrolyte layer contains the lithium-based solid electrolyte or inorganic solid electrolyte according to the embodiment of the present invention, and it preferably contains a lithium-based solid electrolyte.

That is, the present invention also relates to an electrode for an all-solid state secondary battery, which includes an active material layer containing an active material and the lithium-based solid electrolyte or inorganic solid electrolyte according to the embodiment of the present invention, and includes a collector.

Hereinafter, the all-solid state lithium ion secondary battery according to the embodiment of the present invention will be mainly described in detail.

The all-solid state lithium ion secondary battery according to the embodiment of the present invention includes a positive electrode active material layer, a negative electrode active material layer facing the positive electrode active material layer, and a solid electrolyte layer disposed between the positive electrode active material layer and the negative electrode active material layer. The positive electrode active material layer is preferably formed on a positive electrode collector to configure a positive electrode. The negative electrode active material layer is preferably formed on a negative electrode collector to configure a negative electrode.

At least one layer of the negative electrode active material layer, the positive electrode active material layer, or the solid electrolyte layer contains the lithium-based solid electrolyte according to the embodiment of the present invention.

The thickness of each of the negative electrode active material layer, the solid electrolyte layer, and the positive electrode active material layer is not particularly limited. In case of taking a dimension of a general all-solid state lithium ion secondary battery into account, the thickness of each of the layers is preferably 10 to 1,000 $\mu$m and more preferably

20 $\mu$m or more and less than 500 $\mu$m.

The thickness of at least one of the positive electrode active material layer or the negative electrode active material layer is still more preferably 50 $\mu$m or more and less than 500 $\mu$m.

Each of the positive electrode active material layer and the negative electrode active material layer may include a collector on the side opposite to the solid electrolyte layer.

Depending on the use application, the all-solid state lithium ion secondary battery according to the embodiment of the present invention may be used as the all-solid state lithium ion secondary battery having the above-described structure as it is but is preferably enclosed in an appropriate housing in order to be used in the form of a dry cell. The housing may be a metallic housing or a resin (plastic) housing. Examples of the metallic housing include a housing of an aluminum alloy and a housing made of stainless steel. It is preferable that the metallic housing is classified into a positive electrode-side housing and a negative electrode-side housing and that the positive electrode-side housing and the negative electrode-side housing are electrically connected to the positive electrode collector and the negative electrode collector, respectively. The positive electrode-side housing and the negative electrode-side housing are preferably integrated by being joined together through a gasket for short circuit prevention.

Hereinafter, the all-solid state lithium ion secondary battery of the preferred embodiments of the present invention will be described with reference to Fig. 7; however, the present invention is not limited thereto.

Fig. 7 is a cross-sectional view schematically illustrating an all-solid state lithium ion secondary battery according to a preferred embodiment of the present invention. In the case of being seen from the negative electrode side, an all-solid state lithium ion secondary battery 10 of the present embodiment includes a negative electrode collector 1, a negative electrode active material layer 2, a solid electrolyte layer 3, a positive electrode active material layer 4, and a positive electrode collector 5 in this order.

At least one layer of the negative electrode active material layer 2, the positive electrode active material layer 4, or the solid electrolyte layer 3 contains the lithium-based solid electrolyte according to the embodiment of the present invention.

The respective layers are in contact with each other, and thus structures thereof are adjacent. In a case in which the above-described structure is employed, during charging, electrons (e$^-$) are supplied to the negative electrode side, and lithium ions (Li$^+$) are accumulated on the negative electrode side. On the other hand, during discharging, the lithium ions (Li$^+$) accumulated in the negative electrode side return to the positive electrode, and electrons are supplied to an operation portion 6. In an example illustrated in the drawing, an electric bulb is employed as a model at the operation portion 6 and is lit by discharging.

The negative electrode active material layer 2 contains the above-described negative electrode active material.

The positive electrode active material layer 4 contains the above-described positive electrode active material.

The positive electrode collector 5 and the negative electrode collector 1 are preferably an electron conductor.

Examples of the material that forms the positive electrode collector include aluminum, an aluminum alloy, stainless steel, nickel, and titanium, where aluminum or an aluminum alloy is preferable. It is noted that examples of the positive electrode collector include a collector (a collector on which a thin film has been formed) obtained by subjecting the surface of aluminum or stainless steel to a treatment with carbon, nickel, titanium, or silver.

Examples of the material that forms the negative electrode collector include aluminum, copper, a copper alloy, stainless steel, nickel, and titanium, where aluminum, copper, a copper alloy, or stainless steel is preferable. It is noted that examples of the negative electrode collector include a collector obtained by subjecting the surface of aluminum, copper, copper alloy, or stainless steel to a treatment with carbon, nickel, titanium, or silver.

The shape of the collector is generally a film sheet shape; however, another shape may be used.

The thickness of the collector is not particularly limited; however, it is preferably 1 to 500 $\mu$m.

In addition, protrusions and recesses are preferably provided on the surface of the collector by carrying out a surface treatment.

The manufacturing method for the all-solid state lithium ion secondary battery described above is not particularly limited, and examples thereof include known methods. Among them, a method using the above-described composition for forming an electrode and/or dispersion liquid for forming a solid electrolyte layer is preferable.

For example, a composition for forming a positive electrode, which contains a positive electrode active material, is applied onto a metal foil which is a positive electrode collector to form a positive electrode active material layer, a dispersion liquid for forming a solid electrolyte layer is subsequently applied onto this positive electrode active material layer to form a solid electrolyte layer, a composition for forming a negative electrode, which contains a negative electrode active material, is further applied onto the solid electrolyte layer to form a negative electrode active material layer, and a negative electrode collector (a metal foil) is overlaid on the negative electrode active material layer to subject the obtained laminate to a pressurization treatment, whereby it is possible to obtain an all-solid state lithium ion secondary battery having a structure in which the solid electrolyte layer is sandwiched between the positive electrode active material layer and the negative electrode active material layer. A desired all-solid state lithium ion secondary battery can also be manufactured by enclosing the all-solid state secondary battery in a housing.

In addition, it is also possible to produce an all-solid state lithium ion secondary battery by carrying out the forming method for each layer in reverse order to form a negative electrode active material layer, a solid electrolyte layer, and a positive electrode active material layer on a negative electrode collector and overlaying a positive electrode collector thereon.

Alternatively, as another method, a positive electrode active material layer, a solid electrolyte layer, and a negative electrode active material layer may be separately prepared and laminated to produce an all-solid state lithium ion secondary battery.

The all-solid state lithium ion secondary battery is preferably initialized after production or before use. The initialization is not particularly limited, and it is possible to initialize an all-solid state lithium ion secondary battery by, for example, carrying out initial charging and discharging in a state where the pressing pressure is increased and then releasing the pressure up to a pressure at which the all-solid state secondary battery is ordinarily used.

<Use application of all-solid state secondary battery>

The all-solid state secondary battery according to the embodiment of the present invention (particularly, the all-solid state lithium ion secondary battery) can be applied to various applications. The application aspect thereof is not particularly limited, and in a case of being mounted in an electronic apparatus, examples thereof include a notebook computer, a pen-based input personal computer, a mobile personal computer, an e-book player, a mobile phone, a cordless phone handset, a pager, a handy terminal, a portable fax, a mobile copier, a portable printer, a headphone stereo, a video movie, a liquid crystal television, a handy cleaner, a portable CD, a mini disc, an electric shaver, a transceiver, an electronic notebook, a calculator, a memory card, a portable tape recorder, a radio, and a backup power supply. Additionally, examples of the consumer usage thereof include an automobile, an electric vehicle, a motor, a lighting instrument, a toy, a game device, a road conditioner, a watch, a strobe, a camera, and a medical device (a pacemaker, a hearing aid, a shoulder massage device, and the like). Furthermore, the all-solid state secondary battery can be used for a variety of military usages and universe usages. In addition, the all-solid state secondary battery can also be combined with a solar battery.

Examples

Hereinafter, the characteristics of the present invention will be described more specifically with reference to Examples and Comparative Examples. The materials, using amounts, proportions, treatment details, treatment procedures, and the like described in the following Examples can be modified as appropriate as long as the gist of the present invention is maintained. Therefore, the scope of the present invention should not be construed to be limited by specific examples described below.

<Example 1>

Using a ball mill (P-7 manufactured by FRITSCH), a $Li_2B_4O_7$ (247) powder (manufactured by RARE METALLIC Co., Ltd.) was subjected to ball milling to obtain a lithium compound under the following conditions, pot: stabilized zirconia (YSZ) (45 ml), pulverization ball: stabilized zirconia (YSZ) (average particle diameter: 5 mm, number of balls: 50 balls), rotation speed: 370 revolutions per minute (rpm), LBO powder (a powdery $Li_2B_4O_7$ crystal (manufactured by RARE METALLIC Co., Ltd.) amount: 1 g, atmosphere: atmospheric air, and treatment time of ball milling: 100 hours.

0.05 g of $Li(FSO_2)_2N$ (LiFSI), which is a Li salt, was added to the obtained lithium compound, and the resultant mixture was further subjected to ball milling for 100 hours. The obtained powder was added to water so that the powder concentration was 42% by mass, and the resultant mixture was subjected to ultrasonic dispersion for 30 minutes.

Subsequently, the obtained dispersion liquid was transferred to a glass petri dish and dried at 120°C for 2 hours in the atmospheric air to obtain a film of a lithium-based solid electrolyte. Subsequently, the obtained film was peeled off to obtain a powder.

The particle size distribution of the lithium-based solid electrolyte obtained as above was about several $\mu$m to 10 $\mu$m, and the median diameter (D50) was 1.5 $\mu$m.

It is noted that using the lithium-based solid electrolyte obtained as above, the X-ray total scattering measurement is carried out with SPring-8 BL04B2 (acceleration voltage: 61.4 keV, wavelength: 0.2019 Å). A sample was sealed in a Capton capillary of 2 mmcp or 1 mmcp, and the experiment was carried out. It is noted that the obtained data were subjected to Fourier transform as described above to obtain a reduced two-body distribution function.

As a result of the analysis, in a reduced two-body distribution function G(r) obtained from the X-ray total scattering measurement, the first peak of which G(r) of a peak top indicates 1.0 or more and the peak top is located at 1.43 Å and the second peak of which G(r) of a peak top indicates 1.0 or more and the peak top is located at 2.40 Å were confirmed in a range where r was 1 to 5 Å, and it was confirmed that the absolute value of G(r) in a range where r is more than 5 Å and 10 Å or less is less than 1.0 in ranges other than 3.50 ± 0.2 Å, 3.99 ± 0.2 Å, 5.85 ± 0.2 Å, 6.20 ± 0.2 Å, 7.25 ± 0.2 Å, 9.50 ± 0.2 Å, and 9.75 ± 0.2 Å.

From the above results, it was confirmed that the lithium-based solid electrolyte obtained by adding LiFSI and carrying out dispersion in water is noncrystalline. On the other hand, in the lithium-based solid electrolyte, the peaks attributed to the interatomic distance of B-O and the interatomic distance of B-B, which are observed in the general lithium tetraborate crystal, are maintained. A general lithium tetraborate crystal has a structure (a diborate structure) in which a $BO_4$ tetrahedron and a $BO_3$ triangle are present at a ratio of 1:1, and it is presumed that this structure is maintained in the lithium-based solid electrolyte.

A proportion of a full width at half maximum (a full width at half maximum 2) of a peak in which a chemical shift appears in a range of -100 to +100 ppm in a spectrum obtained in a case where a solid $^7$Li-NMR measurement of the lithium-based solid electrolyte is carried out at 120°C with respect to a full width at half maximum (a full width at half maximum 1) of a peak in which a chemical shift appears in a range of -100 to +100 ppm in a spectrum obtained in a case where the solid $^7$Li-NMR measurement of the lithium-based solid electrolyte obtained as above is carried out at 20°C, {(full width at half maximum 2/full width at half maximum 1) × 100}, was 33%.

The ratio of an area intensity of a second peak to an area intensity of a first peak in a spectrum obtained by carrying out a solid $^7$Li-NMR measurement at 20°C was 4%, where the lithium-based solid electrolyte had the second peak having a full width at half maximum of 5 ppm or less in a range where a chemical shift is -3 to 3 ppm in a case where the first peak appearing in a range of -100 to +100 ppm was subjected to waveform separation.

Using the lithium-based solid electrolyte obtained as above, an infrared absorption spectrum measurement was carried out under the conditions described above, and as a result, in the obtained infrared absorption spectrum, a ratio of a maximum absorption intensity in a wave number range of 3,000 to 3,500 cm$^{-1}$ to a maximum absorption intensity in a wave number range of 800 to 1,600 cm$^{-1}$ was 0.72.

In the Raman spectrum of the obtained lithium-based solid electrolyte, the coefficient of determination obtained by carrying out a linear regression analysis according to a least squares method in a wave number range of 600 to 850 cm$^{-1}$ was 0.9974.

The mass reduction rate in a case where the obtained lithium-based solid electrolysis was heated from 25°C to 800°C as described above was 29.8%.

Regarding the analysis of each of elements in the obtained lithium-based solid electrolyte, quantitative analysis was carried out by ICP-OES for lithium and boron or by combustion ion chromatography (combustion IC) for fluorine and sulfur, estimation was carried out for N from the analytical mass of sulfur in consideration of the amount of each of atoms in the Li salt, the analytical masses of elements other than O were added together for O, and calculation was carried out in terms of the difference from the total amount of the powder. The results are shown in the table described later.

<Example 2>

Using a ball mill (P-7 manufactured by FRITSCH), a $Li_2B_4O_7$ (247) powder (manufactured by RARE METALLIC Co., Ltd.) was subjected to ball milling to obtain a lithium compound under the following conditions, pot: stabilized zirconia (YSZ) (45 ml), pulverization ball: stabilized zirconia (YSZ) (average particle diameter: 5 mm, number of balls: 50 balls), rotation speed: 370 revolutions per minute (rpm), LBO powder (a powdery $Li_2B_4O_7$ crystal (manufactured by RARE METALLIC Co., Ltd.) amount: 1 g, atmosphere: atmospheric air, and treatment time of ball milling: 100 hours.

The obtained lithium compound was added to water at a powder concentration of 42% by mass, and the resultant mixture was subjected to ultrasonic dispersion for 30 minutes.

Next, 0.05 g of $Li(FSO_2)_2N$ (LiFSI) was added to the obtained dispersion liquid, and the resultant mixture was further subjected to ultrasonic dispersion for 30 minutes.

Subsequently, the obtained dispersion liquid was transferred to a glass petri dish and dried at 120°C for 2 hours in the atmospheric air to obtain a film of a lithium-based solid electrolyte. Subsequently, the obtained film was peeled off to obtain a powder. Using the obtained powder, various evaluations were carried out in the same manner as in Example 1. The results are summarized in the table described later.

<Example 3>

Using a ball mill (P-7 manufactured by FRITSCH), a $Li_2B_4O_7$ (247) powder (manufactured by RARE METALLIC Co., Ltd.) was subjected to ball milling to obtain a lithium compound under the following conditions, pot: made of stabilized zirconia (YSZ) (45 ml), pulverization ball: made of stabilized zirconia (YSZ) (average particle diameter: 5 mm, weight: 70 g), rotation speed: 530 revolutions per minute (rpm), LBO powder (a powdery $Li_2B_4O_7$ crystal (manufactured by RARE METALLIC Co., Ltd.) amount: 4.2 g, atmosphere: atmospheric air, and treatment time of ball milling: 100 hours. The obtained lithium compound was added to water at a powder concentration of 42% by mass, and the resultant mixture was subjected to ultrasonic dispersion for 60 minutes to obtain a solution 1.

Next, 4.65 g of Li(FSO$_2$)$_2$N (LiFSI) was added to water at a powder concentration of 87% by mass, and the resultant mixture was subjected to ultrasonic dispersion for 60 minutes to obtain a solution 2.

The obtained solution 1 and solution 2 were mixed, followed by mixing and stirring with a magnetic stirrer for 60 minutes. Subsequently, using a powder obtained by subjecting the obtained dispersion liquid to vacuum drying at 40°C and 10 Pa for 15 hours, various evaluations were carried out in the atmospheric air in the same manner as in Example 1. The results are summarized in the table described later.

<Example 4>

Using a ball mill (P-7 manufactured by FRITSCH), a Li$_2$B$_4$O$_7$ (247) powder (manufactured by RARE METALLIC Co., Ltd.) was subjected to ball milling to obtain a lithium compound under the following conditions, pot: made of stabilized zirconia (YSZ) (45 ml), pulverization ball: made of stabilized zirconia (YSZ) (average particle diameter: 5 mm, weight: 70 g), rotation speed: 530 revolutions per minute (rpm), LBO powder (a powdery Li$_2$B$_4$O$_7$ crystal (manufactured by RARE METALLIC Co., Ltd.) amount: 4.2 g, atmosphere: atmospheric air, and treatment time of ball milling: 100 hours. The obtained lithium compound was added to water at a powder concentration of 42% by mass, and the resultant mixture was subjected to ultrasonic dispersion for 60 minutes to obtain a solution 3.

Next, 3.67 g of Li(FSO$_2$)$_2$N (LiFSI) was added to water at a powder concentration of 87% by mass, and the resultant mixture was subjected to ultrasonic dispersion for 60 minutes to obtain a solution 4.

The obtained solution 3 and solution 4 were mixed, followed by mixing and stirring with a magnetic stirrer for 60 minutes. Subsequently, using a powder obtained by subjecting the obtained dispersion liquid to vacuum drying at 40°C and 10 Pa for 15 hours, various evaluations were carried out in the atmospheric air in the same manner as in Example 1. The results are summarized in the table described later.

<Example 5>

Using a ball mill (P-7 manufactured by FRITSCH), a Li$_2$B$_4$O$_7$ (247) powder (manufactured by RARE METALLIC Co., Ltd.) was subjected to ball milling to obtain a lithium compound under the following conditions, pot: made of stabilized zirconia (YSZ) (45 ml), pulverization ball: made of stabilized zirconia (YSZ) (average particle diameter: 5 mm, weight: 70 g), rotation speed: 530 revolutions per minute (rpm), LBO powder (a powdery Li$_2$B$_4$O$_7$ crystal (manufactured by RARE METALLIC Co., Ltd.) amount: 4.2 g, atmosphere: atmospheric air, and treatment time of ball milling: 100 hours. The obtained lithium compound was added to water at a powder concentration of 42% by mass, and the resultant mixture was subjected to ultrasonic dispersion for 60 minutes to obtain a solution 5.

Next, 7.13 g of Li(F$_3$CSO$_2$)$_2$N (LiTFSI) was added to water at a powder concentration of 87% by mass, and the resultant mixture was subjected to ultrasonic dispersion for 60 minutes to obtain a solution 6.

The obtained solution 5 and solution 6 were mixed, followed by mixing and stirring with a magnetic stirrer for 60 minutes. Subsequently, using a powder obtained by subjecting the obtained dispersion liquid to vacuum drying at 40°C and 10 Pa for 15 hours, various evaluations were carried out in the atmospheric air in the same manner as in Example 1. The results are summarized in the table described later.

It is noted that in Example 5, the amount of carbon shown in Table 2 described later was estimated from the analytical mass of sulfur in consideration of the amount of each of atoms in the Li salt.

<Comparative Example 1>

The powdery Li$_2$B$_4$O$_7$ crystal (the LBO powder) (manufactured by RARE METALLIC Co., Ltd.) (crystal powder) was subjected to powder compaction molding at room temperature (27°C) at an effective pressure of 220 MPa to obtain a compacted powder body for comparison. The ion conductivity of the obtained compacted powder body could not be detected.

<Reference Example>

Using a ball mill (P-7 manufactured by FRITSCH), a Li$_2$B$_4$O$_7$ (LBO) powder (manufactured by RARE METALLIC Co., Ltd.) was subjected to ball milling to obtain a lithium compound under the following conditions, pot: stabilized zirconia (YSZ) (45 ml), pulverization ball: stabilized zirconia (YSZ) (average particle diameter: 5 mm, number of balls: 50 balls), rotation speed: 500 revolutions per minute (rpm), LBO powder (a powdery Li$_2$B$_4$O$_7$ crystal (manufactured by RARE METALLIC Co., Ltd.) amount: 2 g, atmosphere: atmospheric air, and treatment time of ball milling: 100 hours. Various evaluations were carried out using the obtained lithium compound in the same manner as in Example 1.

The particle size distribution of the obtained lithium compound was about several μm to 10 μm, and the median diameter (D50) was 1.5 μm. In addition, the bulk elastic modulus of the obtained lithium compound was 36 GPa. It is noted that the bulk elastic modulus of the LBO powder before the ball milling treatment was 47 GPa.

The bulk elastic modulus of the lithium compound was measured according to an ultrasonic attenuation method. Specifically, first, a suspension in which the lithium compound was suspended in pure water was prepared. The content of the lithium compound in the suspension was set to 1.2% by mass with respect to the total mass of the suspension. Next, the ultrasonic attenuation spectrum of the suspension is measured, and the bulk elastic modulus (GPa) of the lithium compound is determined from the fitting according to the scattering attenuation theoretical expression. It is noted that at the time of calculating a bulk elastic modulus, the fitting was carried out by setting the density of the specific solid electrolyte to 2.3 g/mL and the Poisson's ratio to 0.12. In addition, regarding the fitting according to the above-described scattering attenuation theoretical expression, the bulk elastic modulus was calculated by using the expression (7), the expression (12), and the expression (13) described in Kohjiro Kubo et al., Ultrasonics 62 (2015), pages 186-194.

<Various evaluations (part 1)>

(Measurement of ion conductivity)

The lithium-based solid electrolyte obtained in each of Examples was subjected to powder compaction molding at room temperature (27°C) at an effective pressure of 220 MPa to obtain a compacted powder body. In foils were respectively installed on the front surface and the back surface of the obtained compacted powder body, and the ion conductivity was estimated from the analysis of the arc diameter of the Cole-Cole plot (the Nyquist plot) obtained by measuring the alternating current impedance (measurement temperature: 27°C or 60°C, applied voltage: 50 mV, measurement frequency range: 1Hz to 1 MHz) with the two In electrodes being interposed.

(X-ray total scattering measurement)

Using the lithium-based solid electrolyte of each of Examples, the crystal powder of each of Comparative Examples, and the lithium compound of each of Reference Examples, the X-ray total scattering measurement was carried out with SPring-8 BL04B2 (acceleration voltage: 61.4 keV, wavelength: 0.2019 Å). A sample was sealed in a Capton capillary of 2 mm$\varphi$ or 1 mm$\varphi$, and the experiment was carried out. It is noted that the obtained data were subjected to Fourier transform as described above to obtain a reduced two-body distribution function.

From the results of analysis, in a reduced two-body distribution function G(r) obtained from the X-ray total scattering measurement, in a case where a first peak of which a peak top is located in a range where r is 1.43 ± 0.2 Å and a second peak of which a peak top is located in a range where r is 2.40 ± 0.2 Å are present, and G(r) of the peak top of the first peak and G(r) of the peak top of the second peak indicates more than 1.0, the column of "Short-distance G(r)" in Table 3 was denoted as "A", and regarding the other cases, it was denoted as "B".

It is noted that in Examples 1 to 4 shown in Table 3 described later and Examples 8 to 12 shown in Table 6 described later, the value of G(r) at the peak top of the first peak was 1.2 or more.

In addition, in a case where the absolute value of G(r) is less than 1.0 in a range where r is more than 5 Å and 10 Å or less in the reduced two-body distribution function G(r), the column of "Long-distance G(r)" in Table 3 was denoted as "A", and regarding the other cases, it was denoted as "B".

(X-ray diffraction measurement)

Using a CuK$\alpha$ ray, the lithium-based solid electrolyte of each of Examples, the crystal powder of each of Comparative Examples, and the lithium compound of each of Reference Examples were subjected to the X-ray diffraction measurement. The measurement conditions were 0.01 °/step and 3 °/min.

From the results of the measurement, in the obtained diffraction pattern, a case where the above-described requirement Y was satisfied was denoted as "A", and a case where the requirement Y was not satisfied was denoted as "B".

It is noted that in Examples 1 to 5 shown in Table 3 described later and Examples 6 to 13 shown in Table 6 described later, in the X-ray diffraction pattern, none of the first peak, the second peak, the third peak, and the fourth peak were present, or the intensity ratio of at least one specific peak selected from the group consisting of the first peak, the second peak, the third peak, and the fourth peak was 2.0 or less.

In Table 1, the column of "Element analysis" indicates the molar content amount of each element as a relative value in a case where the Li content is set to "1.00" in the composition of the lithium-based solid electrolyte obtained in each of Examples.

In Table 2, the column of "Element analysis" indicates the molar content amount of each element as a relative value in a case where the B content is set to "4.00" in the composition of the lithium-based solid electrolyte obtained in each of Examples.

In the table, the column of "Proportion (%) of full width at half maximum" indicates a proportion (%) of a full width at half maximum of a peak in which a chemical shift appears in a range of -100 to +100 ppm in a spectrum obtained in a case where a solid $^7$Li-NMR measurement of the lithium-based solid electrolyte is carried out at 120°C, with respect to a full width at half maximum of a peak in which a chemical shift appears in a range of -100 to +100 ppm in a spectrum obtained in a case where the solid $^7$Li-NMR measurement of the obtained lithium-based solid electrolyte is carried out at 20°C,

In the table, the column of "Ratio of area intensity" indicates the ratio of the area intensity of the second peak to the area intensity of the first peak, described above. The column of "Numerical value (%)" indicates a specific numerical value, and the column of "Range" indicates to which range the numerical value of each of Examples and Comparative Examples belong according to the following criteria (Range of ratio of area intensity). It is noted that in Examples 4 and 5, the column of "Numerical value (%)" does not show a numerical value, and the column of "Range" shows which range a numerical value belongs to.

(Range of ratio of area intensity)

A: A case where the ratio of area intensity is 15% or more
B: A case where the ratio of area intensity is 0.5% or more and less than 15%
C: A case where the ratio of area intensity is less than 0.5%

In the table, the column of "Maximum absorption intensity ratio", indicates the ratio of the maximum absorption intensity in a wave number range of 3,000 to 3,500 cm$^{-1}$ to the maximum absorption intensity in a wave number range of 800 to 1,600 cm$^{-1}$ in an infrared absorption spectrum of the lithium-based solid electrolyte. The column of "Numerical value" indicates a specific numerical value, and the column of "Range" indicates to which range the numerical value of each of Examples and Comparative Examples belong according to the following criteria (Range of maximum absorption intensity ratio range). It is noted that, in Examples 4 and 5, the column of "Numerical value" does not show a numerical value, and the column of "Range" shows which range a numerical value belongs to.

(Range of maximum absorption intensity ratio range)

A: A case where the range of maximum absorption intensity ratio is 0.20 or more
B: A case where the range of maximum absorption intensity ratio is less than 0.20

In the table, the column of "Maximum absorption intensity ratio (in $N_2$ atmosphere and 90°C heating)", indicates a ratio of a maximum absorption intensity in a wave number range of 3,000 to 3,500 cm$^{-1}$ to a maximum absorption intensity in a wave number range of 800 to 1,600 cm$^{-1}$ in an infrared absorption spectrum obtained by heating the lithium-based solid electrolyte at 90°C for 5 minutes and then subjecting the lithium-based solid electrolyte after the heating treatment to an infrared absorption spectrum measurement.

In the table, the column of "Coefficient of determination" indicates a coefficient of determination, which is obtained by carrying out a linear regression analysis according to a least squares method in a wave number range of 600 to 850 cm$^{-1}$ in a Raman spectrum.

In the column of "Requirement T" in the table, a case where the above-described requirement T is satisfied is denoted as "A", and a case where it is not satisfied is denoted as "B". It is noted that in the Raman spectrum of the lithium-based solid electrolyte of each of Examples 1 to 5, none of the first peak having a peak top at 710 to 730 cm$^{-1}$ and having a full width at half maximum of 5 cm$^{-1}$ or more, the second peak having a peak top at 770 to 790 cm$^{-1}$ and having a full width at half maximum of 5 cm$^{-1}$ or more, and the third peak having a peak top at 1,020 to 1,040 cm$^{-1}$ and having a full width at half maximum of 5 cm$^{-1}$ or more, which are defined in the requirement T, were present.

In the table, the column of "Mass reduction rate (%)" indicates the above-described mass reduction rate in a case where the lithium-based solid electrolyte has been heated to 800°C.

In the table, "-" means that the measured value is not indicated.

It is noted that in Examples 1 to 5, all of the lithium compounds obtained by subjecting the $Li_2B_4O_7$ (247) powder (manufactured by RARE METALLIC Co., Ltd.) to the ball milling treatment satisfied the requirements S 1 to S3 described above.

More specifically, in Examples 1 to 5, none of the first peak to the third peak, which are defined in the requirement S2, were present in the Raman spectrum of the lithium compound obtained by subjecting the $Li_2B_4O_7$ (247) powder (manufactured of RARE METALLIC Co., Ltd.) to the ball milling treatment.

In addition, in Examples 1 to 5, in the X-ray diffraction pattern of the lithium compound obtained by subjecting the $Li_2B_4O_7$ (247) powder (manufactured by RARE METALLIC Co., Ltd.) to the ball milling treatment, where the X-ray diffraction pattern had been obtained from the X-ray diffraction measurement using a CuKα ray, none of the first peak to the fourth peak, which are defined in the requirement S3, were present, or at least one specific peak selected from the group consisting of the first peak, the second peak, the third peak, and the fourth peak was present, and an intensity ratio of the at least one specific peak, which was calculated according to the following intensity measuring method, was 2.0 or less.

In addition, in Examples 1 to 5, the lithium compound obtained by subjecting the $Li_2B_4O_7$ (247) powder (manufactured of RARE METALLIC Co., Ltd.) to the ball milling treatment satisfied the requirement W.

In addition, in Examples 1 to 5, the lithium compound obtained by subjecting the $Li_2B_4O_7$ (247) powder (manufactured of RARE METALLIC Co., Ltd.) to the ball milling treatment satisfied the requirement V. More specifically, in Examples 1 to 5, in the X-ray diffraction pattern of the lithium compound obtained by subjecting the $Li_2B_4O_7$ (247) powder (manufactured by RARE METALLIC Co., Ltd.) to the ball milling treatment, where the X-ray diffraction pattern had been obtained from the X-ray diffraction measurement using a CuKα ray, none of the first peak to the fourth peak, which are defined in the requirement S3, were present, or at least one specific peak selected from the group consisting of the first peak, the second peak, the third peak, and the fourth peak was present, and an intensity ratio of the at least one specific peak, which was calculated according to the following intensity measuring method, was 2.0 or less.

In addition, in Examples 1 to 5, the lithium compound obtained by subjecting the $Li_2B_4O_7$ (247) powder (manufactured of RARE METALLIC Co., Ltd.) to the ball milling treatment satisfied the requirement T2. More specifically, in Examples 1 to 5, none of the first peak to the third peak, which are defined in the requirement T2, were present in the Raman spectrum of the lithium compound obtained by subjecting the $Li_2B_4O_7$ (247) powder (manufactured of RARE METALLIC Co., Ltd.) to the ball milling treatment.

[Table 1]

|  | Element analysis | | | | | |
|---|---|---|---|---|---|---|
|  | Li | B | O | F | S | N |
| Example 1 | 1.00 | 2.06 | 5.49 | 0.01 | 0.01 | 0.006 |
| Example 2 | 1.00 | 1.96 | 5.44 | 0.03 | 0.03 | 0.01 |
| Reference Example 1 | 1.00 | 2.06 | 3.51 | - | - | - |
| Comparative Example 1 | 1.00 | 2.04 | 3.47 | - | - | - |

[Table 2]

|  | Element analysis | | | | | | |
|---|---|---|---|---|---|---|---|
|  | Li | B | O | F | S | N | C |
| Example 1 | 1.94 | 4.00 | 10.66 | 0.03 | 0.02 | 0.01 | - |
| Example 2 | 2.04 | 4.00 | 11.09 | 0.06 | 0.05 | 0.02 | - |
| Example 3 | 2.69 | 4.00 | 22.01 | 1.16 | 1.23 | 0.62 | - |
| Example 4 | 2.50 | 4.00 | 21.13 | 0.92 | 0.97 | 0.49 | - |
| Example 5 | 2.90 | 4.00 | 21.45 | 5.00 | 1.90 | 0.95 | 1.90 |
| Reference Example 1 | 1.94 | 4.00 | 6.80 | - | - | - | - |
| Comparative Example 1 | 1.96 | 4.00 | 6.80 | - | - | - | - |

[Table 3]

| | Proportion of full width at half maximum (%) | Ratio of area intensity | | Maximum absorption intensity ratio | | Maximum absorption intensity ratio (in $N_2$ atmosphere and 90°C heating) | Coefficient of determination | Requirement T | Mass reduction rate (%) | Short-distance G(r) | Long-distance G(r) | X-ray diffraction measurement | Ion conductivity | |
|---|---|---|---|---|---|---|---|---|---|---|---|---|---|---|
| | | Numerical value (%) | Range | Numerical value | Range | | | | | | | | 27°C (S/cm) | 60°C (S/cm) |
| Example 1 | 33 | 4 | B | 0.72 | A | - | 0.9974 | A | 29.8 | A | - | A | $1.5 \times 10^{-4}$ | $4.0 \times 10^{-4}$ |
| Example 2 | - | 15 | A | 0.64 | A | - | 0.9908 | A | 30 | A | - | A | $1.1 \times 10^{-3}$ | $4.0 \times 10^{-3}$ |
| Example 3 | - | 30 | A | 0.48 | A | 0.37 | - | A | - | A | - | A | $4.8 \times 10^{-3}$ | - |
| Example 4 | - | - | A | - | A | - | - | A | - | A | - | A | $4.0 \times 10^{-3}$ | - |
| Example 5 | - | - | B | - | A | - | - | A | - | - | - | A | $7.4 \times 10^{-4}$ | - |
| Reference Example 1 | 46 | 0 | C | 0.08 | B | - | 0.9677 | A | - | A | A | A | $7.5 \times 10^{-9}$ | $7.5 \times 10^{-8}$ |
| Comparative Example 1 | 100 | 0 | c | 0.03 | B | - | 0.1660 | B | 0.2 | A | B | B | Undetectable | Undetectable |

As shown in the above table, the lithium-based solid electrolyte according to the embodiment of the present invention exhibited a desired effect. In particular, it was confirmed that the ion conductivity is about $10^{-5}$ S·cm$^{-1}$ in the invention disclosed in JP2018-052755A, whereas the ion conductivity is more excellent in the present invention.

As shown in Table 2, it was confirmed that the Li content is higher in Example 3.

The cause of the increase in the Li content is presumed to be that in Example 3, the method (the method 3 in the step 2B described above) of mixing an aqueous solution containing a lithium compound subjected to a mechanical milling treatment with an aqueous solution containing a lithium salt is carried out, and according to this method, the amount of Li incorporated into the lithium-based solid electrolyte has increased since the mixing amount of Li$(FSO_2)_2$N (LiFSI) can be increased. In addition, it was confirmed that the ion conductivity is also further improved in Example 3. The reason why the ion conductivity is improved is presumed to be that the Li compositional ratio (content proportion) is increased, and thus Li having high mobility is included in the increased Li, whereby Li having high mobility is increased as a whole.

In addition, as shown in the column of "Maximum absorption intensity ratio" and the column of "Maximum absorption intensity ratio (in N$_2$ atmosphere and 90°C heating)" of Table 3, in Example 3, a ratio of a maximum absorption intensity in a wave number range of 3,000 to 3,500 cm$^{-1}$ to a maximum absorption intensity in a wave number range of 800 to 1,600 cm$^{-1}$ has been decreased due to the heating treatment. This is presumed to be because the free water contained in the lithium-based solid electrolyte has volatilized.

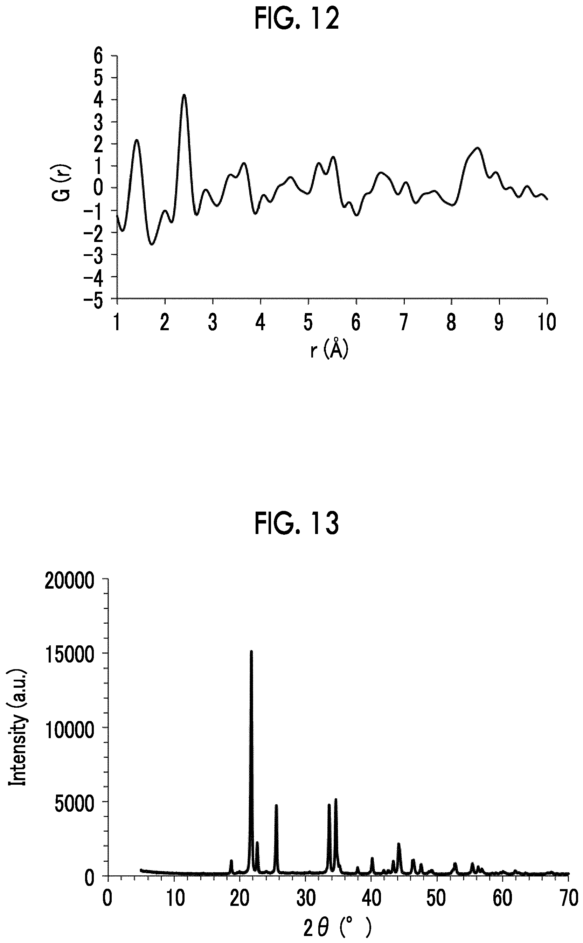

In the reduced two-body distribution function G(r) of the crystal powder of Comparative Example 1 obtained from the X-ray total scattering measurement, a first peak (corresponding to the B-O proximity) of which a peak top is located at 1.40 Å and a second peak (corresponding to the B-B proximity) of which a peak top is located at 2.40 Å were present, and G(r) of the peak top of the first peak and G(r) of the peak top of the second peak was 1.0 or more (see Fig. 12). In addition, other peaks of which peak tops are located at 3.65 Å, 5.22 Å, 5.51 Å, and 8.54 Å, were present, and G(r) of the peak top of each of the peaks was 1.0 or more (see Fig. 12).

On the other hand, in the reduced two-body distribution function G(r) of the lithium compound of Reference Example obtained from an X-ray total scattering measurement, a first peak (corresponding to the B-O proximity) of which a peak top is located at 1.40 Å and a second peak (corresponding to the B-B proximity) of which a peak top is located at 2.40 Å were present, and G(r) of the peak top of the first peak and G(r) of the peak top of the second peak was 1.0 or more. On the other hand, the absolute value of G(r) was less than 1.0 in a range where r was more than 5 Å and 10 Å or less.

From these results, it was confirmed that the peak of the long-distance ordered structure is reduced in a range where r was more than 5 Å and 10 Å or less due to the mechanical milling treatment. On the other hand, the peaks attributed to the interatomic distance of B-O and the interatomic distance of B-B, which are observed in the general lithium tetraborate crystal, were maintained even after the mechanical milling treatment. From this result, it is conceived that in the mechanical milling treatment, a structure (diborate structure), in which a BO$_4$ tetrahedron and a BO$_3$ triangle are present at a ratio of 1: 1, is maintained, where the structure (diborate structure) is included in the general lithium tetraborate crystal.

Fig. 13 is a graph showing an X-ray diffraction pattern of the crystal powder of Comparative Example 1. As shown in Fig. 13, in Comparative Example 1, the above-described requirement Y was not satisfied, and a plurality of peaks having a small width were observed. More specifically, the strongest peak corresponding to the (1,1,2) plane was observed at a position of 21.78° in terms of the 2θ value. Other major diffraction peaks observed were a peak corresponding to the (2,0,2) plane at a position of 25.54°, a peak corresponding to the (2,1,3) plane at a position of 33.58°, and a peak corresponding to the (3,1,2) plane at a position of 34.62°, and the intensities of these three peaks were substantially the same. These peaks are derived from the crystalline component.

On the other hand, Fig. 14 shows an X-ray diffraction pattern of a lithium-based solid electrolyte of Example 3. As shown in Fig. 14, in Example 3, the requirement was satisfied even in a case where the intensity ratio of 5.0 defined in the requirement Y described above was set to 2.0. In Fig. 13, it can be seen that the existing crystalline component is non-crystalized due to the mechanical milling treatment, and the sharp peak derived from the lithium tetraborate crystal disappears and becomes broadened.

<Evaluation (part 2)>

A compacted powder body (pellet) (10 mmφ, 0.9 mmt) of the lithium-based solid electrolyte obtained in Example 3 was subjected to vacuum drying at 27°C under a restraint of 60 MPa, and the pressure change and the ion conductivity with respect to the vacuum drying time were evaluated.

It is noted that the production method for a compacted powder body and the evaluation of ion conductivity were carried out and evaluated in the same manners, respectively, except that the In electrode described in (Measurement of ion conductivity) of <Various evaluations (part 1)> described above was changed to a Ti electrode. The results are shown in Table 4.

[Table 4]

| Vacuum drying time (minute) | Pressure (Pa) | Ion conductivity (27°C) (S/cm) |
|---|---|---|
| 0 | 101325 | $4.8 \times 10^{-3}$ |
| 5 | 200 | $3.8 \times 10^{-3}$ |
| 20 | 20 | $3.3 \times 10^{-3}$ |
| 50 | 10 | $2.6 \times 10^{-3}$ |
| 1080 | 15 | $5.7 \times 10^{-4}$ |

In the lithium-based solid electrolyte of Example 3, it is conceived that the OH stretching peak at 3,000 to 3,500 $cm^{-1}$ increases in the infrared absorption spectrum, and thus a large number of OH groups and water are present. In addition, regarding the water, it is presumed that there is free water or water in a state different from that of the free water.

In the above evaluation, in order to confirm the presence of a substance having good ion conductivity in addition to the free water, the pellet was first dried under the conditions in which the free water was conceived to volatilize by vacuum drying, the pellet was further dried under the condition in which the intensity was increased, and the ion conductivity at each stage was evaluated.

As shown in Table 4, it was found that although free water is conceived to be in a vaporized state since the pressure is 200 Pa in a drying time of 5 minutes, the ion conductivity is $3.8 \times 10^{-3}$ S/cm, and the ion conductivity is $5.7 \times 10^{-4}$ S/cm even for a drying time of 1,080 minutes and at a pressure of 15 Pa, and thus it was confirmed that a substance having good ion conductivity is present in addition to the free water. Although this substance is not revealed, it is presumed to be water in a state different from that of the free water.

In addition, although the phenomenon that occurs in the drying process is not revealed, as shown in Table 4, the pressure is 10 Pa in a drying time of 50 minutes, and thus it is presumed that water in a state different from that of the free water remains under these conditions, and this water is gradually eliminated. Further, the pressure is 15 Pa in a drying time of 1,080 minutes, and thus it is presumed that two kinds of water in a state different from that of the free water are present, and water having a property of being more difficult to volatilize remains.

From the above results, from the viewpoint that excellent ion conductivity is exhibited even after a long drying time, it was suggested that water having good ion conductivity in a state different from that of the free water is present in the lithium-based solid electrolyte.

<Example 6>

Using a ball mill (P-7 manufactured by FRITSCH), a $Li_2B_4O_7$ (247) powder (manufactured by RARE METALLIC Co., Ltd.) was subjected to ball milling to obtain a lithium compound under the following conditions, pot: made of stabilized zirconia (YSZ) (45 ml), pulverization ball: made of stabilized zirconia (YSZ) (average particle diameter: 5 mm, weight: 70 g), rotation speed: 530 revolutions per minute (rpm), LBO powder (a powdery $Li_2B_4O_7$ crystal (manufactured by RARE METALLIC Co., Ltd.) amount: 4.2 g, atmosphere: atmospheric air, and treatment time of ball milling: 100 hours. The obtained lithium compound was added to water at a powder concentration of 42% by mass, and the resultant mixture was subjected to ultrasonic dispersion for 60 minutes to obtain a solution 7.

Next, 7.12 g of $Li(F_3CSO_2)_2N$ (LiTFSI) was added to water at a powder concentration of 87% by mass, and the resultant mixture was subjected to ultrasonic dispersion for 60 minutes to obtain a solution 8.

The obtained solution 7 and solution 8 were mixed, followed by mixing and stirring with a magnetic stirrer for 60 minutes. Subsequently, using a lithium-based solid electrolyte obtained by subjecting the obtained dispersion liquid to vacuum drying at 40°C and 10 Pa for 15 hours, various evaluations were carried out in the atmospheric air in the same manner as in Example 1.

<Example 7>

A lithium-based solid electrolyte was obtained by the same method as in Example 6, except that the contents of water and $Li(F_3CSO_2)_2N$ (LiTFSI) in the obtained lithium-based solid electrolyte were changed to be the amounts described in the table described later, and then various evaluations were carried out in the atmospheric air in the same manner as in Example 1.

<Examples 8 to 13>

A lithium-based solid electrolyte was obtained by the same method as in Example 6, except that $Li(F_3CSO_2)_2N$ (LiTFSI) was changed to $Li(FSO_2)_2N$ (LiFSI) and the contents of water and $Li(FSO_2)_2N$ (LiFSI) in the obtained lithium-based solid electrolyte were changed to be the amounts described in the table described later, and then various evaluations were carried out in the atmospheric air in the same manner as in Example 1.

In Table 5, the column of "BM-LBO247", the column of "Li salt", and the column "Water" indicate relative molar ratios of the respective components in the powders obtained in Examples and Reference Examples. Specifically, "BM-LBO247" indicates the $Li_2B_4O_7$ subjected to a ball milling treatment, "Li salt" indicate the lithium salts ($Li(F_3CSO_2)_2N$ (LiTFSI) and $Li(FSO_2)_2N$ (LiFSI)) used in respective Examples, and in the table, the relative molar ratio of each component is indicated in a case where the molar amount of BM-LBO247 is set to 1. For example, in the powder obtained in Example 6, the molar ratio of the Li salt to BM-LBO247 is 1, and the molar ratio of the water to BM-LBO247 is 12.

It is noted that the molar ratio was calculated by the following method.

Regarding the analysis of each of elements in the obtained powder, quantitative analysis was carried out by ICP-OES for lithium and boron or by combustion ion chromatography (combustion IC) for fluorine and sulfur, estimation was carried out for N from the analytical mass of sulfur in consideration of the amount of each of atoms in the Li salt, the analytical masses of elements other than O were added together for O, and calculation was carried out in terms of the difference from the total amount of the powder. It is noted that in Examples 6 and 7, the amount of carbon was estimated from the analytical mass of sulfur in consideration of the amount of each of atoms in the Li salt.

The molar ratio of BM-LBO247 to the Li salt in the powder was calculated from a molar ratio of an element (for example, B) present only in BM-LBO247 and a molar ratio of an element (for example, a specific element) present only in the Li salt. In addition, the molar ratio of O contained in BM-LBO247 and the Li salt was subtracted from the molar ratio of O in the powder to calculate the molar amount of O derived from water, and the molar ratio of BM-LBO247 to water was calculated using the obtained molar amount of O derived from water and the molar amount of BM-LBO247.

It is noted that in Examples 6 to 13, all of the lithium compounds obtained by subjecting the $Li_2B_4O_7$ (247) powder (manufactured by RARE METALLIC Co., Ltd.) to the ball milling treatment satisfied the requirements S 1 to S3 described above.

More specifically, in Examples 6 to 13, none of the first peak to the third peak, which are defined in the requirement S2, were present in the Raman spectrum of the lithium compound obtained by subjecting the $Li_2B_4O_7$ (247) powder (manufactured of RARE METALLIC Co., Ltd.) to the ball milling treatment.

In addition, in Examples 6 to 13, in the X-ray diffraction pattern of the lithium compound obtained by subjecting the $Li_2B_4O_7$ (247) powder (manufactured by RARE METALLIC Co., Ltd.) to the ball milling treatment, where the X-ray diffraction pattern had been obtained from the X-ray diffraction measurement using a $CuK\alpha$ ray, none of the first peak to the fourth peak, which are defined in the requirement S3, were present, or at least one specific peak selected from the group consisting of the first peak, the second peak, the third peak, and the fourth peak was present, and an intensity ratio of the at least one specific peak, which was calculated according to the following intensity measuring method, was 2.0 or less.

In addition, in Examples 6 to 13, the lithium compound obtained by subjecting the $Li_2B_4O_7$ (247) powder (manufactured of RARE METALLIC Co., Ltd.) to the ball milling treatment satisfied the requirement W.

In addition, in Examples 6 to 13, the lithium compound obtained by subjecting the $Li_2B_4O_7$ (247) powder (manufactured of RARE METALLIC Co., Ltd.) to the ball milling treatment satisfied the requirement V. More specifically, in Examples 6 to 13, in the X-ray diffraction pattern of the lithium compound obtained by subjecting the $Li_2B_4O_7$ (247) powder (manufactured by RARE METALLIC Co., Ltd.) to the ball milling treatment, where the X-ray diffraction pattern had been obtained from the X-ray diffraction measurement using a $CuK\alpha$ ray, none of the first peak to the fourth peak, which are defined in the requirement S3, were present, or at least one specific peak selected from the group consisting of the first peak, the second peak, the third peak, and the fourth peak was present, and an intensity ratio of the at least one specific peak, which was calculated according to the following intensity measuring method, was 2.0 or less.

In addition, in Examples 6 to 13, the lithium compound obtained by subjecting the $Li_2B_4O_7$ (247) powder (manufactured of RARE METALLIC Co., Ltd.) to the ball milling treatment satisfied the requirement T2. More specifically, in Examples 6 to 13, none of the first peak to the third peak, which are defined in the requirement T2, were present in the Raman spectrum of the lithium compound obtained by subjecting the $Li_2B_4O_7$ (247) powder (manufactured of RARE METALLIC Co., Ltd.) to the ball milling treatment.

It is noted that in the Raman spectrum of the lithium-based solid electrolyte of each of Examples 6 to 13, none of the first peak to the third peak, which are defined in the requirement, T were present.

[Table 5]

|  | BM-LBO247 | Li salt | Water |
|---|---|---|---|
| Reference Example 1 | 1 | 0 | 0 |
| Example 6 | 1 | 1 | 11 |
| Example 7 | 1 | 1.2 | 11 |
| Example 8 | 1 | 0.01 | 4 |
| Example 9 | 1 | 0.03 | 4 |
| Example 10 | 1 | 0.3 | 10 |
| Example 11 | 1 | 0.5 | 12 |
| Example 12 | 1 | 0.6 | 12 |
| Example 13 | 1 | 0.7 | 12 |

[Table 6]

| | Proportion of full width at half maximum (%) | Proportion of area intensity | | Maximum absorption intensity ratio | | Maximum absorption intensity ratio (in N$_2$ atmosphere and 90°C heating) | Coefficient of determination | Requirement T | Mass reduction rate (%) | Short-distance G(r) | Long-distance G(r) | X-ray diffraction measurement | Ion conductivity | |
|---|---|---|---|---|---|---|---|---|---|---|---|---|---|---|
| | | Numerical value (%) | Range | Numerical value | Range | | | | | | | | 27°C (S/cm) | 60°C (S/cm) |
| Reference Example 1 | 46 | 0 | C | 0.08 | B | - | 0.9677 | A | - | A | A | A | $7.5 \times 10^{-9}$ | $7.5 \times 10^{-8}$ |
| Example 6 | - | - | B | - | A | - | - | A | - | - | - | A | $7.4 \times 10^{-4}$ | - |
| Example 7 | - | - | B | - | A | - | - | A | - | - | - | A | $7.2 \times 10^{-4}$ | - |
| Example 8 | 33 | 4 | B | 0.72 | A | - | 0.9974 | A | 29.8 | A | - | A | $1.5 \times 10^{-4}$ | $4.0 \times 10^{-4}$ |
| Example 9 | - | 15 | A | 0.64 | A | - | 0.9908 | A | 30 | A | - | A | $1.1 \times 10^{-3}$ | $4.0 \times 10^{-3}$ |
| Example 10 | - | - | A | - | A | - | - | A | - | A | - | A | $2.5 \times 10^{-3}$ | - |
| Example 11 | - | - | A | - | A | - | - | A | - | A | - | A | $4.0 \times 10^{-3}$ | - |
| Example 12 | - | 30 | A | 0.48 | A | 0.37 | - | A | - | A | - | A | $4.8 \times 10^{-3}$ | - |
| Example 13 | - | - | A | - | A | - | - | A | - | - | - | A | $4.2 \times 10^{-3}$ | - |

As shown in the above table, the lithium-based solid electrolyte according to the embodiment of the present invention exhibited a desired effect.

In addition, a lithium-based solid electrolyte was prepared according to the same procedure as in Example 3, except that LiBsOs was used instead of the $Li_2B_4O_7$ (247) powder used in Example 3.

It is noted that as a result of subjecting the lithium-based solid electrolytes obtained by using respectively LiBsOs subjected to a ball milling treatment and LiBsOs, instead of the $Li_2B_4O_7$ (247) powder, to an X-ray total scattering measurement, it was confirmed that they each satisfy the requirement X2 and the requirements X5.

In addition, a lithium-based solid electrolyte was prepared according to the same procedure as in Example 3, except that LisBnOis was used instead of the $Li_2B_4O_7$ (247) powder used in Example 3.

It is noted that as a result of subjecting the lithium-based solid electrolytes obtained by using respectively LisBnOis subjected to a ball milling treatment and $Li_3B_{11}O_{18}$, instead of the $Li_2B_4O_7$ (247) powder, to an X-ray total scattering measurement, it was confirmed that they each satisfy the requirement X3 and the requirements X5.

In addition, a lithium-based solid electrolyte was prepared according to the same procedure as in Example 3, except that $Li_3B_7O_{12}$ was used instead of the $Li_2B_4O_7$ (247) powder used in Example 3.

It is noted that as a result of subjecting the lithium-based solid electrolytes obtained by using respectively $Li_3B_7O_{12}$ subjected to a ball milling treatment and $Li_3B_7O_{12}$, instead of the $Li_2B_4O_7$ (247) powder, to an X-ray total scattering measurement, it was confirmed that they each satisfy the requirement X4 and the requirements X5.

It is noted that the lithium-based solid electrolytes, which had been obtained by using respectively $LiB_3O_5$ subjected to a ball milling treatment and $LiB_3O_5$, each satisfied the above-described requirement Y2 and requirement Y5 in an X-ray diffraction pattern obtained from an X-ray diffraction measurement using a CuK$\alpha$ ray.

More specifically, in X-ray diffraction patterns of the above-described lithium-based solid electrolytes obtained by using respectively $LiB_3O_5$ subjected to a ball milling treatment and $LiB_3O_5$, none of the first peak to the fourth peak, which are defined in the requirement Y2 and the requirement Y5, were present, or at least one specific peak selected from the group consisting of the first peak, the second peak, the third peak, and the fourth peak was present, and an intensity ratio of the at least one specific peak, which was calculated according to the following intensity measuring method, was 2.0 or less.

The lithium-based solid electrolytes, which had been obtained by using respectively $Li_3B_{11}O_{18}$ subjected to a ball milling treatment and $Li_3B_{11}O_{18}$, each satisfied the above-described requirement Y3 and requirement Y6 in an X-ray diffraction pattern obtained from an X-ray diffraction measurement using a CuK$\alpha$ ray.

More specifically, in X-ray diffraction patterns of the above-described lithium-based solid electrolytes obtained by using respectively $Li_3B_{11}O_{18}$ subjected to a ball milling treatment and $Li_3B_{11}O_{18}$, none of the first peak to the fourth peak, which are defined in the requirement Y3 and the requirement Y6, were present, or at least one specific peak selected from the group consisting of the first peak, the second peak, the third peak, and the fourth peak was present, and an intensity ratio of the at least one specific peak, which was calculated according to the following intensity measuring method, was 2.0 or less.

The lithium-based solid electrolytes, which had been obtained by using respectively $Li_3B_7O_{12}$ subjected to a ball milling treatment and $Li_3B_7O_{12}$, each satisfied the above-described requirement Y4 and requirement Y7 in an X-ray diffraction pattern obtained from an X-ray diffraction measurement using a CuK$\alpha$ ray.

More specifically, in X-ray diffraction patterns of the above-described lithium-based solid electrolytes obtained by using respectively $Li_3B_7O_{12}$ subjected to a ball milling treatment and $Li_3B_7O_{12}$, none of the first peak to the fourth peak, which are defined in the requirement Y4 and the requirement Y7, were present, or at least one specific peak selected from the group consisting of the first peak, the second peak, the third peak, and the fourth peak was present, and an intensity ratio of the at least one specific peak, which was calculated according to the following intensity measuring method, was 2.0 or less.

Explanation of References

    1: negative electrode collector
    2: negative electrode active material layer
    3: solid electrolyte layer
    4: positive electrode active material layer
    5: positive electrode collector
    6: operation portion
    10: all-solid state lithium ion secondary battery

**Claims**

1. A lithium-based solid electrolyte comprising:

   lithium tetraborate in a noncrystalline state;
   water; and
   a lithium salt.

2. A lithium-based solid electrolyte comprising:

   lithium tetraborate subjected to a mechanical milling treatment;
   water; and
   a lithium salt.

3. The lithium-based solid electrolyte according to claim 1,

   wherein a molar ratio of the lithium salt to the lithium tetraborate is 0.001 to 1.5, and
   a molar ratio of the water to the lithium tetraborate is 3 to 15.

4. The lithium-based solid electrolyte according to claim 2,

   wherein a molar ratio of the lithium salt to the lithium tetraborate is 0.001 to 1.5, and
   a molar ratio of the water to the lithium tetraborate is 3 to 15.

5. A lithium-based solid electrolyte comprising:

   LiBsOs, $Li_3B_{11}O_{18}$, or $Li_3B_7O_{12}$, in a noncrystalline state;
   water; and
   a lithium salt.

6. The lithium-based solid electrolyte according to any one of claims 1 to 5,

   wherein the lithium salt is a compound represented by Formula (1),

   $$\text{Formula (1)} \qquad LiN(R_{f1}SO_2)(R_{f2}SO_2)$$

   here, $R_{f1}$ and $R_{f2}$ each independently represent a fluorine atom or a perfluoroalkyl group.

7. A lithium-based solid electrolyte,

   wherein the lithium-based solid electrolyte contains Li, B, and O,
   the lithium-based solid electrolyte further contains two or more specific elements selected from the group consisting of F, Cl, Br, I, S, P, Si, Se, Te, C, Sb, As, Sc, Y, Zr, Ti, Hf, H, and N,
   a molar ratio of B to Li is more than 1.50 and less than 2.43,
   a molar ratio of O to Li is more than 2.34 and less than 6.86, and
   a molar ratio of each of the specific elements to Li is more than 0.001 and less than 0.17.

8. A lithium-based solid electrolyte,

   wherein the lithium-based solid electrolyte contains Li, B, and O,
   the lithium-based solid electrolyte further contains two or more specific elements selected from the group consisting of a Group 4 element of the periodic table, a Group 15 element of the periodic table, a Group 16 element of the periodic table, a Group 17 element of the periodic table, Si, C, Sc, Y, and H, and
   in a case where molar amounts of Li, O, and the specific elements are denoted by setting a molar amount of B in the lithium-based solid electrolyte to 4.00, the molar amount of Li is 1.58 to 3.49, the molar amount of O is 6.23 to 25.00, and the molar amount of each of the specific elements is 0.001 to 10.00.

9. The lithium-based solid electrolyte according to any one of claims 1 to 8,

wherein in an infrared absorption spectrum, a ratio of a maximum absorption intensity in a wave number range of 3,000 to 3,500 $cm^{-1}$ to a maximum absorption intensity in a wave number range of 800 to 1,600 $cm^{-1}$ is 1/5 or more.

10. A lithium-based solid electrolyte,

wherein the lithium-based solid electrolyte contains Li, B, and O, and satisfies requirements X to Z,
the requirement X: in a reduced two-body distribution function G(r) of the lithium-based solid electrolyte obtained from an X-ray total scattering measurement, a first peak of which a peak top is located in a range where r is 1.43 ± 0.2 Å and a second peak of which a peak top is located in a range where r is 2.40 ± 0.2 Å are present, and G(r) of the peak top of the first peak indicates more than 1.0, and G(r) of the peak top of the second peak indicates 0.8 or more,
the requirement Y: in an X-ray diffraction pattern of the lithium-based solid electrolyte obtained from an X-ray diffraction measurement using a CuKα ray, in a case where none of a first peak of which a peak top is located in a range of 21.6° to 22.0° and a full width at half maximum is 0.65° or less, a second peak of which a peak top is located in a range of 25.4° to 25.8° and a full width at half maximum is 0.65° or less, a third peak of which a peak top is located in a range of 33.4° to 33.8° and a full width at half maximum is 0.65° or less, and a fourth peak of which a peak top is located in a range of 34.4° to 34.8° and a full width at half maximum is 0.65° or less are present, or in a case where at least one specific peak selected from the group consisting of the first peak, the second peak, the third peak, and the fourth peak is present in the X-ray diffraction pattern, an intensity ratio of at least the one of the specific peak, which is calculated according to the following intensity measuring method, is 5.0 or less,
the intensity measuring method: an average intensity 1 in a range of +0.45° to +0.55° from a diffraction angle 2θ of the peak top of the specific peak is calculated, an average intensity 2 in a range of -0.55° to -0.45° from the diffraction angle 2θ of the peak top of the specific peak is calculated, an arithmetic mean value of the average intensity 1 and the average intensity 2 is calculated, and a ratio of a peak intensity at the peak top of the specific peak to the arithmetic mean value is defined as the intensity ratio, and
the requirement Z: in an infrared absorption spectrum of the lithium-based solid electrolyte, a ratio of a maximum absorption intensity in a wave number range of 3,000 to 3,500 $cm^{-1}$ to a maximum absorption intensity in a wave number range of 800 to 1,600 $cm^{-1}$ is 1/5 or more.

11. The lithium-based solid electrolyte according to claim 10,
wherein the lithium-based solid electrolyte further contains two or more specific elements selected from the group consisting of F, Cl, Br, I, S, P, Si, Se, Te, C, Sb, As, Sc, Y, Zr, Ti, Hf, H, and N.

12. The lithium-based solid electrolyte according to any one of claims 1 to 11,
wherein a proportion of a full width at half maximum of a peak in which a chemical shift appears in a range of -100 to +100 ppm in a spectrum obtained in a case where a solid $^7$Li-NMR measurement is carried out at 120°C is 50% or less with respect to a full width at half maximum of a peak in which a chemical shift appears in a range of -100 to +100 ppm in a spectrum obtained in a case where the solid $^7$Li-NMR measurement is carried out at 20°C.

13. The lithium-based solid electrolyte according to any one of claims 1 to 12,
wherein in a spectrum obtained by carrying out a solid $^7$Li-NMR measurement at 20°C, in a case where a first peak appearing in a range of -100 to +100 ppm is subjected to waveform separation, the lithium-based solid electrolyte has a second peak having a full width at half maximum of 5 ppm or less in a range where a chemical shift is -3 to 3 ppm, and a ratio of an area intensity of the second peak to an area intensity of the first peak is 0.5% or more.

14. The lithium-based solid electrolyte according to claim 7,
wherein a coefficient of determination is 0.9400 or more, where the coefficient of determination is obtained by carrying out a linear regression analysis according to a least squares method in a wave number range of 600 to 850 $cm^{-1}$ in a Raman spectrum.

15. The lithium-based solid electrolyte according to claim 7,
wherein in a case where the lithium-based solid electrolyte is heated to 800°C, a mass reduction rate is 20% to 40% by mass.

16. An inorganic solid electrolyte having a conductivity of an ion of an element selected from a metal element belonging to a Group 1 element of the periodic table or a Group 2 element of the periodic table,

wherein the inorganic solid electrolyte contains an element selected from the group consisting of a metal element belonging to a Group 1 element of the periodic table and a Group 2 element of the periodic table, B, and O, the inorganic solid electrolyte further contains two or more specific elements selected from the group consisting of a Group 3 element of the periodic table, a Group 4 element of the periodic table, a Group 13 element of the periodic table, a Group 14 element of the periodic table, a Group 15 element of the periodic table, a Group 16 element of the periodic table, a Group 17 element of the periodic table, and H, and

the inorganic solid electrolyte is noncrystalline and satisfies a requirement R,

the requirement R: in an infrared absorption spectrum of the inorganic solid electrolyte, a ratio of a maximum absorption intensity in a wave number range of 3,000 to 3,500 $cm^{-1}$ to a maximum absorption intensity in a wave number range of 800 to 1,600 $cm^{-1}$ is 1/5 or more.

17. An inorganic solid electrolyte comprising:

a compound containing an element selected from the group consisting of a metal element belonging to a Group 1 element of the periodic table and a Group 2 element of the periodic table, B, and O;
water; and
a salt containing an element selected from the group consisting of a metal element belonging to a Group 1 element of the periodic table and a Group 2 element of the periodic table.

18. The inorganic solid electrolyte according to claim 17,
wherein the compound is noncrystalline.

19. A production method for the lithium-based solid electrolyte according to any one of claims 1 to 15, the production method comprising:

a step 1 of subjecting a lithium-based oxide containing Li and B to a mechanical milling treatment;
a step 2 of mixing a product obtained in the step 1 with water; and
a step 3 of removing water from a dispersion liquid obtained in the step 2 to obtain a lithium-based solid electrolyte, wherein the production method satisfies any one of the following requirements 1 to 3,
the requirement 1: the mechanical milling treatment of the step 1 is carried out in a presence of a specific element source containing two or more kinds of elements selected from the group consisting of F, Cl, Br, I, S, P, Si, Se, Te, C, Sb, As, Sc, Y, Zr, Ti, Hf, H, and N,
the requirement 2: in the step 2, the product, water, and the specific element source are mixed, and
the requirement 3: in the step 3, a product obtained by removing water from the dispersion liquid obtained in the step 2 is mixed with the specific element source to obtain the lithium-based solid electrolyte.

20. The production method for a lithium-based solid electrolyte according to claim 19,

wherein the production method satisfies the requirement 1, and
the production method further includes, before the step 1, a step 0 of subjecting the lithium-based oxide containing Li and B to a mechanical milling treatment in an environment in which the specific element source is not present.

21. A modified positive electrode active material comprising:

a positive electrode active material; and
a coating layer disposed on the positive electrode active material,
wherein the coating layer contains the lithium-based solid electrolyte according to any one of claims 1 to 15 or the inorganic solid electrolyte according to any one of claims 16 to 18.

22. A modified negative electrode active material comprising:

a negative electrode active material; and
a coating layer disposed on the negative electrode active material,
wherein the coating layer contains the lithium-based solid electrolyte according to any one of claims 1 to 15 or the inorganic solid electrolyte according to any one of claims 16 to 18.

23. An all-solid state secondary battery comprising, in the following order:

a positive electrode active material layer;

a solid electrolyte layer; and

a negative electrode active material layer,

wherein at least one of the positive electrode active material layer, the solid electrolyte layer, or the negative electrode active material layer contains the lithium-based solid electrolyte according to any one of claims 1 to 15 or the inorganic solid electrolyte according to any one of claims 16 to 18.

24. An electrode sheet for an all-solid state secondary battery, comprising the lithium-based solid electrolyte according to any one of claims 1 to 15 or the inorganic solid electrolyte according to any one of claims 16 to 18.

25. A solid electrolyte sheet comprising the lithium-based solid electrolyte according to any one of claims 1 to 15 or the inorganic solid electrolyte according to any one of claims 16 to 18.

26. An electrode for an all-solid state secondary battery, comprising:

an active material layer containing an active material, and the lithium-based solid electrolyte according to any one of claims 1 to 15 or the inorganic solid electrolyte according to any one of claims 16 to 18; and

a collector.

## FIG. 1

100    50    0    -50    -100

100    50    0    -50    -100

## FIG. 2

100    50    0    -50    -100

100    50    0    -50    -100

## FIG. 3

100    50    0    -50    -100

FIG. 4

$$100 \quad 50 \quad 0 \quad -50 \quad -100$$

FIG. 5

RAMAN INTENSITY

$$200 \quad 400 \quad 600 \quad 800 \quad 1000$$

RAMAN SHIFT $(cm^{-1})$

## FIG. 6

## FIG. 7

# FIG. 8

# FIG. 9

# FIG. 10

# FIG. 11

## FIG. 12

## FIG. 13

# FIG. 14

# FIG. 15

# FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018052755 A
- JP 62022066 A
- JP S62022066 A
- JP 2006856 A
- JP H2006856 A
- JP 3045473 A
- JP H3045473 A
- JP 5090844 A
- JP H5090844 A
- JP 6004516 A
- JP H6004516 A

**Non-patent literature cited in the description**

- **KOHJIRO KUBO et al.** *Ultrasonics,* 2015, vol. 62, 186-194